# EUROPEAN PATENT SPECIFICATION

(11) **EP 4 294 063 B1**
(45) Date of publication and mention of the grant of the patent: **27.08.2025**
(21) Application number: 22778798.3
(22) Date of filing: 25.03.2022
(51) Int. Cl.: H04W 8/18, H04W 12/43

(54) **COMMUNICATION SYSTEM, FIRST ELECTRONIC DEVICE AND SECOND ELECTRONIC DEVICE**
KOMMUNIKATIONSSYSTEM, ERSTE ELEKTRONISCHE VORRICHTUNG UND ZWEITE ELEKTRONISCHE VORRICHTUNG
SYSTÈME DE COMMUNICATION, PREMIER DISPOSITIF ÉLECTRONIQUE ET SECOND DISPOSITIF ÉLECTRONIQUE

(30) Priority: 31.03.2021 CN 202110352818
(43) Date of publication of application: 20.12.2023
(73) Proprietor: Huawei Technologies Co., Ltd., Shenzhen, Guangdong 518129 (CN)
(72) Inventor: WANG, Zhifeng, Shenzhen, Guangdong 518129 (CN); GONG, Weilin, Shenzhen, Guangdong 518129 (CN); JIA, Yinyuan, Shenzhen, Guangdong 518129 (CN); QIU, Fengguang, Shenzhen, Guangdong 518129 (CN); SHU, Haw-Wei, Shenzhen, Guangdong 518129 (CN)
(74) Representative: MERH-IP Matias Erny Reichl Hoffmann Patentanwälte PartG mbB
(86) International application number: PCT/CN2022/083139
(87) International publication number: WO 2022/206616

(56) References cited:
- WO-A1-2016/048446
- CN-A- 104 955 022
- CN-A- 105 375 942
- CN-A- 106 060 908
- CN-A- 108 924 820
- US-A1- 2016 262 094
- US-A1- 2020 162 601
- US-A1- 2020 359 211

## Description

This application claims priority to Chinese Patent Application No. 202110352818.X, filed with the China National Intellectual Property Administration on March 31, 2021 and entitled "COMMUNICATION SYSTEM, FIRST ELECTRONIC DEVICE, AND SECOND ELECTRONIC DEVICE".

### TECHNICAL FIELD

This application relates to the field of communication technologies, and in particular, to a communication system, a first electronic device, and a second electronic device.

### BACKGROUND

Currently, user equipment (for example, a mobile phone) is connected to a cellular network by using a cellular signal transmitted by a base station, to perform a cellular communication service, for example, to make a call, access the internet, and receive and send an SMS message. However, for the cellular signal transmitted by the base station, due to poor base station distribution, mutual interference between a plurality of base stations, buildings blocking, a far distance from the mobile phone to the base station, or the like, a strength of the cellular signal received by the mobile phone is weak, even the cellular signal cannot be received, affecting the cellular communication service. For example, a problem such as voice choppiness, no sound, video freezing, or even call interruption occurs in a call process. Consequently, user experience is poor.
Document US 2020/359211 A1 relates to a customer premise equipment (CPE) that includes a control circuit, a storage device, and a wireless communication circuit. The storage device stores a virtual subscriber identity module (SIM). When the control circuit enables virtual SIM functionality on the CPE, the wireless communication circuit establishes a wireless communication link with a cellular telephone network via the virtual SIM.
Document US 2016/262094 A1 relates to an accessory device that operates in a first mode, where the first radio of the accessory device is configured to perform cellular communication with a base station, or a second mode, where the second radio of the accessory device is configured to perform short-range communication with a companion device and utilize cellular functionality of the companion device to provide cellular communications through the companion device to the base station. The accessory device operates to selectively transition between the first mode and the second mode based on one or more factors, such as signal strength of the short-range communication between the accessory device and the companion device, the relative batter level of the two devices, and/or a communications status of the companion device.
Document WO 2016/048446 A1 relates to client devices with wireless functionality but without wide area network or cellular network functionality, which obtain network access via a host device that has network access. When the client device of a user is in local range of the host device, the host device enables network bandwidth sharing with settings that specify a threshold of resource usage. An authentication process confirms that either one or both of the client device and the host device are registered for network bandwidth sharing. A server monitors the amount of resources shared by the host device and manages incentives for the user of the host device.

### SUMMARY

The invention is defined by the apended claims.

To achieve the foregoing objective, this application uses the following technical solutions.

According to a first aspect, an embodiment of this application provides a communication system, including a first electronic device and a second electronic device. A first SIM card is installed on the second electronic device, and the first SIM card stores first SIM card information. The first electronic device establishes a connection to the second electronic device; the first electronic device obtains the first SIM card information; and the first electronic device establishes a connection to a network side device based on the first SIM card information, so that the second electronic device enters a relay mode. In the relay mode, the first electronic device assists the second electronic device in performing a cellular communication service related to the first SIM card.

In this embodiment, the first electronic device is also referred to as a relay device, and the second electronic device is also referred to as user equipment. When a cellular signal of the second electronic device is relatively poor, the first electronic device with a relatively good cellular signal may be selected to assist the second electronic device in accessing the network side device. Because the cellular signal of the first electronic device is relatively good, link quality of a communication link between the first electronic device and the network side device is relatively good, which helps improve a packet loss, jitter, and a delay in a cellular communication data transmission process. Therefore, compared with direct communication between the second electronic device and the network side device, communication between the first electronic device and the network side device can improve cellular communication quality.

For example, for a call scenario, a problem such as call choppiness, no sound, video freezing, or even call interruption in a call process of the second electronic device can be improved. For an SMS message service scenario or the like, a sending and receiving rate of an SMS message of the second electronic device can be improved, and a delay of arriving at the second electronic device by the SMS message can be reduced. For an internet access service scenario or the like, a web page refresh rate of the second electronic device can be improved.

In some embodiments, that the first electronic device assists the second electronic device in performing a cellular communication service related to the first SIM card includes: The first electronic device forwards cellular communication data related to the first SIM card between the network side device and the second electronic device, and the second electronic device processes the corresponding cellular communication service based on the cellular communication data.

In some embodiments, that the first electronic device assists the second electronic device in performing a cellular communication service related to the first SIM card includes: The first electronic device exchanges cellular communication data related to the first SIM card with the network side device, and locally processes the corresponding cellular communication service based on the cellular communication data.

The system provided in this embodiment is not limited to a scenario in which cellular signal quality of the second electronic device is poor, and may be further applied to the following scenarios:
(1) For example, the first electronic device is a tablet computer, and the second electronic device is a mobile phone. When a battery level of the mobile phone is low and charging is inconvenient, the mobile phone uses the tablet computer to assist the mobile phone in processing a cellular communication service, to save the battery level of the mobile phone.
(2) When the first electronic device is CPE installed outdoors, and the second electronic device is an indoor router, a first SIM card that is originally to be installed on the CPE may be installed on the router, and the CPE accesses first SIM card information from the router, to access the network side device. In this embodiment, the first SIM card may be transferred from outdoor to indoor, to avoid risks that the SIM card is stolen and is damaged due to sunlight. In addition, compared with detachment and installment of a SIM card of outdoor CPE, detachment and installment of a SIM card of an indoor router are more convenient.
(3) When the first electronic device is CPE, and the second electronic device is a mobile phone, the CPE accesses the network side device based on first SIM card information of the mobile phone, so that a Wi-Fi hotspot is provided in a scenario in which no SIM card is installed on the CPE. This can avoid a user from maintaining one more SIM card.
(4) For example, the first electronic device is a mobile phone 1, and the second electronic device is a mobile phone 2. After leaving the mobile phone 2 at home, a user may obtain first SIM card information of the mobile phone 2 by using the mobile phone 1, access the network side device based on the first SIM card information, and process a cellular communication service corresponding to a first SIM card on the mobile phone 1. This can prevent the user from missing an incoming call of the mobile phone 2.
(5) For example, the first electronic device is a smartwatch, and the second electronic device is a mobile phone. When a user wears the smartwatch to move outdoors and is inconvenient to carry the mobile phone, the user may access first SIM card information of the mobile phone by using the smartwatch, access the network side device based on the first SIM card information, and process a cellular communication service corresponding to a first SIM card on the smartwatch, to avoid missing an incoming call of the mobile phone.
(6) For example, the first electronic device is a mobile phone, and the second electronic device is CPE. The mobile phone may access first SIM card information of the CPE, replace the CPE to perform cellular signal strength detection indoors, and determine a placement location of the CPE.
(7) For example, the first electronic device is a mobile phone, and the second electronic device is CPE. The mobile phone may obtain first SIM card information of the CPE, and use traffic of a first SIM card on the CPE to access the internet. This can save traffic of a local SIM card of the mobile phone.
(8) For example, the first electronic device is a mobile phone that supports up to a 5G technology, and the second electronic device is a mobile phone that supports a 4G technology. When accessing a cellular network by using the first electronic device, the second electronic device may exchange communication data with the network side device by using the 5G technology, to improve a data transmission speed.
(9) For example, the first electronic device is a mobile phone, and the second electronic device is a relay server. A user may also access the network side device based on first SIM card information of the mobile phone by using the relay server.
(10) For example, the first electronic device is a mobile phone 1, and the second electronic device is a mobile phone 2. Two SIM cards (for example, a SIM card 1 and a SIM card 2) are simultaneously installed on the mobile phone 2. When the SIM card 1 of the mobile phone 2 is in a call process, the mobile phone 2 may automatically control the mobile phone 1 to access the network side device based on SIM card 2 information. In this process, if there is an incoming call of the SIM card 2 of the mobile phone 2, the mobile phone 1 may locally process the incoming call, or may notify the mobile phone 2 of the incoming call for processing, to prevent a user from missing an incoming call of the SIM card 2.

In some embodiments, when the second electronic device is in an autonomous mode, if the second electronic device meets a first preset condition, the second electronic device switches from the autonomous mode to the relay mode to access the network side device; and/or when the second electronic device is in the relay mode, if the second electronic device meets a second preset condition, the second electronic device switches from the relay mode to the autonomous mode to access the network side device. In the autonomous mode, the second electronic device establishes a connection to the network side device based on the first SIM card information, directly exchanges the cellular communication data related to the first SIM card with the network side device, and locally processes the corresponding cellular communication service based on the cellular communication data.

The first preset condition is as follows: A cellular signal strength of the second electronic device is less than a strength threshold; and/or a power level of the second electronic device is less than a power level threshold; and/or the second electronic device is located in an abnormal cell; and/or the second electronic device is located at an abnormal location; and/or the second electronic device is connected to a vehicle-mounted Bluetooth device. When the second electronic device meets the first preset condition, the second electronic device switches from the relay mode to the autonomous mode to access the network side device, so that cellular communication quality of the second electronic device can be improved, or power can be saved.

The second preset condition is as follows: Quality of communication between the first electronic device and the second electronic device is lower than a communication quality threshold; and/or a power level of the second electronic device is greater than or equal to a power level threshold; and/or the second electronic device is handed over from an abnormal cell to a normal cell; and/or the second electronic device is switched from an abnormal location to a normal location; and/or the second electronic device is disconnected from a vehicle-mounted Bluetooth device. When the second electronic device meets the first preset condition, the second electronic device switches from the autonomous mode to the relay mode to access the network side device, so that power consumption of the first electronic device can be reduced.

According to the system provided in this embodiment, in a process of processing a cellular communication service, the second electronic device may automatically switch between the relay mode and the autonomous mode based on a preset condition, thereby ensuring cellular communication quality.

In some embodiments, when the second electronic device is in an idle state, the second electronic device controls a local modem Modem, a Modem protocol stack, or an internet protocol multimedia subsystem IMS protocol stack to be powered off, and controls the first electronic device to access the network side device based on the first SIM card information, to switch from the autonomous mode to the relay mode; or the second electronic device is disconnected from the first electronic device, controls a local Modem, a Modem protocol stack, and an IMS protocol stack to be powered on, and accesses the network side device based on the first SIM card information, to switch from the relay mode to the autonomous mode.

In some embodiments, when the second electronic device is in a service state, the second electronic device controls a local Modem, a Modem protocol stack, or an IMS protocol stack to be powered off, and controls the second electronic device to synchronize state information related to a current service in a user plane protocol stack and a control plane protocol stack to the first electronic device, and the first electronic device accesses the network side device based on the first SIM card information and the state information, so that the second electronic device switches from the autonomous mode to the relay mode; or the second electronic device controls a local Modem, a Modem protocol stack, and an IMS protocol stack to be powered on, obtains state information related to a current service in a user plane protocol stack and a control plane protocol stack of the first electronic device, and accesses the network side device based on the first SIM card information and the state information, to switch from the relay mode to the autonomous mode.

In some embodiments, the first electronic device establishes a connection to the second electronic device by using a near field communication technology, a far field communication technology, or a physical entity.

In some embodiments, that the first electronic device establishes a connection to the second electronic device includes: The first electronic device broadcasts a first notification message, where the first notification message is used to notify that the first electronic device has a signal relay function; the second electronic device displays a first prompt box after receiving the first notification message, where the first prompt box includes a device selection control; and the first electronic device establishes a connection to the second electronic device in response to an operation performed by a user on the device selection control.

In some embodiments, that the first electronic device broadcasts a first notification message includes: The first electronic device broadcasts the first notification message when a cellular signal strength of the first electronic device is greater than or equal to the strength threshold.

In some embodiments, that the second electronic device displays a first prompt box after receiving the first notification message includes: When the cellular signal strength of the second electronic device is less than the strength threshold, the second electronic device displays the first prompt box after receiving the first notification message.

In some embodiments, that the first electronic device obtains the first SIM card information includes: The first electronic device obtains authentication data in the first SIM card information in real time, where the authentication data is used to perform authentication when the first electronic device establishes a connection to the network side; and the first electronic device pre-caches other data other than the authentication data in the first SIM card information, and updates corresponding data based on aging periods of different data, so that the first electronic device directly reads the other data locally when processing the cellular communication service. In this embodiment, the first electronic device pre-caches the other data other than the authentication data in the first SIM card information, so that a rate at which the first electronic device accesses the first SIM card information can be increased.

In some embodiments, the first electronic device displays a third prompt box after establishing a connection to the network side device based on the first SIM card information, where the third prompt box is used to prompt that the first electronic device is providing a signal relay service for the second electronic device.

In some embodiments, the second electronic device displays prompt information when call quality of the second electronic device is lower than a quality threshold, where the prompt information is used to prompt the user to control the second electronic device to approach the first electronic device.

In some embodiments, the first electronic device transmits a hotspot signal by using cellular data traffic of the first SIM card; and after a third electronic device establishes a connection to the hotspot signal, the third electronic device uses the cellular data traffic of the first SIM card to access the internet by using the first electronic device. In this embodiment, the first electronic device may share traffic of the first electronic device with the third electronic device.

In some embodiments, a second SIM card is further installed on the second electronic device, and the second SIM card stores second SIM card information; and the second electronic device establishes a connection to the network side device based on the second SIM card information, and locally processes a cellular communication service related to the second SIM card. In this embodiment, the second electronic device may process the cellular communication service of the first SIM card by using the first electronic device, and may also process the cellular communication service of the second SIM card of the second electronic device.

In some embodiments, a third SIM card is further installed on the first electronic device, and the third SIM card stores third SIM card information; and the first electronic device establishes a connection to the network side device based on the third SIM card information, and locally processes a cellular communication service related to the third SIM card. In this embodiment, the first electronic device may assist the second electronic device in processing the cellular communication service of the first SIM card, and may also process the cellular communication service of the third SIM card of the first electronic device.

According to a second aspect, an embodiment of this application further provides a first electronic device. The first electronic device is configured to: establish a connection to a second electronic device, where a first SIM card is installed on the second electronic device, and the first SIM card stores first SIM card information; obtain the first SIM card information; and establish a connection to a network side device based on the first SIM card information, so that the second electronic device enters a relay mode. In the relay mode, the first electronic device assists the second electronic device in performing a cellular communication service related to the first SIM card.

In some embodiments, in the relay mode, the first electronic device is further configured to forward cellular communication data related to the first SIM card between the network side device and the second electronic device, where the second electronic device processes the corresponding cellular communication service based on the cellular communication data.

In some other embodiments, in the relay mode, the first electronic device is further configured to: exchange cellular communication data related to the first SIM card with the network side device, and locally process the corresponding cellular communication service based on the cellular communication data.

In some embodiments, the first electronic device establishes a connection to the second electronic device by using a near field communication technology, a far field communication technology, or a physical entity.

In some embodiments, the first electronic device is further configured to broadcast a first notification message, where the first notification message is used to notify that the first electronic device has a signal relay function, so that the second electronic device establishes a connection to the first electronic device based on the first notification message.

In some embodiments, the first electronic device is further configured to broadcast the first notification message when a cellular signal strength of the first electronic device is greater than or equal to a strength threshold.

In some embodiments, the first electronic device is configured to: obtain authentication data in the first SIM card information in real time, where the authentication data is used to perform authentication when the first electronic device establishes a connection to the network side; and pre-cache other data other than the authentication data in the first SIM card information, and update corresponding data based on aging periods of different data, so that the first electronic device directly reads the other data locally when processing the cellular communication service.

In some embodiments, the first electronic device is further configured to display a third prompt box after establishing a connection to the network side device based on the first SIM card information, where the third prompt box is used to prompt that the first electronic device is providing a signal relay service for the second electronic device.

In some embodiments, the first electronic device is further configured to transmit a hotspot signal by using cellular data traffic of the first SIM card. After a third electronic device establishes a connection to the hotspot signal, the third electronic device uses the cellular data traffic of the first SIM card to access the internet by using the first electronic device.

In some embodiments, a third SIM card is further installed on the first electronic device, and the third SIM card stores third SIM card information; and the first electronic device is further configured to: establish a connection to the network side device based on the third SIM card information, and locally process a cellular communication service related to the third SIM card.

According to a third aspect, an embodiment of this application further provides a second electronic device, where a first SIM card is installed on the second electronic device, the first SIM card stores first SIM card information, and the second electronic device is configured to: establish a connection to a first electronic device; and send the first SIM card information to the first electronic device, where the first SIM card information is used by the first electronic device to establish a connection to a network side device, so that the second electronic device enters a relay mode. In the relay mode, the first electronic device assists the second electronic device in performing a cellular communication service related to the first SIM card.

In some embodiments, in the relay mode, the first electronic device forwards cellular communication data related to the first SIM card between the network side device and the second electronic device, and the second electronic device processes the corresponding cellular communication service based on the cellular communication data.

In some embodiments, in the relay mode, the first electronic device exchanges cellular communication data related to the first SIM card with the network side device, and locally processes the corresponding cellular communication service based on the cellular communication data.

In some embodiments, the second electronic device is further configured to: when the second electronic device is in an autonomous mode, if the second electronic device meets a first preset condition, switch from the autonomous mode to the relay mode to access the network side device; and/or when the second electronic device is in the relay mode, if the second electronic device meets a second preset condition, switch from the relay mode to the autonomous mode to access the network side device. In the autonomous mode, the second electronic device establishes a connection to the network side device based on the first SIM card information, directly exchanges the cellular communication data related to the first SIM card with the network side device, and locally processes the corresponding cellular communication service based on the cellular communication data.

The first preset condition is as follows: A cellular signal strength of the second electronic device is less than a strength threshold; and/or a power level of the second electronic device is less than a power level threshold; and/or the second electronic device is located in an abnormal cell; and/or the second electronic device is located at an abnormal location; and/or the second electronic device is connected to a vehicle-mounted Bluetooth device.

The second preset condition is as follows: Quality of communication between the first electronic device and the second electronic device is lower than a communication quality threshold; and/or a power level of the second electronic device is greater than or equal to a power level threshold; and/or the second electronic device is handed over from an abnormal cell to a normal cell; and/or the second electronic device is switched from an abnormal location to a normal location; and/or the second electronic device is disconnected from a vehicle-mounted Bluetooth device.

In some embodiments, when the second electronic device is in an idle state, the second electronic device is further configured to: control a local modem Modem, a Modem protocol stack, or an internet protocol multimedia subsystem IMS protocol stack to be powered off, and control the first electronic device to access the network side device based on the first SIM card information, to switch from the autonomous mode to the relay mode; and/or disconnect from the first electronic device, control the local Modem, the Modem protocol stack, and the IMS protocol stack to be powered on, and access the network side device based on the first SIM card information, to switch from the relay mode to the autonomous mode.

In some embodiments, when the second electronic device is in a service state, the second electronic device is further configured to: control a local Modem, a Modem protocol stack, or an IMS protocol stack to be powered off, and synchronize state information related to a current service in a local user plane protocol stack and a local control plane protocol stack to the first electronic device, where the first electronic device accesses the network side device based on the first SIM card information and the state information, so that the second electronic device switches from the autonomous mode to the relay mode; and/or control the local Modem, the Modem protocol stack, and the IMS protocol stack to be powered on, obtain state information related to a current service in a user plane protocol stack and a control plane protocol stack of the first electronic device, and access the network side device based on the first SIM card information and the state information, to switch from the relay mode to the autonomous mode.

In some embodiments, the first electronic device establishes a connection to the second electronic device by using a near field communication technology, a far field communication technology, or a physical entity.

In some embodiments, the second electronic device is further configured to: display a first prompt box after receiving a first notification message, where the first notification message is used to notify that the first electronic device has a signal relay function, and the first prompt box includes a device selection control; and establish a connection to the second electronic device in response to an operation performed by a user on the device selection control.

In some embodiments, the second electronic device is further configured to: when the cellular signal strength of the second electronic device is less than the strength threshold, display the first prompt box after receiving the first notification message.

In some embodiments, the second electronic device is further configured to display prompt information when call quality of the second electronic device is lower than a quality threshold, where the prompt information is used to prompt the user to control the second electronic device to approach the first electronic device.

In some embodiments, a second SIM card is further installed on the second electronic device, and the second SIM card stores second SIM card information; and the second electronic device is further configured to: establish a connection to the network side device based on the second SIM card information, and locally process a cellular communication service related to the second SIM card.

According to a fourth aspect, an embodiment of this application provides a communication method. The method is applied to a first electronic device, and the method includes content that is configured to be performed by the first electronic device in the second aspect.

According to a fifth aspect, an embodiment of this application provides a communication method. The method is applied to a second electronic device, and the method includes content that is configured to be performed by the second electronic device in the third aspect.

According to a sixth aspect, an embodiment of this application provides a computer-readable storage medium. The computer-readable storage medium stores computer program, and when the computer program is executed by a processor, the communication method according to the fourth aspect is implemented.

According to a seventh aspect, an embodiment of this application provides a computer-readable storage medium. The computer-readable storage medium stores computer program, and when the computer program is executed by a processor, the communication method according to the fifth aspect is implemented.

According to an eighth aspect, an embodiment of this application provides a computer program product. The program product includes a program, and when the program is run by a device, a first electronic device implements the communication method according to the fourth aspect.

According to a ninth aspect, an embodiment of this application provides a computer program product. The program product includes a program, and when the program is run by a device, a second electronic device implements the communication method according to the fifth aspect.

According to a tenth aspect, an embodiment of this application provides a chip, applied to a first electronic device. The chip includes a memory and a processor, and the processor executes a computer program stored in the memory, to implement the communication method according to the fourth aspect.

According to an eleventh aspect, an embodiment of this application provides a chip, applied to a second electronic device. The chip includes a memory and a processor, and the processor executes a computer program stored in the memory, to implement the communication method according to the fifth aspect.

It may be understood that for beneficial effects of the second aspect to the eleventh aspect, refer to the related description in the first aspect. Details are not described herein again.

### BRIEF DESCRIPTION OF DRAWINGS

FIG. 1 is a schematic diagram of a structure of an existing communication system between user equipment and a network side device;
FIG. 2 is a schematic diagram 1 of a structure of a communication system to which a communication method is applicable according to an embodiment of this application;
FIG. 3 is a schematic diagram 2 of a structure of a communication system to which a communication method is applicable according to an embodiment of this application;
FIG. 4(a) to FIG. 4(f) are a schematic diagram of interfaces of user equipment according to an embodiment of this application;
FIG. 5 is a schematic flowchart of relay device discovery and connection according to an embodiment of this application;
FIG. 6 is a schematic diagram of a communication link between a relay device and user equipment according to an embodiment of this application;
FIG. 7(a) and FIG. 7(b) are a schematic diagram of interfaces of user equipment according to another embodiment of this application;
FIG. 8(a) and FIG. 8(b) are a schematic diagram of interfaces of user equipment according to still another embodiment of this application;
FIG. 9 is a flowchart of a remote SIM card access method according to an embodiment of this application;
FIG. 10 is a schematic diagram 1 of a reading mode of SIM card information according to an embodiment of this application;
FIG. 11 is a schematic diagram 2 of a reading mode of SIM card information according to an embodiment of this application;
FIG. 12 is a schematic diagram of a data transmission path in a signal relay communication process according to an embodiment of this application;
FIG. 13 is a schematic diagram of a data forwarding mode of a forwarding device according to an embodiment of this application;
FIG. 14A and FIG. 14B are a schematic diagram of a principle of signal relay communication according to an embodiment of this application;
FIG. 15 shows a communication scenario 1 to which a communication method is applicable according to an embodiment of this application;
FIG. 16 shows a communication scenario 2 to which a communication method is applicable according to an embodiment of this application;
FIG. 17 shows a communication scenario 3 to which a communication method is applicable according to an embodiment of this application;
FIG. 18(a) and FIG. 18(b) are a schematic diagram of interfaces of user equipment according to yet another embodiment of this application;
FIG. 19 is a flowchart of a process of answering a call by user equipment according to an embodiment of this application;
FIG. 20 is a schematic diagram of an incoming call interface of user equipment according to an embodiment of this application;
FIG. 21 shows a communication scenario 4 to which a communication method is applicable according to an embodiment of this application;
FIG. 22 shows a communication scenario 5 to which a communication method is applicable according to an embodiment of this application;
FIG. 23(a) to FIG. 23(d) are a schematic diagram of a process of selecting user equipment on a relay device according to an embodiment of this application;
FIG. 24 is a schematic diagram of interfaces of user equipment according to still yet another embodiment of this application;
FIG. 25 is a flowchart of a communication method based on a relay device according to an embodiment of this application;
FIG. 26A shows a communication scenario 7 to which a communication method is applicable according to an embodiment of this application;
FIG. 26B shows a communication scenario to which a communication method is applicable according to another embodiment of this application;
FIG. 27 shows a communication scenario 8 to which a communication method is applicable according to an embodiment of this application;
FIG. 28 shows a communication scenario 10 to which a communication method is applicable according to an embodiment of this application;
FIG. 29 is a schematic diagram 3 of a structure of a communication system to which a communication method is applicable according to an embodiment of this application;
FIG. 30(a) and FIG. 30(b) are a schematic diagram of data plan settings of a relay server according to an embodiment of this application;
FIG. 31 is a schematic diagram 1 of a dual-SIM incoming call scenario according to an embodiment of this application;
FIG. 32 is a schematic diagram 2 of a dual-SIM incoming call scenario according to an embodiment of this application;
FIG. 33 is a schematic diagram 1 of data transmission in a signal relay communication process according to an embodiment of this application;
FIG. 34 is a schematic diagram 2 of data transmission in a signal relay communication process according to an embodiment of this application;
FIG. 35 is a schematic diagram 3 of data transmission in a signal relay communication process according to an embodiment of this application;
FIG. 36 is a schematic diagram 4 of data transmission in a signal relay communication process according to an embodiment of this application;
FIG. 37 is a schematic diagram 5 of data transmission in a signal relay communication process according to an embodiment of this application;
FIG. 38 is a schematic diagram 1 of a communication mode between user equipment and a relay device according to an embodiment of this application;
FIG. 39 is a schematic diagram 2 of a communication mode between user equipment and a relay device according to an embodiment of this application;
FIG. 40 is a schematic diagram of a communication mode between a relay device and a network side device according to an embodiment of this application;
FIG. 41(a) to FIG. 41(d) are a schematic diagram of access permission management of a relay device according to an embodiment of this application;
FIG. 42 is a schematic diagram of cellular service management of a relay device according to an embodiment of this application;
FIG. 43 is a schematic diagram of a mode switching principle according to an embodiment of this application;
FIG. 44 is a flowchart of a communication method according to another embodiment of this application;
FIG. 45 is a schematic diagram of an architecture of a user plane protocol stack and a control plane protocol stack of user equipment according to an embodiment of this application;
FIG. 46 is a schematic diagram of a multi-network synergy scenario according to an embodiment of this application; and
FIG. 47 is a schematic diagram of a network convergence scenario according to another embodiment of this application.

### DESCRIPTION OF EMBODIMENTS

The following describes the technical solutions of embodiments of this application with reference to the accompanying drawings in embodiments of this application.

The technical solutions of embodiments of this application may be applied to various communication systems such as a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th Generation, 5G) system or new radio (new radio, NR), a global system for mobile communications (global system for mobile communications, GSM), a code division multiple access (code division multiple access, CDMA) communication system, and a time division-synchronous CDMA (time division-synchronous CDMA, TD-SCDMA) communication system.

The technical solutions provided in embodiments are applicable to calls such as circuit switched (Circuit Switched, CS), voice over long term evolution (voice over long term evolution, VoLTE), voice over new radio (voice over new radio, VoNR), video over long term evolution (video over long term evolution, ViLTE), video over new radio (video over new radio, ViNR), evolved packet system fallback (evolved packet system fallback, EPS fallback), CS fallback (CS fallback), voice over wireless fidelity (wireless fidelity, Wi-Fi) (voice over Wi-Fi, VoWiFi), or video over Wi-Fi (video over Wi-Fi, ViWiFi).

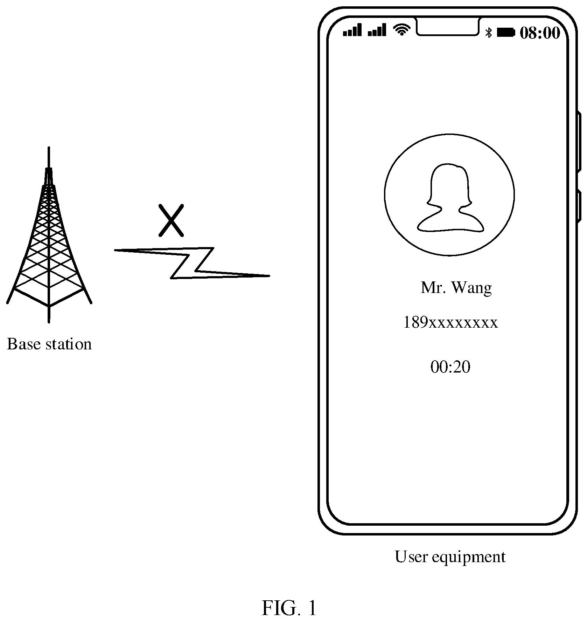

Currently, user equipment (for example, a mobile phone) is connected to a cellular network by using a cellular signal transmitted by a base station, to perform a cellular communication service, for example, to make a call, access the internet, and receive and send an SMS message. However, the cellular signal transmitted by the base station may be affected by poor base station distribution, mutual interference between a plurality of base stations, buildings blocking, a far distance from the mobile phone to the base station, and the like. Consequently, a strength of a cellular signal received by the mobile phone is weak, even the cellular signal cannot be received, affecting the cellular communication service. For example, as shown in FIG. 1, in a call process, when a strength of a cellular signal of a mobile phone is relatively weak, quality of a communication link between the mobile phone and a base station is usually relatively poor, and there are some cases: a large quantity of call data packets are lost, a delay is relatively large, and/or jitter is relatively large. As a result, a problem such as voice choppiness, no sound, video freezing, or even call interruption occurs in the call process. In this case, user experience is poor.

Therefore, embodiments of this application provide a communication method, to resolve a problem that a cellular communication service is abnormal when a cellular signal of user equipment is relatively poor to some extent.

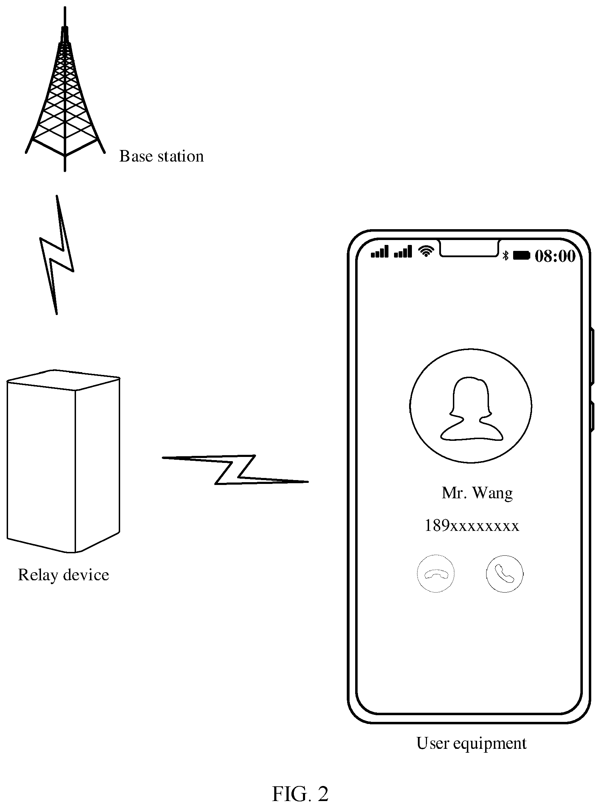

FIG. 2 is a schematic diagram 1 of a structure of a communication system to which a communication method is applicable according to an embodiment of this application. Refer to FIG. 2. The communication system includes user equipment, a relay device, and a network side device, and is configured to provide a communication mode in which the relay device replaces the user equipment to access the network side device, where this communication mode is referred to as a relay mode for short.

In this embodiment, the user equipment (user equipment, UE) may be an electronic device, for example, a mobile phone, a tablet computer, a notebook computer, a desktop computer, a smart television, a wearable device (for example, a smartwatch), a vehicle-mounted device, a smart home device (for example, a smart sound box), an augmented reality (augmented reality, AR) device/a virtual reality (virtual reality, VR) device, an ultra-mobile personal computer (ultra-mobile personal computer, UMPC), a netbook, or a personal digital assistant (personal digital assistant, PDA). The relay device may be customer premise equipment (customer premise equipment, CPE), or may be user equipment, or may be a functional module that can provide a signal relay service in a cloud server, or the like.

In this embodiment of this application, the network side device may have a device that can provide a random access function for the electronic device, or a chip that can be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), and a baseband unit (baseband unit, BBU). Alternatively, the device may be a gNB or a transmission point (a TRP or a TP) in a 5G system such as an NR system; may be an antenna panel or a group of antenna panels (including a plurality of antenna panels) of a base station in a 5G system; or may be a network node, such as a baseband unit (BBU) or a distributed unit (DU, distributed unit), that constitutes a gNB or a transmission point; or may be a network side device in a future 5G network, a network side device in a future evolved PLMN network, or the like. This is not limited in this embodiment of this application.

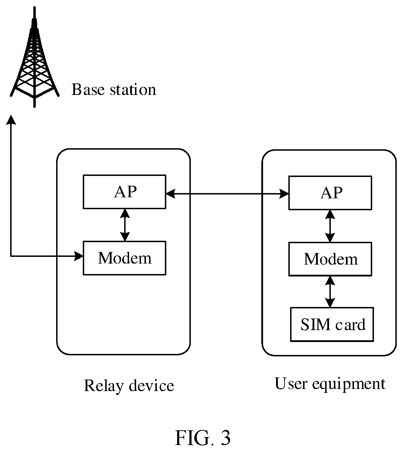

Refer to FIG. 3. User equipment is usually equipped with a subscriber identity module (subscriber identity module, SIM) card, for example, a physical SIM card, an embedded-SIM (embedded-SIM, e-SIM) card, or a virtual SIM card. The virtual SIM card includes a SkyTone application. The SIM card stores an international mobile subscriber identity (international mobile subscriber identity, IMSI), and the IMSI is a unique user identifier for the user equipment to access a cellular network. When accessing a network side device, the user equipment needs to perform authentication by using the IMSI, to help the network side device identify an identity of the user equipment.

The user equipment may select, according to a user instruction, an electronic device with a relatively good cellular signal as a relay device, and directly send local SIM card information to an AP of the relay device by using a local application processor (application processor, AP), or send local SIM card information to an AP of the relay device by sequentially using a local Modem and a local AP. Subsequently, a Modem of the relay device uses the IMSI in the SIM card information as an identity, and the relay device replaces the user equipment to directly access the network side device (for example, a base station). However, the local Modem of the user equipment does not communicate with the network side device.

It should be specially noted that, in this embodiment, the user equipment is an electronic device that provides SIM card information, and the relay device is an electronic device that accesses a cellular network by using the SIM card information. In addition, the Modem may be physical hardware on the electronic device, or may be a Modem function module instantiated by the physical hardware. When a plurality of Modem function modules are instantiated by using one piece of Modem physical hardware, the plurality of Modem function modules share a resource of the Modem physical hardware in a time division multiplexing manner.

In a signal relay communication process, the user equipment may locally process a cellular communication service. Specifically, the user equipment sends uplink cellular communication data to the relay device, and then the relay device forwards the uplink cellular communication data to the network side device. In addition, the network side device further needs to send downlink cellular communication data to the relay device, and then the relay device forwards the downlink cellular communication data to the user equipment.

Because a cellular signal of the relay device is relatively good, link quality of a communication link between the relay device and the network side device is relatively good, which helps improve a packet loss, jitter, and a delay in a data transmission process. Therefore, compared with direct communication between the user equipment and the network side device, communication between the relay device and the network side device can improve communication quality. For example, for a call scenario, a problem such as call choppiness, no sound, video freezing, or even call interruption in a call process can be improved. For an SMS message service scenario or the like, a sending and receiving rate of an SMS message can be improved, and a delay of arriving at the user equipment by the SMS message can be reduced. For an internet access service scenario or the like, a web page refresh rate can be improved.

In addition, in the signal relay communication process, the relay device may alternatively process a cellular communication service. Specifically, the relay device sends locally generated uplink cellular communication data to the network side device, and receives and processes downlink cellular communication data sent by the network side device. Because a cellular signal of the relay device is relatively good, cellular communication quality can also be ensured in a process in which the relay device replaces the user equipment to process and access to the cellular network and processes a cellular communication service.

The following describes the technical solutions of this application in detail.

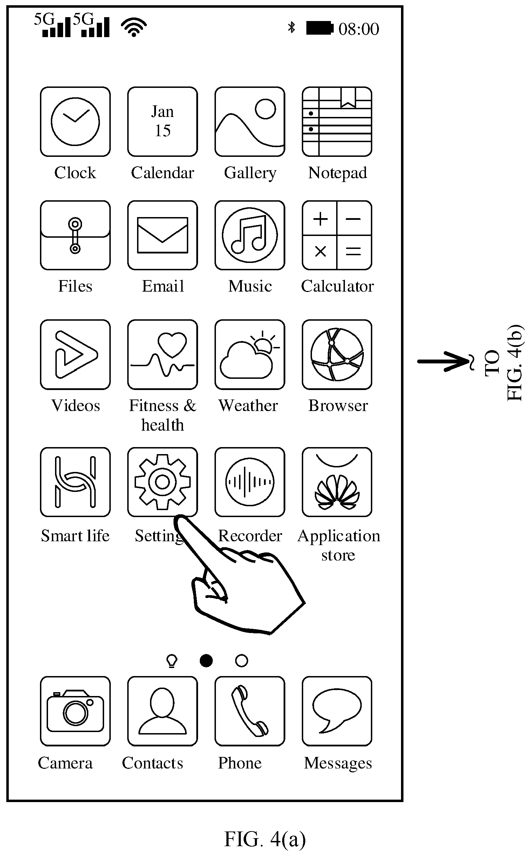

In a process in which user equipment accesses a cellular network by using a relay device, the user equipment first needs to perform device discovery and connection on the relay device. Generally, the user equipment can perform device discovery and connection on the relay device only after a signal relay function is enabled. FIG. 4(a) to FIG. 4(f) are a schematic diagram of interfaces of user equipment according to an embodiment of this application, and relate to a process of enabling the signal relay function on the user equipment according to user instructions. The details are as follows:
Refer to FIG. 4(a). Application icons such as "Clock", "Calendar", "Gallery", "Notepad", and "Settings" are displayed on a home screen of the user equipment. After detecting an operation performed by a user on the "Settings" icon, the user equipment may display a setting interface.

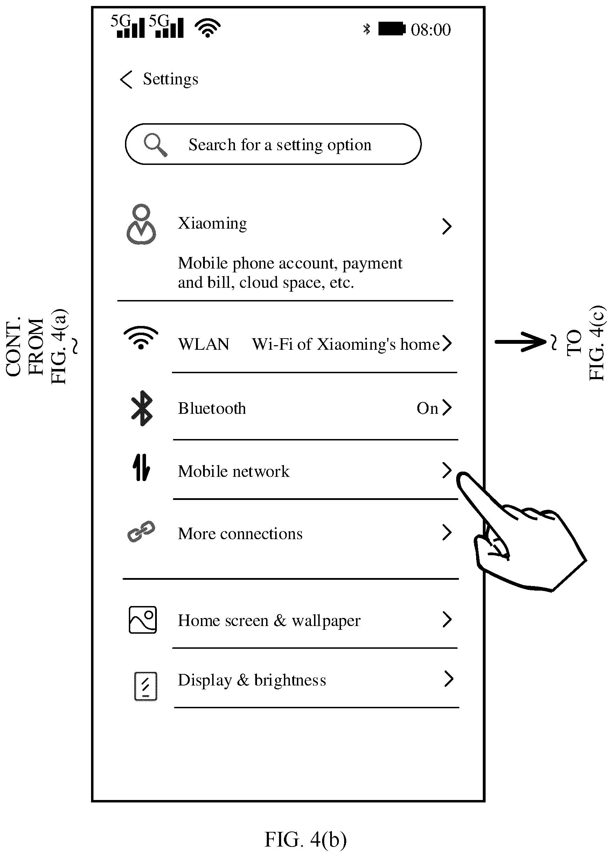

Refer to FIG. 4(b). The setting interface may include options such as user information, "wireless local area network (Wireless Local Area Network, WLAN)", "Bluetooth", "Mobile network", and "More connections". In response to an operation performed by the user on the "Mobile network" option, the user equipment displays a mobile network interface.

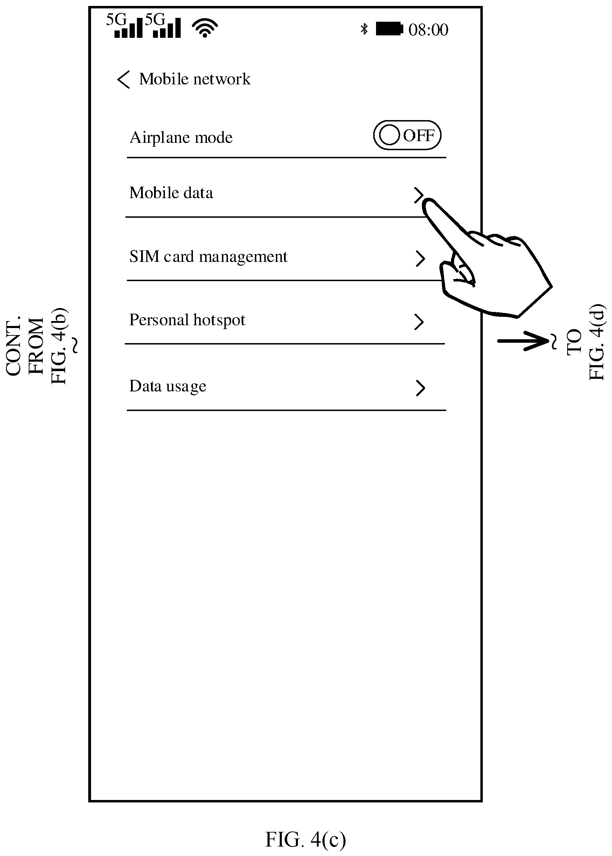

Refer to FIG. 4(c). The mobile network interface includes options such as "Airplane mode", "Mobile data", "SIM card management", "Personal hotspot", and "Data usage". In response to an operation performed by the user on the "Mobile data" option, the user equipment displays a mobile data interface.

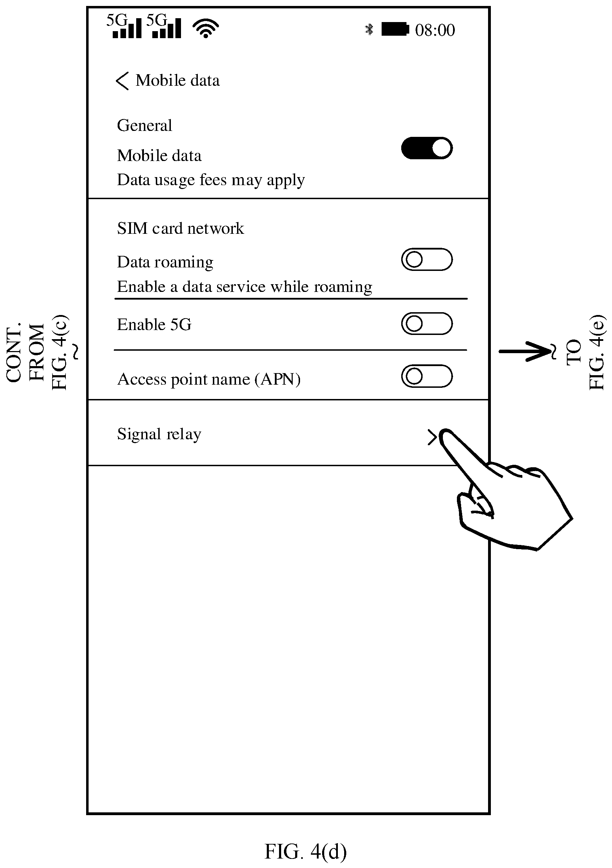

Refer to FIG. 4(d). The mobile data interface includes on/off items such as "Mobile data", "Data roaming", "Enable 5G", and "APN", and a "Signal relay" option. In response to an operation performed by the user on the "Signal relay" option, the user equipment displays a signal relay interface.

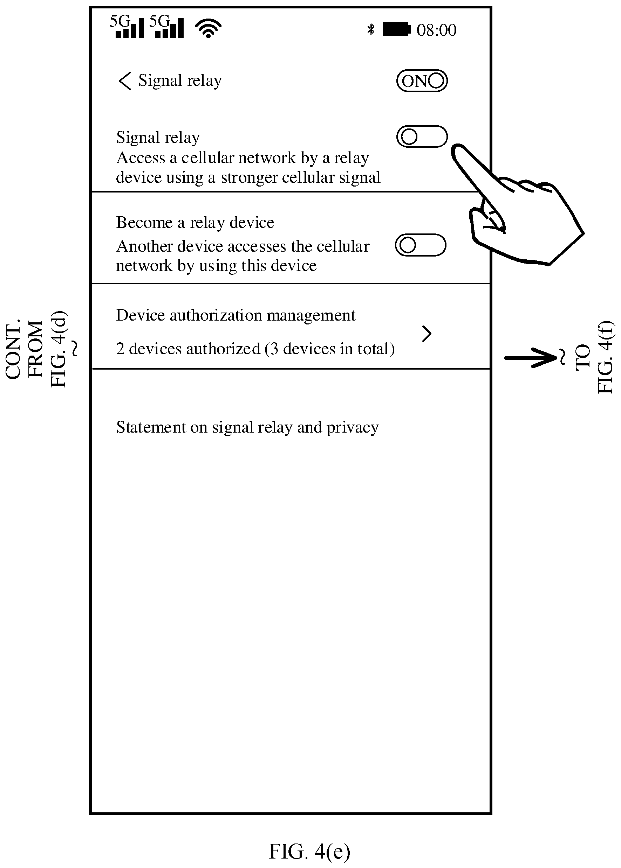

Refer to FIG. 4(e). The signal relay interface includes a "Signal relay" on/off item, a "Become a relay device" on/off item, and a "Device authorization management" option. After the "Signal relay" on/off item is turned on, the user equipment can perform device discovery on the relay device, and after establishing a connection to the relay device, the user equipment accesses a cellular network by using a cellular signal of the relay device.

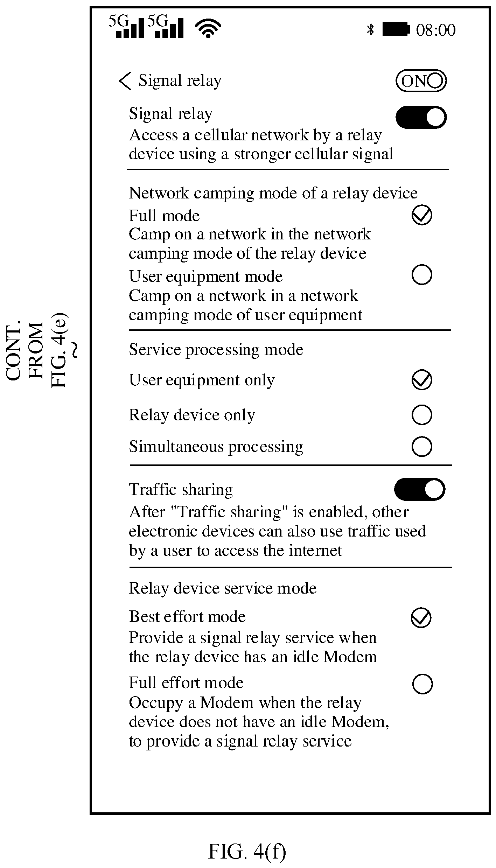

In this embodiment, various setting modes are further configured for a communication scenario of signal relay. For example, refer to FIG. 4(f). After turning on the "Signal relay" on/off item, the user may set various specific working modes of the user equipment and the relay device in a signal relay scenario, including a network camping mode of the relay device, a service processing mode, whether to share traffic, a service mode of the relay device, and the like.

The network camping mode of the relay device may be set to "Full mode" or "User equipment mode". In the "Full mode", the relay device camps on a network in the network camping mode of the relay device. In the "User equipment mode", the relay device camps on the network based on a capability of the user equipment (for example, a frequency band in which the user equipment can access a cellular network).

The service processing mode may be set to a "User equipment only" mode, a "Relay device only" mode, or a "Simultaneous processing" mode. In the "User equipment only" mode, a cellular communication service is processed only on the user equipment, for example, an incoming call notification is performed only on the user equipment. In the "Relay device only" mode, the cellular communication service is processed only on the relay device, for example, an incoming call notification is performed only on the relay device. In the "Simultaneous processing" mode, the cellular communication service is processed on both the relay device and the user equipment, for example, an incoming call notification is performed on both the relay device and the user equipment.

After a "Traffic sharing" option is turned on, in the process in which the user equipment accesses the cellular network by using the relay device, another electronic device connected to the relay device may also use cellular data traffic of the user equipment.

The service mode of the relay device may be set to a "Best effort mode" or a "Full effort mode". In the "Best effort mode", when there is an idle Modem on the relay device, the relay device provides a signal relay service for the user equipment. Otherwise, the signal relay service is not provided. In the "Full effort mode", when no idle Modem is available on the relay device, the relay device releases occupation on the existing Modem and provides the signal relay service for the user equipment.

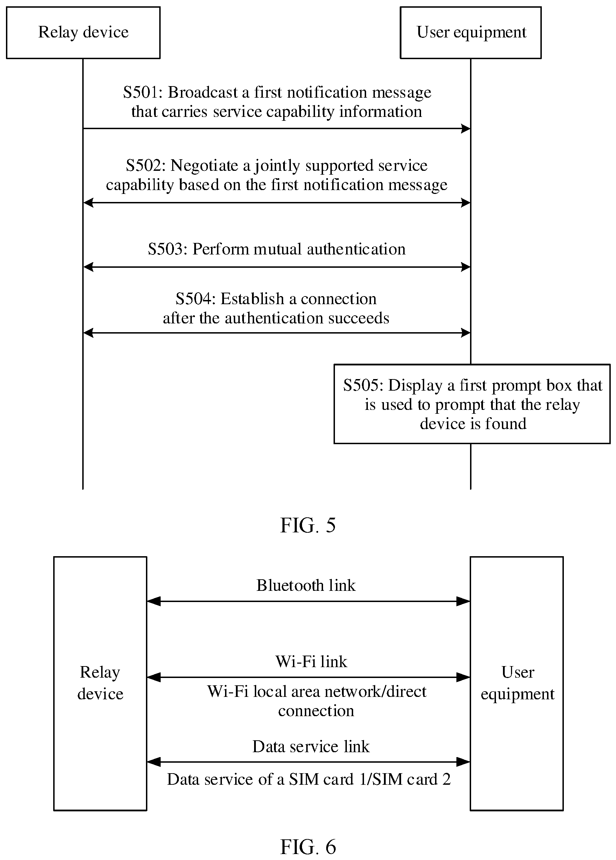

FIG. 5 is a schematic flowchart of relay device discovery and connection according to an embodiment of this application. Specifically, the following steps S501 to S505 are included.

S501: A relay device broadcasts a first notification message, where the first notification message carries service capability information of a relay device.

The first notification message is used to notify another electronic device that the relay device can provide a signal relay service, and carries the service capability information of the relay device and currently detected network environment information. The service capability information indicates a service type that can be processed by the relay device. The service capability information may include a Remote SIM service (namely, a remote SIM card service), a voice call service, a video call service, a data service, a short message service (short message service, SMS), a global positioning system (global positioning system, GPS) service, and the like. The network environment information includes a cellular signal strength, quality of experience (quality of experience, QoE) of a cellular communication service, and the like. It should be noted that the QoE may be understood as user experience or user perception, namely, a subjective feeling of a terminal user about performance of a service provided by a mobile network. By using a nearly quantitative method, the QoE may represent the terminal user's experience and feeling about the service and network, and reflect a gap between user's expectation and quality of a current service and network.

In this embodiment, the relay device may broadcast the first notification message by using technologies such as Bluetooth (Bluetooth, BT), Wi-Fi, near field communication (near field communication, NFC), or device to device (device to device, D2D); or broadcast the first notification message by using a server based on Wi-Fi or a cellular data service; or establish a peer to peer (peer to peer, P2P) connection based on Wi-Fi or a cellular data service, and broadcast the first notification message. User equipment obtains the first notification message through listening.

Optionally, before broadcasting the first notification message, the relay device may first detect a cellular signal strength of the relay device. If the cellular signal strength is less than a strength threshold (for example, -95 dBm (decibel milliwatt)), it indicates that the relay device cannot ensure quality of communication with a network side device. Therefore, the relay device does not broadcast the first notification message. If the cellular signal strength is greater than or equal to the strength threshold, it indicates that the relay device can ensure the quality of communication with the network side device. Therefore, the relay device broadcasts the first notification message. In addition, in this embodiment, the relay device may directly broadcast the first notification message without detecting the cellular signal strength.

For example, when the relay device broadcasts the first notification message by using Bluetooth, the user equipment may receive the first notification message after the user equipment enters a Bluetooth coverage area of the relay device. When the relay device broadcasts the first notification message by using Wi-Fi, the relay device may send the first notification message to a specific port of a router in a local area network. Another electronic device in the local area network receives the first notification message by listening to the port.

In some embodiments, the relay device may continuously broadcast the first notification message, and the user equipment listens to the notification message as required. For example, when the cellular signal strength of the user equipment is less than the strength threshold (for example, -95 dBm), the first notification message broadcast by the relay device is listened to.

In some other embodiments, the user equipment may first broadcast a relay device use request as required, to actively request to use the relay device. For example, when the cellular signal strength of the user equipment is less than the strength threshold (for example, -95 dBm), the relay device use request is broadcast. After receiving the relay device use request, the relay device replies to the user equipment with the first notification message, to notify the user equipment that the relay device can provide the signal relay service. According to the method provided in this embodiment, power consumption of the relay device can be reduced, and resources can be saved.

S502: The user equipment negotiates a jointly supported service capability with the relay device based on the first notification message.

After receiving the first notification message, the user equipment needs to perform service capability negotiation with the relay device to determine a service type jointly supported by the user equipment and the relay device. For example, the relay device supports the Remote SIM service, the voice call service, the video call service, the data service, the SMS, and the GPS service, and the user equipment needs to determine, from these services, a service supported by the user equipment, and send a determining result to the relay device.

S503: The user equipment and the relay device perform mutual authentication.

In some embodiments, the user equipment and the relay device may perform mutual authentication by using a device account. If the user equipment and the relay device log in to a same device account, the authentication succeeds.

In some other embodiments, the user equipment and the relay device may perform mutual authentication by using a dynamic verification code. For example, after the relay device and the user equipment complete the service capability negotiation, the relay device may display a dynamic verification code, and send a verification notification to the user equipment. After receiving the verification notification, the user equipment may display a verification code input interface. After obtaining a verification code entered by the user, the user equipment sends the entered verification code to the relay device for verification. If the verification code sent by the user is the same as the verification code displayed by the relay device, the authentication succeeds. It should be noted that in this embodiment, after the mutual authentication between the user equipment and the relay device succeeds, authentication does not need to be performed again for subsequent use.

S504: After the authentication succeeds, the user equipment and the relay device establish a connection.

After the authentication succeeds, the user equipment and the relay device may establish a connection according to internet protocol (Internet protocol, IP) addresses of the user equipment and the relay device, to form a communication link.

In this embodiment, refer to FIG. 6. The communication link between the relay device and the user equipment may be a Bluetooth link, a Wi-Fi link, or a data service link. The Bluetooth link may be a conventional Bluetooth link or a Bluetooth low energy (Bluetooth low energy, BLE) link. The Wi-Fi link may be a Wi-Fi local area network link, a Wi-Fi direct connection link, or a Wi-Fi-based server relay link. In the Wi-Fi local area network link, a hotspot device may be a router, or may be the user equipment or the relay device. When the user equipment has two SIM cards, the data service link may be a data service link established by the user equipment with the relay device by using a SIM card 1, or a data service link established by the user equipment with the relay device by using a SIM card 2. In the data service link, the user equipment and the relay device may be connected in a P2P manner, or may be connected in a server relay manner. The data service link is a communication link established between the relay device and the user equipment through a base station.

In addition, for a far field connection, for example, the relay device and the user equipment are connected by using a server, the relay device and the user equipment may separately establish connections to the server in different manners. For example, the user equipment may be connected to the server by using Wi-Fi, and the relay device may be connected to the server by using a data service.

S505: The user equipment displays a first prompt box, where the first prompt box is used to prompt that the relay device is found.

Optionally, the user equipment may select, based on the cellular signal strength of the user equipment, whether to display the first prompt box. For example, if the cellular signal strength is greater than or equal to the strength threshold (for example, -95 dBm), it indicates that the user equipment can normally communicate with the network side device, and normally process the cellular communication service. Therefore, the user equipment may not display the first prompt box. If the cellular signal strength is less than the strength threshold, it indicates that quality of communication between the user equipment and the network side device cannot be ensured. Therefore, the user equipment displays the first prompt box, to prompt the user equipment that the user equipment can access a cellular network by using the relay device.

In this embodiment, the first prompt box includes prompt information indicating that a relay device is found, a device selection control for selecting a relay device, a setting control, and the like.

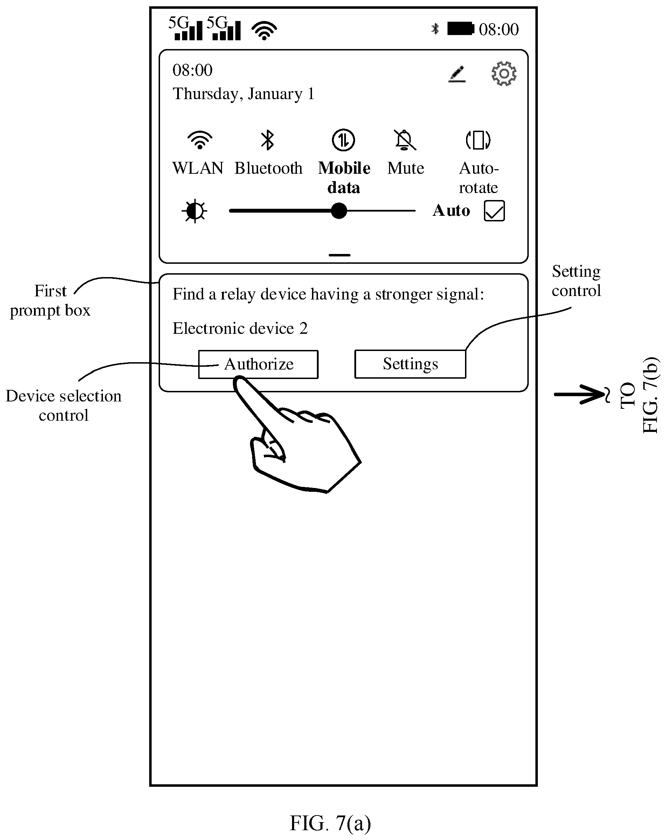

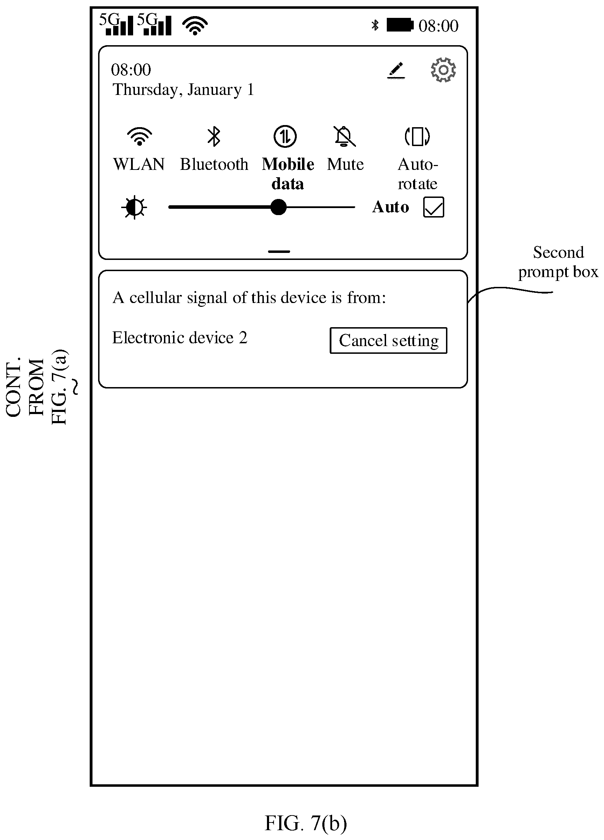

In an example, the user equipment is an electronic device 1. When only one SIM card is installed on the user equipment, refer to FIG. 7(a). The prompt information in the first prompt box may be "Find a relay device having a stronger signal: Electronic device 2". The device selection control is an "Authorize" icon, and is used to select the electronic device 2 as the relay device. The setting control may be a "Settings" icon, and is used to further set the electronic device 2. In response to an operation performed by the user on the "Authorize" icon, the user equipment uses the electronic device 2 as the relay device, and displays a second prompt box shown in FIG. 7(b). The second prompt box includes prompt information "A cellular signal of this device is from: Electronic device 2" and a "Cancel setting" icon that is used to cancel use of the electronic device 2 as the relay device.

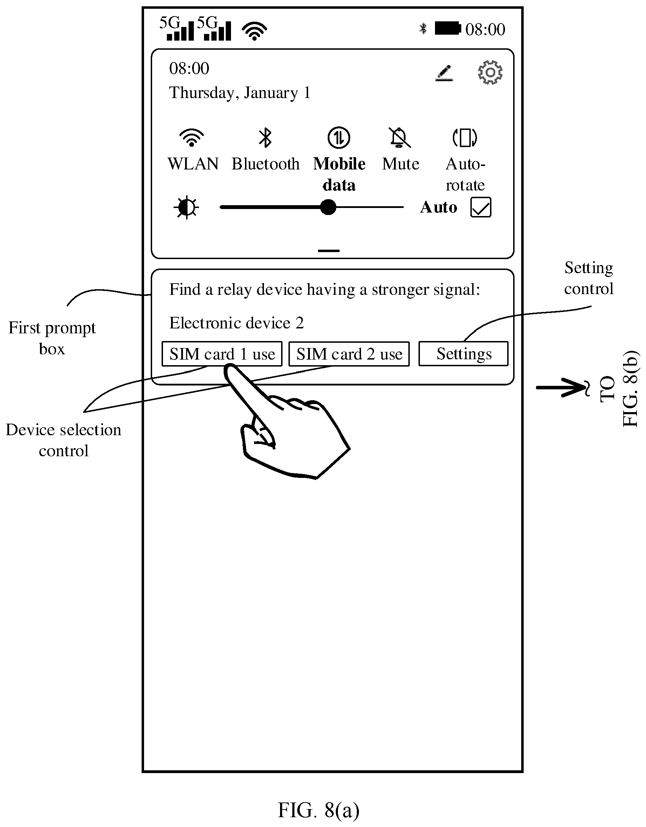

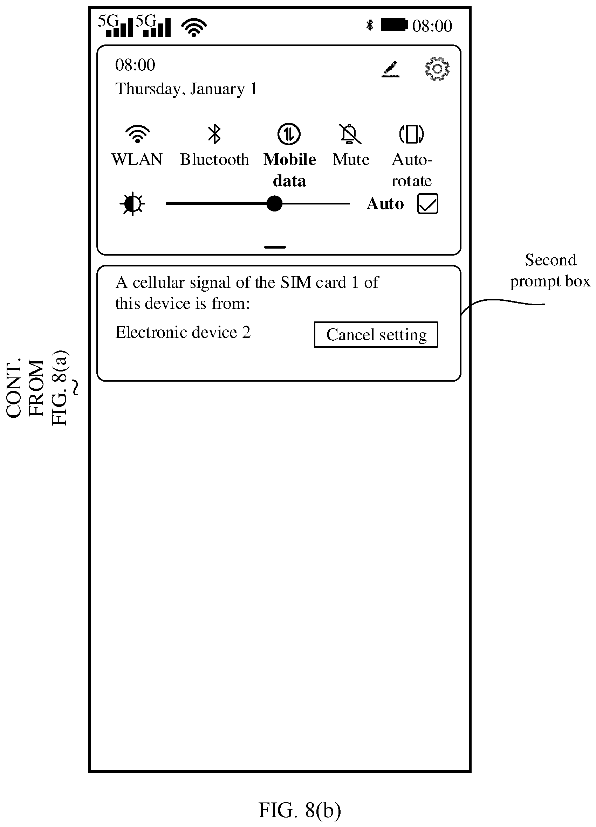

In another example, the user equipment is an electronic device 1. When two SIM cards are installed on the user equipment, refer to FIG. 8(a). The prompt information in the first prompt box may be "Find a relay device having a stronger signal: Electronic device 2". The device selection control may include a "SIM card 1 use" icon and a "SIM card 2 use" icon. The "SIM card 1 use" icon is used to select the electronic device 2 as a relay device of the SIM card 1, and the "SIM card 2 use" icon is used to select the electronic device 2 as a relay device of the SIM card 2. The setting control is a "Settings" icon, and is used to further set the electronic device 2. In response to an operation performed by the user on the "SIM card 1 use" icon, the user equipment uses the electronic device 2 as the relay device, and displays a second prompt box shown in FIG. 8(b). The second prompt box includes prompt information "A cellular signal of the SIM card 1 of this device is from: Electronic device 2" and a "Cancel setting" icon that is used to cancel use of the electronic device 2 as the relay device.

Optionally, the first prompt box may further include a cancel control that is used by the user to cancel the first prompt box currently displayed by the electronic device 1. For example, the cancel control may be a "Cancel" icon.

Optionally, in a relay mode, it may not be allowed to cancel the second prompt box displayed on the user equipment. After the user equipment exits the relay mode, the second prompt box is automatically canceled.

It should be noted that in this embodiment of this application, an operation performed by the user on a control, an option, or an on/off item includes tapping, double tapping, touching and holding, pressing with force, or the like by using a touch operation. A specific manner is not limited in this embodiment.

After the user equipment selects the relay device, the relay device needs to access information stored in a SIM card (which is referred to as SIM card information for short) of the user equipment, and then can access the cellular network as the user equipment. The following describes a process in which the relay device accesses the SIM card information of the user equipment.

The SIM card information usually includes user data and a network parameter. The user data is data generated when the user uses the SIM card, for example, contacts and a short message service (short message service, SMS). The network parameter is data that is stored by an operator in the SIM card in advance, and includes an IMSI, a mobile subscriber integrated services digital network (mobile subscriber integrated services digital network, MSISDN) number, a public land mobile network (public land mobile network, PLMN) identity, encryption-related data, an authentication algorithm and parameter, an integrated circuit card identifier (integrated circuit card identifier, ICCID), an IP multimedia subsystem (IP multimedia subsystem, IMS) public user identity (public user identity, IMPU), an IP multimedia subsystem private user identity (IMS private user identity, IMPI), DOMAIN (a domain name), a proxy call session control function (proxy call session control function, P-CSCF) address, a fixed dialing number (fixed dialing number, FDN), SMS parameters (a short message service center number), a forbidden PLMN (forbidden PLMN, FPLMN), a higher priority PLMN (higher priority PLMN, HPPLMN), a HPLMN (home PLMN, home PLMN) selector with an access technology (HPLMN selector with access technology, HPLMNwAcT), an operator controlled HPLMNwAcT (operator controlled HPLMNwAcT, OPLMNwAcT), a user controlled HPLMNwAcT (user controlled HPLMNwAcT, OPLMNwAcT), and the like.

The IMSI may be understood as a unique user identifier (Identifier, ID) of the SIM card, and is used to distinguish each user. The IMSI includes mobile country code (mobile country code, MCC), mobile network code (mobile nation code, MNC), and mobile subscriber identification number (mobile subscriber identification number, MSIN). The length of the MCC is usually 3 digits. The length of the MNC is determined by a value of the MCC and may be a 2-digit number (European standard) or a 3-digit number (North American standard). A value of the MSIN is allocated by the operator. For example, the IMSI may be 460001234567890, where the MCC is 460, the MNC is 00, and the MSIN is 1234567890.

The MSISDN is also referred to as a mobile number, for example, 8613912345678. The MSISDN includes country code (country code, CC), national destination code (national destination code, NDC), and a subscriber number (subscriber number, SN). CC of different countries is different. For example, CC of China is 86. The NDC is also referred to as network access code and is allocated by the telecommunications authority of each country to each network operator. For example, network access code of China Mobile includes 134 to 139, 150 to 152, 188, and the like; network access code of China Unicom includes 130 to 132, 185 to 186, and the like; and network access code of China Telecom includes 133, 153, 180, 189, and the like. The SN is allocated by the network operator to a subscriber.

The PLMN is a wireless communication system, and is used to provide a land mobile communication service for the public. The PLMN identity is used to identify different operators, that is, different mobile communication operators usually have different PLMNs. PLMN identity = MCC + MNC, for example, 46000 and 46001.

The ICCID is also referred to as a SIM card number, and is used to uniquely identify a SIM card, namely, it is an IC card identifier. The IMPU is a user identity used when an electronic device performs network registration and processes an IMS service.

The IMPU is an identity used when the electronic device communicates with another electronic device, and can be published. The IMPU is used for routing a session initiation protocol (Session Initiation Protocol, SIP) message.

The IMPI is an identity for registration, authentication, certification, and charging when a subscriber accesses an IMS network, and is not used for call addressing or routing. The IMPI is a globally unique subscriber identity defined by a home network operator.

The P-CSCF is a unified entry through which the IMS visits a network. All session messages initiated and terminated by an IMS terminal pass through the P-CSCF.

The authentication parameter includes a user key (key identifier, KI), an operator root key (Operator Variant Algorithm Configuration Field, OP), and OPC (an authentication key).

When a user opens an account at a service center of the operator, the operator allocates a specific KI to the user. The KI is stored in the SIM card and a home subscriber server (home subscriber server, HSS) of a core network. The KI in the SIM card is the same as that in the HSS. To ensure data security, the KI in the SIM card is written into the card and cannot be read by the outside. The KI is a core of a whole AKA authentication and encryption mechanism. An authentication and encryption process is essentially a KI verification process.

The OP belongs to an operator variant algorithm configuration field. All users of an operator may use the same OP to be distinguished from users of other operators. Generally, one operator has only one OP. To avoid security risks caused by presetting a same OP in all cards, many operators preset OPC in the SIM card currently. The OPC is obtained by performing a series of operations on the OP and the KI. This ensures that different OPC preset in different cards, and the OP of the operator cannot be reversely calculated based on OPC of one SIM card. The OP and the OPC are important parameters for SIM card authentication.

In this embodiment, the relay device and the user equipment may access the SIM card information of the user equipment in a client/server (Client/Server, C/S) mode. That is, the relay device serves as a client to send a SIM card information obtaining request to the user equipment, and the user equipment serves as a server to send the SIM card information to the relay device after receiving the request.

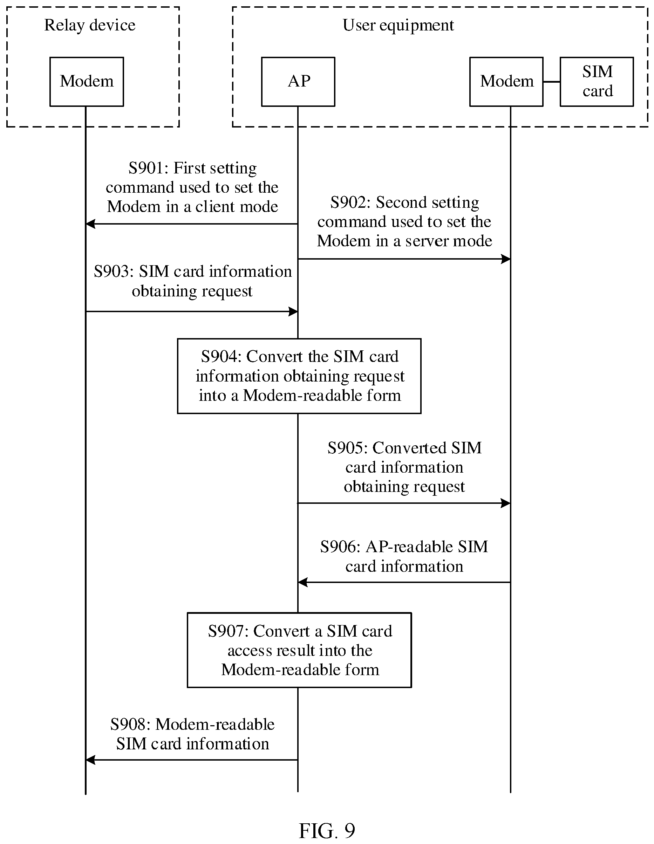

FIG. 9 is a flowchart of a remote SIM card access method according to an embodiment of this application, and relates to a process in which a relay device accesses SIM card information of user equipment based on a C/S mode. The method specifically includes the following steps.

S901: An AP of user equipment sends a first setting command to a Modem of a relay device, where the first setting command is used to set the Modem of the relay device to a client mode.

S902: The AP of the user equipment sends a second setting command to a local Modem, where the second setting command is used to set the local Modem to a server mode.

The first setting command and the second setting command may be sent in a form of an attention (attention, AT) command. In addition, a sequence of S901 and S902 is not limited in this embodiment.

S903: The Modem of the relay device sends a SIM card information obtaining request to the AP of the user equipment.

S904: The AP of the user equipment converts the SIM card information obtaining request into a Modem-readable form.

S905: The AP of the user equipment sends converted SIM card information obtaining request to the local Modem.

S906: The Modem of the user equipment accesses a SIM card, and sends SIM card information to the local AP.

It should be noted that, in S906, the SIM card information sent by the Modem of the user equipment to the local AP is in an AP-readable form. Therefore, the AP of the user equipment needs to convert the information into the Modem-readable form, and then send converted information to the Modem of the relay device for processing.

S907: The AP of the user equipment converts the SIM card information into the Modem-readable form.

S908: The AP of the user equipment sends the Modem-readable SIM card information to the Modem of the relay device.

In the SIM card information, information such as OPC, an IMSI, an MSISDN, a PLMN, an ICCID, an IMPU, an IMPI, a P-CSCF, an FDN, an SMS, an SMSP, an FPLMN, an HPPLMN, an HPLMNwAcT, an HPLMNwAcT, an OPLMNwAcT, and a PLMNwAcT can be read by the relay device. Parameters such as a KI, an OP, and OPC cannot be read by the relay device. In a process of using the SIM card information for authentication, the relay device sends, to the user equipment, parameters such as a random number (random challenge, RAND) and an authentication token (authentication token, AUTN) delivered by the network side, so that the user equipment performs an authentication operation on the SIM card by using the OPC and the like, to generate information such as a response message (response, RES), a confidentiality key (confidentiality key, CK), and an integrity key (integrity key, IK), where the RES is read by the relay device and is sent to the network side device for verification.

In some embodiments, the relay device may read all SIM card information of the user equipment in a real-time reading mode, for example, the IMSI, the PLMN, encryption-related data, authentication data, contacts, and an SMS message.

In some other embodiments, the relay device may read the SIM card information of the user equipment in a form of a combination of the real-time reading mode and a pre-caching mode. In this embodiment, a type of data read by the relay device in real time includes authentication data, and pre-cached data includes an IMSI, a PLMN, encryption-related data, contacts, an SMS message, and the like. For the pre-cached data, when the relay device needs to use the data, the relay device directly reads the data locally, and therefore, a data reading speed is relatively high.

In SIM card information pre-cached by the relay device, parameters such as an IMSI, an MSISDN, a PLMN identity, encryption-related data, an authentication algorithm and parameter, an ICCID, an IMPU, an IMPI, DOMAIN, and a P-CSCF usually do not change. However, parameters such as an FDN, an SMS, an SMSP, an FPLMN, an HPPLMN, an HPLMNwAcT, an OPLMNwAcT, and a PLMNwAcT may be updated or may be modified by a user. Therefore, for the pre-cached data, the relay device may set different aging periods (also referred to as update periods) for different types of data. After the pre-cached data reaches the aging period, the relay device re-obtains corresponding data from the user equipment.

For example, aging periods of the IMPI and the IMPU may be set to an infinite value, and after being cached, the IMPI and the IMPU may not need to be updated. Aging periods of the SMS and the FDN are set to 60 minutes, and the SMS and the FDN are re-read from the SIM card of the user equipment every 60 minutes. Aging periods of the HPLMNwAcT, the OPLMNwAcT, the PLMNwAcT, and the FPLMN are set to 3 minutes, and the HPLMNwAcT, the OPLMNwAcT, the PLMNwAcT, and the FPLMN are re-read from the SIM card of the user equipment every 3 minutes. However, aging periods of the encryption-related data and the ICCID are set to 0, and the encryption-related data and the ICCID cannot be cached. Therefore, the relay device needs to read the encryption-related data and the ICCID from the user equipment in real time.

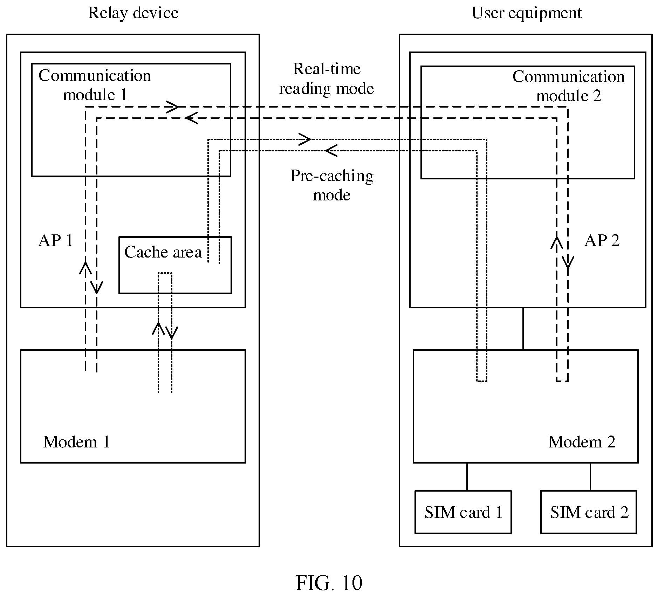

FIG. 10 is a schematic diagram 1 of a reading mode of SIM card information according to an embodiment of this application, where a real-time reading mode and a pre-caching mode of the SIM card information are shown. As shown in FIG. 10, a relay device includes a Modem 1 and an AP 1, and a cache area and a communication module 1 are disposed in the AP 1. User equipment includes a Modem 2, an AP 2, a SIM card 1, and a SIM card 2, and a communication module 2 is disposed in the AP 2. The communication module 1 and the communication module 2 may communicate with each other in a manner of Bluetooth, Wi-Fi, or a data service.

In the real-time reading mode, when the relay device reads SIM card information of the user equipment, the Modem 1 sends a SIM card information reading request to the communication module 2 via the communication module 1, and then the communication module 2 sends the SIM card information reading request to the Modem 2. In response to the SIM card information reading request, the Modem 2 reads the SIM card information from the corresponding SIM card, and sends the SIM card information to the communication module 1 via the communication module 2, and then the communication module 1 sends the SIM card information to the Modem 1.

In the pre-caching mode, after the relay device determines to provide a signal relay service for the user equipment, if the relay device supports a Mirror SIM function (namely, a function of mirroring a SIM card), the AP 1 generates a SIM card information obtaining request, and sends the SIM card information obtaining request to the Modem 2 via the communication module 1 and the communication module 2. In response to the SIM card information reading request, the Modem 2 reads the SIM card information from the corresponding SIM card, and sends the SIM card information to the communication module 1 via the communication module 2. After receiving the SIM card information, the communication module 1 stores the SIM card information in the cache area. When the Modem 1 needs to use cached data, the cached data is directly read from the cache area. In the pre-caching mode, the relay device may read a relatively large amount of data from the user equipment based on one request. Therefore, compared with that the relay device reads data in real time as required, that the relay device reads communication data in the pre-caching mode can reduce a quantity of times that the relay device accesses the SIM card of the user equipment.

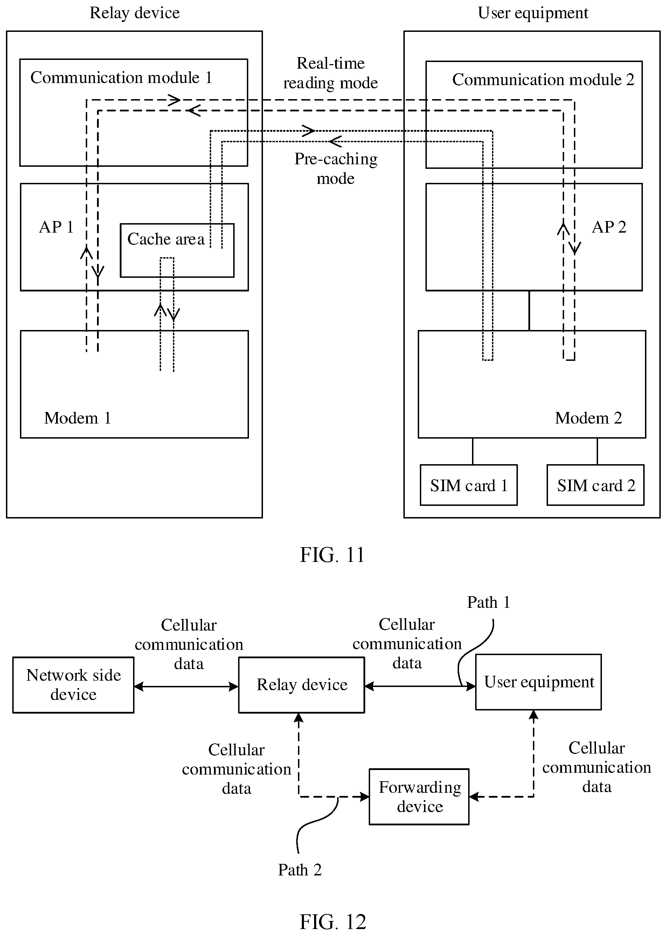

FIG. 11 is a schematic diagram 2 of a reading mode of SIM card information according to an embodiment of this application, where another real-time reading mode and another pre-caching mode of the SIM card information are shown. As shown in FIG. 11, a relay device includes a Modem 1, an AP 1, and a communication module 1, and user equipment includes a Modem 2, an AP 2, and a communication module 2. The communication module 1 and the communication module 2 may communicate with each other in a manner of Bluetooth, Wi-Fi, or a data service.

In the real-time reading mode, when the relay device has a request to read SIM card information of the user equipment, the Modem 1 sends a SIM card information reading request to the Modem 2 sequentially via the AP 1, the communication module 1, the communication module 2, and the AP 2. In response to the SIM card information reading request, the Modem 2 reads the SIM card information from the corresponding SIM card, and sends the SIM card information to the Modem 1 sequentially via the AP 2, the communication module 2, the communication module 1, and the AP 1.

In the pre-caching mode, after the relay device determines to provide a relay service for the user equipment, if the relay device supports a Mirror SIM function (namely, a function of mirroring a SIM card), the AP 1 generates a SIM card information obtaining request, and sends the SIM card information obtaining request to the Modem 2 via the communication module 1, the communication module 2, and the AP 2. In response to the SIM card information reading request, the Modem 2 reads the SIM card information from the corresponding SIM card, and sends the SIM card information to the AP 1 sequentially via the AP 2, the communication module 2, and the communication module 1. After receiving the SIM card information, the AP 1 stores the SIM card information in a local cache area. When the Modem 1 needs to use cached data, the cached data is directly read from the cache area. By reading communication data in the pre-caching mode, a quantity of times that the relay device accesses the user equipment to obtain the SIM card can be reduced.

In addition, in FIG. 11, the communication module 1 of the relay device may be alternatively disposed on the Modem 1, and the communication module 2 of the user equipment may be alternatively disposed on the Modem 2.

To enable the relay device to read the SIM card information from the user equipment, the relay device and the user equipment need to support a specific data access protocol, for example, a remote SIM card access profile (remote SIM access profile, rSAP) or a virtual SIM (virtual SIM, VSIM) access protocol.

In some embodiments, the relay device may access the SIM card of the user equipment based on the rSAP. The rSAP includes two parts: a client rSAP (rSAP-c) and a server rSAP (rSAP-s). The Modem of the relay device needs to support the rSAP-c, and the Modem of the user equipment needs to support the rSAP-s. The relay device and the user equipment are interconnected in a mode of the rSAP-c and the rSAP-s.

In some other embodiments, the relay device does not support the rSAP-c, but supports the VSIM access protocol, and the user equipment supports the rSAP-s. In this case, when the relay device supports a function of mutual conversion between the VSIM access protocol and the rSAP-c, in a process of reading the SIM card information, the relay device may convert a VSIM protocol message into an rSAP-c message, to help send the rSAP-c message to the user equipment. In addition, the relay device may convert the received rSAP-c message into the VSIM protocol message, to implement an interconnection between the relay device and the user equipment in a mode of the rSAP-s and the VSIM.

After obtaining the SIM card information of the user equipment, the relay device may access a cellular network by using an IMSI in the SIM card information as an identity, report tracking area update (tracking area updating, TAU) information of the relay device to a network side device at a preset interval, and establish a connection to the network side device.

In addition, optionally, after the relay device successfully accesses the cellular network by using the SIM card information of the user equipment, a corresponding signal strength indication icon on the relay device may be highlighted, for example, the signal strength indication icon is displayed in red.

After establishing the connection to the network side device by using the SIM card information of the user equipment, the relay device may perform relay communication on cellular communication data between the network side device and the user equipment. The details are as follows:

FIG. 12 is a schematic diagram of a data transmission path in a signal relay communication process according to an embodiment of this application. A relay device relays cellular communication data between a network side device and user equipment.

In some embodiments, refer to a path 1 in FIG. 12. The relay device directly communicates with the user equipment. Specifically, the user equipment sends uplink cellular communication data to the relay device, and the relay device sends the uplink cellular communication data to the network side device. The network side device sends downlink cellular communication data to the relay device, and then the relay device directly sends the downlink cellular communication data to the user equipment.

In some other embodiments, refer to a path 2 in FIG. 12. When quality of a communication link between the relay device and the user equipment is poor or a communication link cannot be established, the relay device and the user equipment may communicate with each other by using at least one forwarding device. Specifically, the user equipment may send the uplink cellular communication data to the relay device by using the forwarding device, and then the relay device sends the uplink cellular communication data to the network side device. The network side device may send the downlink cellular communication data to the relay device, and then the relay device sends the downlink cellular communication data to the user equipment by using the forwarding device.

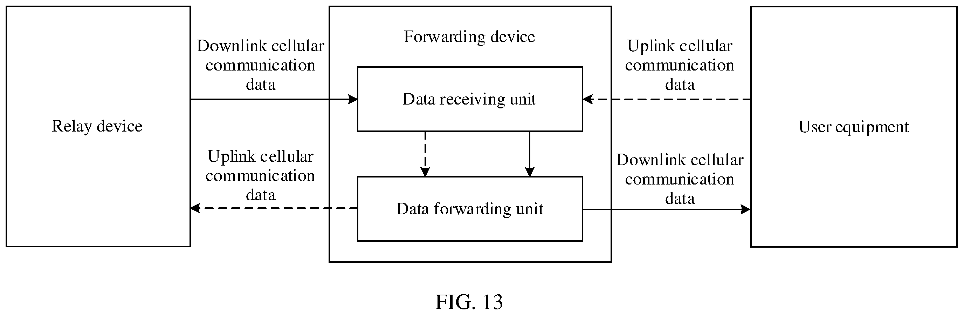

In this embodiment, for a process in which the forwarding device forwards the cellular communication data, refer to FIG. 13. A data receiving unit and a data forwarding unit are disposed in the forwarding device. The data receiving unit is configured to receive the downlink cellular communication data sent by the relay device and the uplink cellular communication data sent by the user equipment, and send the downlink cellular communication data and the uplink cellular communication data to the data forwarding unit. The data forwarding unit is configured to send the downlink cellular communication data to the user equipment, and send the uplink cellular communication data to the relay device.

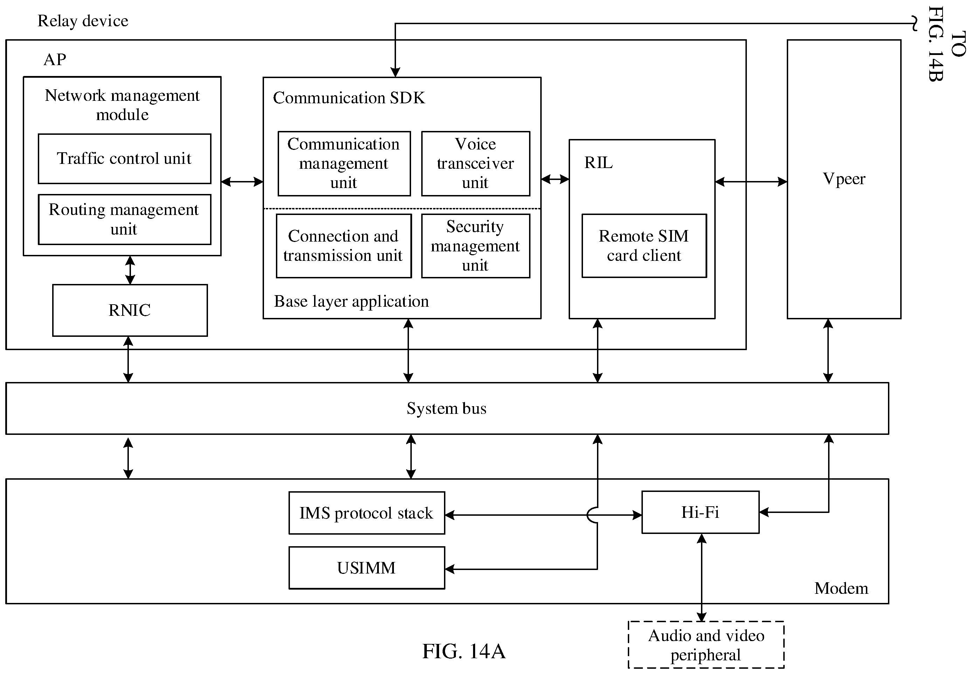

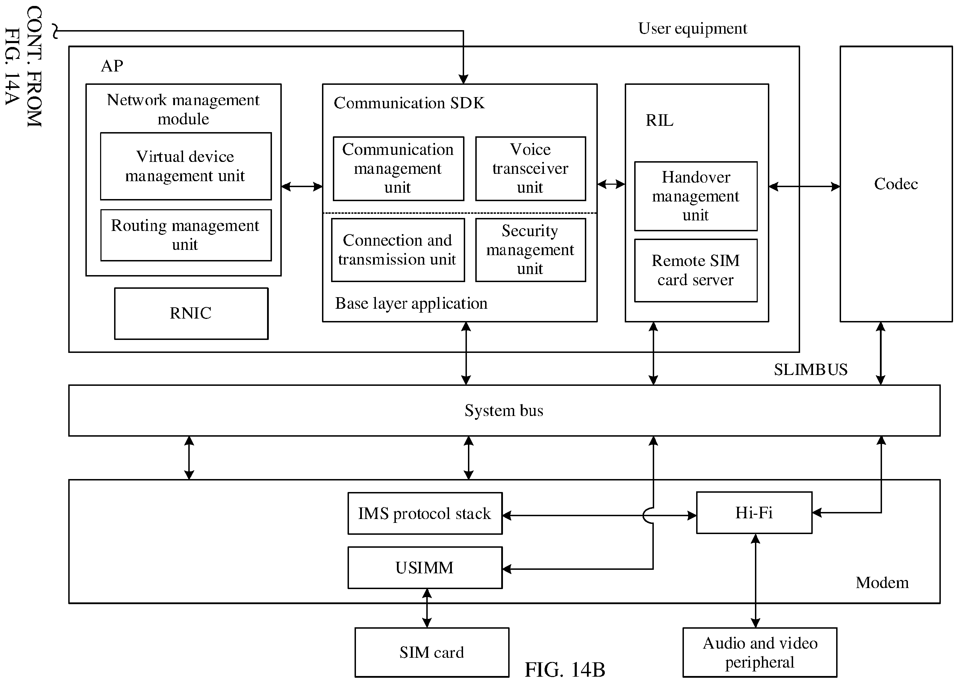

FIG. 14A and FIG. 14B are a schematic diagram of a principle of signal relay communication according to an embodiment of this application. Refer to FIG. 14A and FIG. 14B. A relay device includes an application processor, a voice peer (voice peer, Vpeer) module, a system bus, and a Modem. In addition, the relay device may include or may not include an audio and video peripheral.

The application processor includes a network management module, a communication software development kit (software development kit, SDK), a radio interface layer (radio interface layer, RIL), and a remote direct memory access (remote direct memory access, RDMA)-aware network interface controller (RDMA-aware network interface controller, RNIC). The network management module includes a traffic control unit and a routing management unit. The traffic control unit is configured to manage cellular data traffic, for example, to collect statistics on used traffic. The routing management unit is configured to manage a data transmission path. The RNIC is responsible for generating an RDMA data packet and receiving an input RDMA data packet, to eliminate a redundant memory copy operation in a conventional operation, so that network interface controller data of the AP/Modem is quickly migrated. The communication SDK includes a communication management unit, a voice transceiver unit, a connection and transmission unit, and a security management unit. The communication management unit is configured to manage a communication service, and send, to user equipment, downlink cellular communication data received from a network side device. The voice transceiver unit is configured to receive or send signal relay communication data. The connection and transmission unit is configured to manage establishment of a connection to the user equipment and data transmission. The security management unit is configured to perform authentication in a process of establishing a signal relay connection, and encrypt and decrypt related data in a signal relay communication process. The RIL is an interface layer configured to interact with the Modem. In the user equipment, the RIL is set to a client mode of a remote SIM card. The Vpeer is configured to process and transmit voice data.

The bus system may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

The Modem includes an IMS protocol stack, a Hi-Fi module, and a simulated memory module (the utah simulated memory module, USIMM). The IMS protocol stack is a protocol stack for calls such as VoLTE and VoNR, and is used to complete signaling interaction and media negotiation with an IMS core network. The Hi-Fi module is used to encode and decode voice packets, and perform 3A algorithm processing and the like. The USIMM is used to manage read and write operations on a SIM card.

The audio and video peripheral includes a speaker, a receiver, a microphone, a camera, a screen, and the like. The speaker is also referred to as a "loudspeaker", and is configured to convert an electrical audio signal into a sound signal. An electronic device may be configured to listen to music or answer a hands-free call by using the speaker. The receiver is also referred to as an "earpiece", and is configured to convert an electrical audio signal into a sound signal. When a call is answered or voice information is received by using an electronic device, the receiver may be put close to a human ear to listen to a voice. The microphone is also referred to as a "mike" or a "mic", and is configured to convert a sound signal into an electrical signal. When making a call or sending voice information, a user may place the mouth of the user near the microphone to make a sound, to input a sound signal to the microphone. The camera is configured to capture a static image or a video. The screen is configured to display a static image or a video.

The user equipment includes an application processor, a code-decoder (coder-decoder, Codec), a system bus, a Modem, a SIM card, and an audio and video peripheral. For specific content of the system bus, the Modem, and the audio and video peripheral, refer to the foregoing description. Details are not described in this embodiment.

The application processor of the user equipment also includes a network management module, a communication SDK, an RNIC, and an RIL. However, unlike that of the relay device, the network management module of the user equipment includes a virtual device management unit. The virtual device management unit is configured to manage a virtual device, namely, the relay device, in a signal relay communication process. The RIL includes a handover management unit configured to manage mapping between the RIL and the Modem. In addition, the RIL is further set to a remote SIM card server, and is configured to obtain SIM card information from a SIM card and send the SIM card information to the relay device.

The Codec is a processing chip configured to perform A/D and D/A conversion on audio signals. The A/D conversion is an encoding process of converting an analog signal (Analog) that can be heard by human ears into a digital signal (Digital) that can be processed by a computer. The D/A conversion is a decoding process of converting a processed digital signal into an analog signal that can be heard by human ears. In this embodiment, the Codec and the system bus are connected through a serial low-power inter-chip media bus (Serial Low-power Inter-chip Media Bus, SLIMBUS). The SLIMBUS is an audio interface specified by the mobile industry processor interface (mobile industry processor interface, MIPI) alliance, and is used to connect baseband/application processors and audio chips. A bus protocol ensures that both control information and data information can be sent.

In the signal relay communication process, related communication data includes control signaling and media data (for example, a call data packet). The following separately describes processes of transmitting the control signaling and the media data between the relay device and the user equipment.

A call is used as an example. For the control signaling, after the user equipment obtains a call control command entered by a user, the user equipment sends the call control command to a local communication SDK module via an RIL module, and the local communication SDK module sends the call control command to the communication SDK module of the relay device. The communication SDK of the relay device invokes the RIL interface and drives the Modem to execute the control command. In this embodiment, the call control command includes a call dialing command, a call hang-up command, a call query command, and the like.

After receiving an incoming call notification from the network side device, the relay device invokes the communication management module of the communication SDK through the local RIL interface, and sends the incoming call notification to the communication SDK module of the user equipment via the communication management module. After receiving the incoming call notification, the communication SDK module of the user equipment invokes the RIL interface to notify the incoming call and reports the incoming call to an application framework layer of the AP, so that the user equipment displays an incoming call interface.

For the media data, after a call is answered, the Modem of the relay device receives a downlink cellular communication data packet from the network side device, and the communication SDK module of the relay device obtains the downlink cellular communication data packet from the Modem, and sends the data packet to the communication SDK module of the user equipment. The communication SDK module of the user equipment invokes, by using the RIL interface, the local audio and video peripheral to play related content carried in a downlink call data packet. In addition, after the user equipment collects an uplink call data packet, the local communication SDK sends the uplink call data packet to the communication SDK module of the relay device, the communication SDK module of the relay device transmits the uplink call data packet to the Modem, and the Modem sends the uplink call data packet to the network side device through an air interface.

In addition, for a cellular communication service such as an internet access service or an SMS message service, a transmission path of control signaling of the cellular communication service is the same as a transmission path of the control signaling in the foregoing call process. For application data generated in a running process of the user equipment, the user equipment first marks the application data to distinguish different types of application data, and then sends the marked data to a corresponding device or component. For example, the application data is marked as cellular service data and non-cellular service data. The cellular service data is sent to the relay device, and the non-cellular service data is sent to a Wi-Fi network interface controller.

The following describes an example of a communication method provided in embodiments of this application based on specific service scenarios.

### Scenario 1: Near-field signal relay

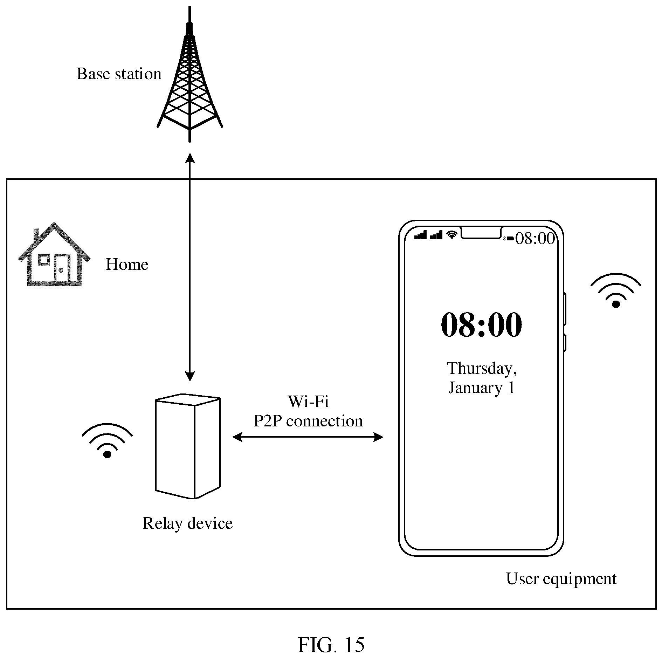

At home, due to signal blocking or other reasons, a cellular signal in a balcony is relatively good, but a cellular signal in a bedroom or basement is relatively poor. When a user makes a call or accesses the internet in the bedroom or the basement, communication quality may be abnormal, and consequently user experience is poor. Based on this, refer to FIG. 15. A relay device (for example, CPE or another mobile phone) may be placed in a place (for example, the balcony) with a relatively good cellular signal at home. User equipment and the relay device may be connected to the relay device by using a near field communication technology, and the user equipment uses the relay device to implement cellular signal relay and access a cellular network. The near field communication technology may be a communication technology such as a Wi-Fi local area network, Wi-Fi P2P, Bluetooth, or NFC.

According to the method provided in this embodiment, when the user is at home, even if the user makes a call in the bedroom or the basement, a smooth call can be ensured, and the user does not need to move to the balcony to answer the call. For an SMS message service scenario or the like, a sending and receiving rate of an SMS message can be improved, and a delay of arriving at the user equipment by the SMS message can be reduced. For an internet access service scenario or the like, a web page refresh rate can be improved.

### Scenario 2: Far-field signal relay

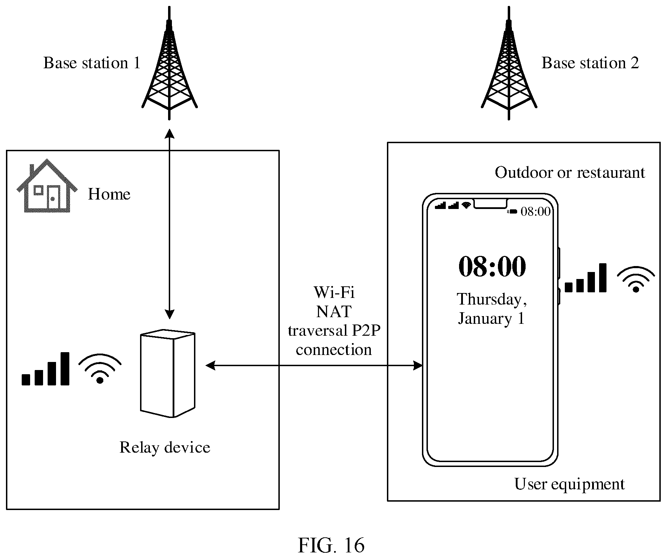

When a user is in a place such as an outdoor place, a restaurant, or a shopping mall, a cellular signal strength of user equipment may be relatively poor due to a lack of cellular signal coverage, building blocking, or other reasons. In this case, refer to FIG. 16. If the user has a relay device at home, and the relay device is connected to Wi-Fi or has enabled cellular data, the user equipment may establish a connection to the relay device by using a far field communication technology, and access a cellular network by using the relay device. The far field communication technology includes a P2P connection based on Wi-Fi or a data service, a server relay connection based on Wi-Fi or a data service, or the like.

When the relay device is connected to the user equipment by using the Wi-Fi P2P connection, because the two electronic devices are respectively located in different gateways, the two electronic devices cannot directly access each other based on an IP address of each other. In this case, the electronic device may translate, by using a network address translation (Network Address Translation, NAT) technology, an IP address and a port number of the electronic device into an IP address and a port number that can be accessed by the other electronic device, so that the two electronic devices can be successfully connected.

According to the method provided in this embodiment, when the user is in a restaurant or a shopping mall, the user does not need to move to an open area to answer a call. For an SMS message service scenario or the like, a sending and receiving rate of an SMS message can be improved, and a delay of arriving at the user equipment by the SMS message can be reduced. For an internet access service scenario or the like, a web page refresh rate can be improved.

### Scenario 3: Power consumption transfer and power saving

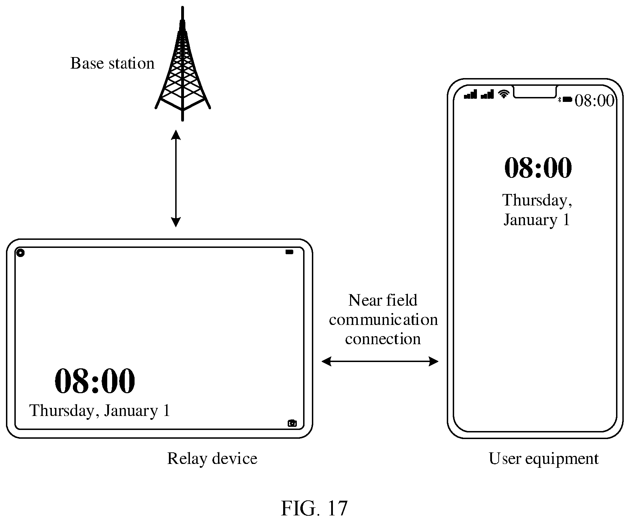

In daily life, a scenario in which a battery level of user equipment is low (for example, a battery level is lower than 20%) and the user equipment is inconvenient to be charged is often encountered. In this case, refer to FIG. 17. If a user or a relative or friend around the user carries another electronic device (such as a tablet computer, a mobile phone, or a notebook computer) having a cellular communication function, the user equipment uses the another electronic device as a relay device, and accesses a cellular network by using the relay device.

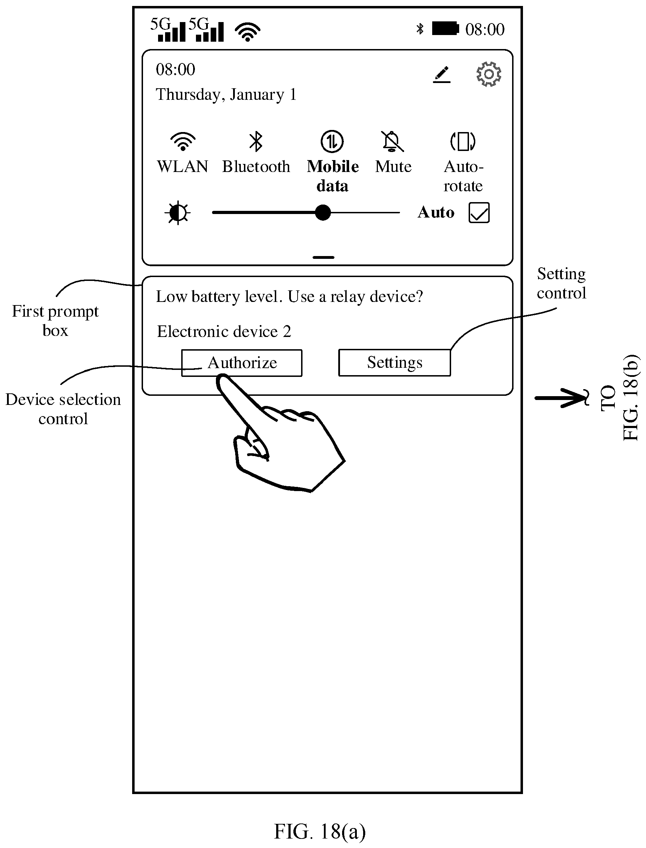

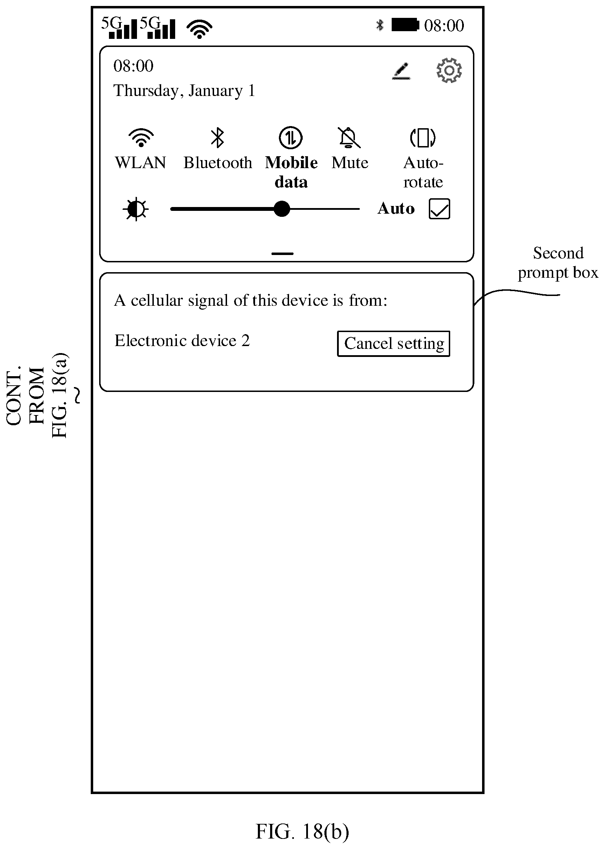

Optionally, when the battery level of the user equipment is lower than a preset value, if the relay device is detected by the user equipment, the user equipment may display a first prompt box to prompt the user to use the relay device. The prompt box may include prompt information indicating that a relay device is found, a device selection control for selecting a relay device, a setting control, and the like. For example, refer to FIG. 18(a). The prompt information in the first prompt box may be "Low battery level. Use a relay device? Electronic device 2". The device selection control is an "Authorize" icon, and is used to select the electronic device 2 as the relay device. The setting control may be a "Settings" icon, and is used to further set the electronic device 2. In response to an operation performed by the user on the "Authorize" icon, the user equipment uses the electronic device 2 as the relay device, and displays a second prompt box shown in FIG. 18(b). The second prompt box includes prompt information "A cellular signal of this device is from: Electronic device 2" and a "Cancel setting" icon that is used to cancel use of the electronic device 2 as the relay device.

In a process in which the user equipment accesses the cellular network by using the relay device, the relay device camps on the network and is in a standby state, so that not only power of the user equipment can be saved, but also a cellular communication service can be normally processed, and no call or SMS message is missed.

Alternatively, the user equipment may also set, in an interface shown in FIG. 4(f), a service processing mode of current relay communication as "Relay device only", and transfer the cellular communication service to the relay device for processing, to further save power of the user equipment.

In addition, in some embodiments, to ensure call quality of the user equipment, in the interface shown in FIG. 4(f), a network camping mode of the signal relay may be set to a full mode, so that the relay device fully camps on the network based on the network camping mode of the relay device. Alternatively, to help the user process the cellular communication service, the service processing mode of the signal relay may be set to "Simultaneous processing", that is, both the user equipment and the relay device can process the signal relay. Alternatively, to reduce a traffic loss of the relay device, the traffic sharing may be disabled.

In some embodiments of Scenario 1, Scenario 2, and Scenario 3, a service processing mode in a signal relay process is a "User equipment only" mode. The relay device serves as an intermediate device to forward data between the user equipment and a network side device, and an actual processing device of the cellular communication service is the user equipment. The following describes a process in which the user equipment serves as a service processing device to process the cellular communication service.

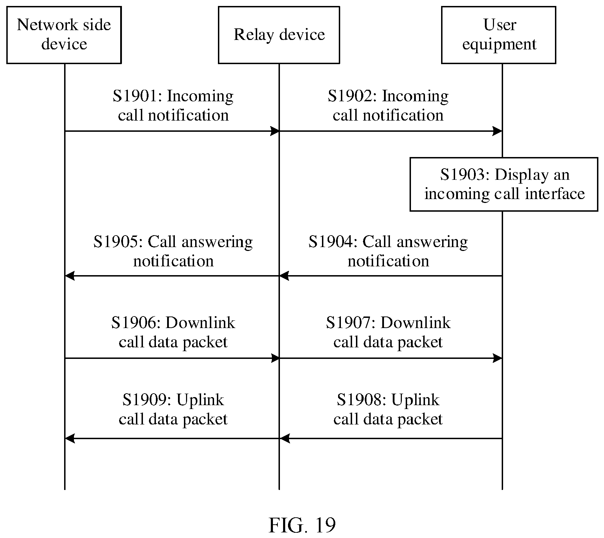

Refer to FIG. 19. FIG. 19 shows a process in which user equipment serves as a service processing device to answer a call. The method specifically includes the following steps S1901 to S1909.

S1901: A network side device sends an incoming call notification to a relay device.

S1902: The relay device sends the incoming call notification to the user equipment.

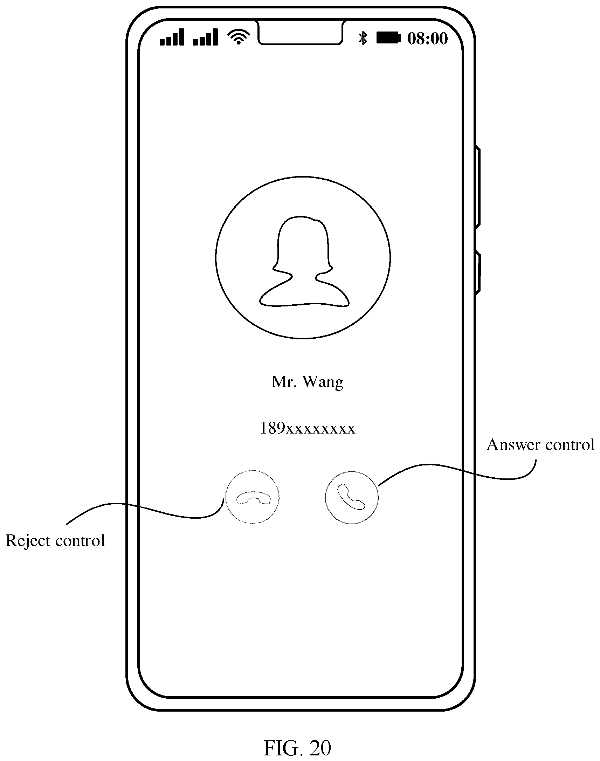

S1903: After receiving the incoming call notification, the user equipment displays an incoming call interface. Refer to FIG. 20. The incoming call interface includes a user image, an incoming call number, an answer control, a reject control, and the like.

S1904: The user equipment sends a call answering notification to the relay device in response to an operation performed by a user on the answer control.

S1905: The relay device sends the call answering notification to the network side device.

S1906: The network side device sends a downlink call data packet to the relay device.

S1907: The relay device sends the downlink call data packet to the user equipment.

S1908: The user equipment sends an uplink call data packet to the relay device.

S1909: The relay device sends the uplink call data packet to the network side device.

According to the foregoing steps S1901 to S1909, in the relay mode, the user equipment can not only access the network side device by using the cellular signal of the relay device to improve call quality, but also can answer a call locally to have better user experience.

Scenario 4: Separate a SIM card from CPE and move the SIM card from the outdoor to the indoor

Generally, when an indoor cellular signal is poor, to improve smoothness of internet access of a user indoors, the user may place one piece of CPE outdoors, and use the CPE as a Wi-Fi hotspot to provide an internet access service for user equipment. When a SIM card is installed on the CPE, after the user equipment is connected to the CPE, the user equipment may use traffic of the SIM card on the CPE to indirectly access a cellular network by using the CPE. However, there is a type of CPE whose SIM card is exposed on an outer surface of a housing of the CPE. When this type of CPE is placed outdoors, there is not only a risk that a base material of the SIM card is melted because the SIM card on the surface of the CPE is often exposed to sunlight, but also a risk of being stolen. In addition, the SIM card on the CPE usually needs to be installed and fixed by using screws. For the CPE that has been installed outdoors, it is very inconvenient to detach the SIM card.

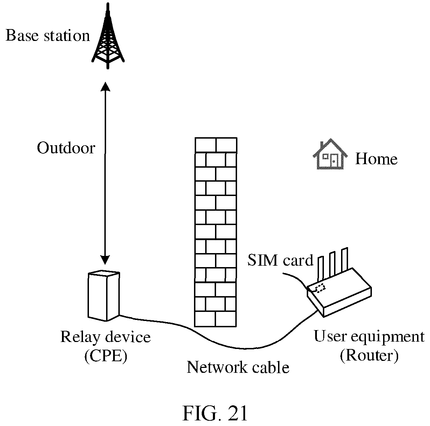

Therefore, refer to FIG. 21. The user may install a SIM card on a router at home, and connect the router (the user equipment) and the CPE (the relay device) through a network cable, so that the CPE reads SIM card information from the router through the network cable, and accesses the cellular network based on the SIM card information. For a SIM card reading manner, refer to the foregoing description. Details are not described in this embodiment. In addition, for a manner in which the CPE accesses the cellular network based on the SIM card information, refer to the existing CPE. Details are not described in this embodiment.

According to the method provided in this embodiment, a SIM card on outdoor CPE may be transferred to an indoor device, to avoid the risk that the SIM card is stolen or is damaged due to sunlight. In addition, compared with detachment and installment of a SIM card of outdoor CPE, detachment and installment of a SIM card of an indoor router are more convenient.

Scenario 5: CPE serves as a Wi-Fi hotspot in a scenario in which no SIM card is installed on the CPE

It can be learned from the foregoing description that currently, a SIM card configured with traffic usually needs to be installed on the CPE to provide an internet access service for user equipment. Therefore, in general, to maintain normal running of the CPE, a user needs to maintain an additional SIM card for the CPE, and pay corresponding fees each month, which consumes user's energy.

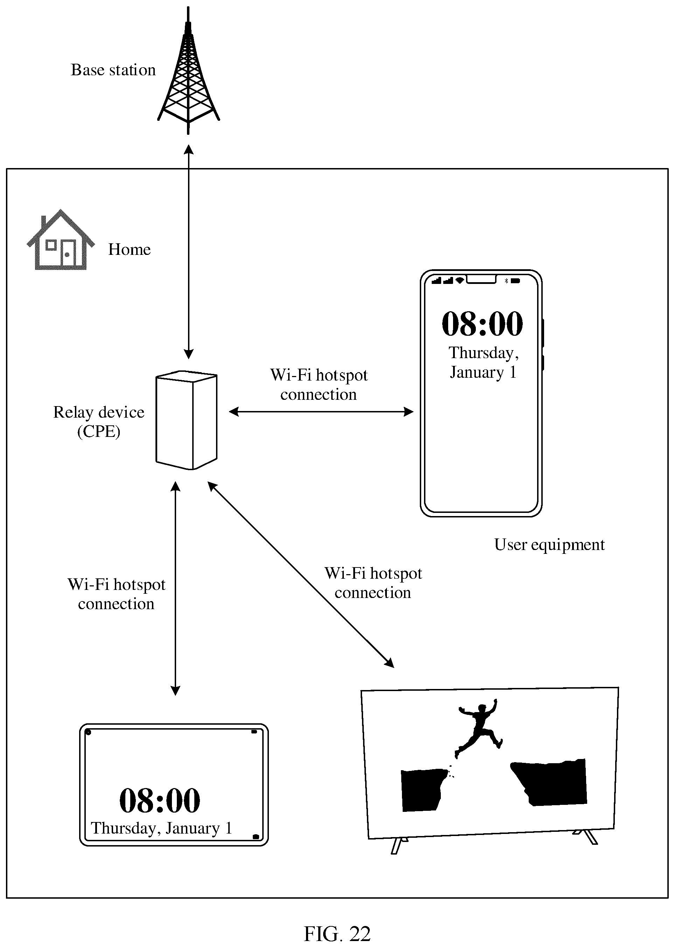

Therefore, refer to FIG. 22. The CPE may not be installed with a SIM card, but establishes a connection to the user equipment (such as a mobile phone) by using a Wi-Fi hotspot, accesses SIM card information of the user equipment by using a Remote SIM technology, and registers and accesses a cellular network by using the SIM card information of the user equipment. When the user equipment enables traffic sharing, in a process in which another electronic device accesses the internet by using the CPE, traffic of a SIM card of the user equipment is actually consumed. According to the method provided in this embodiment, the user does not need to maintain an additional SIM card for the CPE, which saves user's energy.

Optionally, the user equipment may set a network camping mode of the relay device to the full mode in the interface shown in FIG. 4(f), so that the CPE camps on a network fully based on a network camping mode of the CPE, to improve communication quality. The user equipment may alternatively set a service processing mode to "User equipment only", so that a cellular communication service is processed by the user equipment.

In additional, compared with a case in which a mobile phone is directly used as a Wi-Fi hotspot for another indoor electronic device to use, this case can reduce power consumption of the mobile phone and the user can be prevented from frequently charging the mobile phone.

Scenario 6: No call is missed when a mobile phone is left at home.

In daily life, a user may forget or is inconvenient to carry a mobile phone when going out. In this case, if the user wants to answer an incoming call of the mobile phone or make a call by using a number of the mobile phone, the user may use another electronic device as a relay device of the mobile phone to access a network side device and as a proxy of user equipment to process a cellular communication service. In other words, after obtaining SIM card information of the user equipment, the relay device replaces the user equipment to access the cellular network and process the cellular communication service.

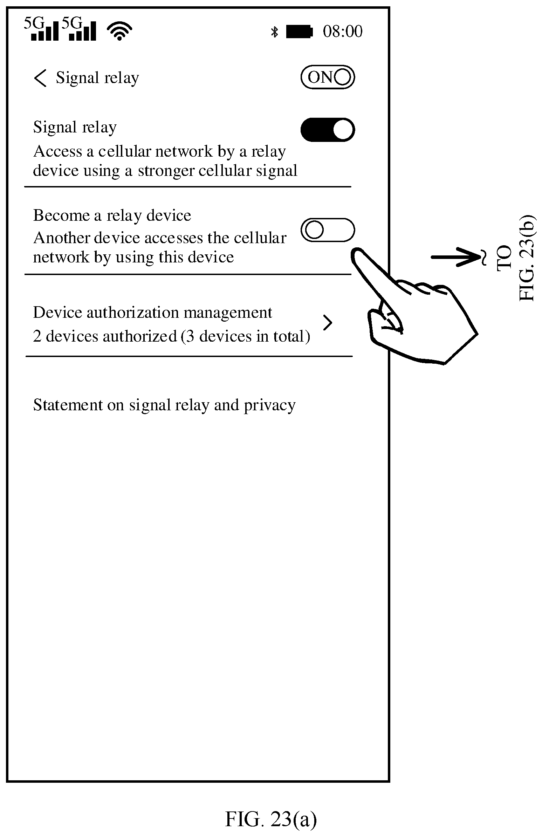

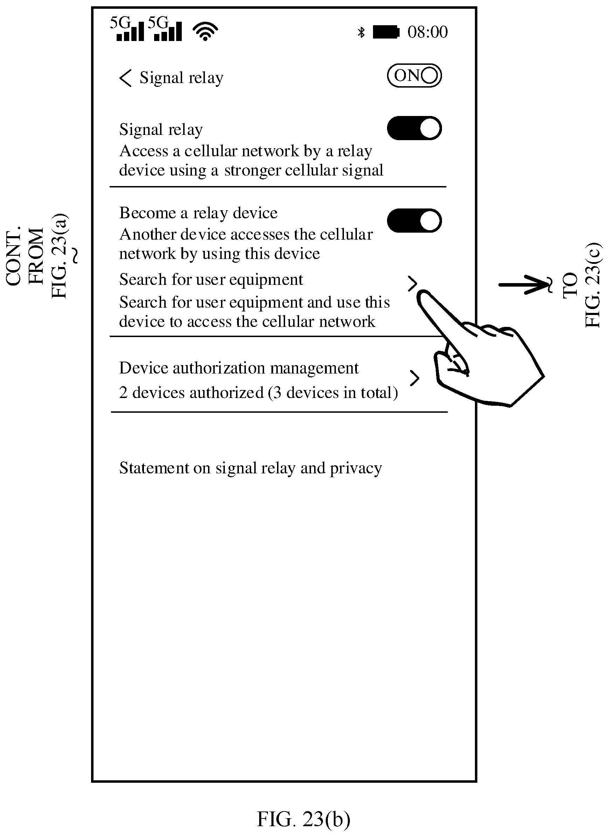

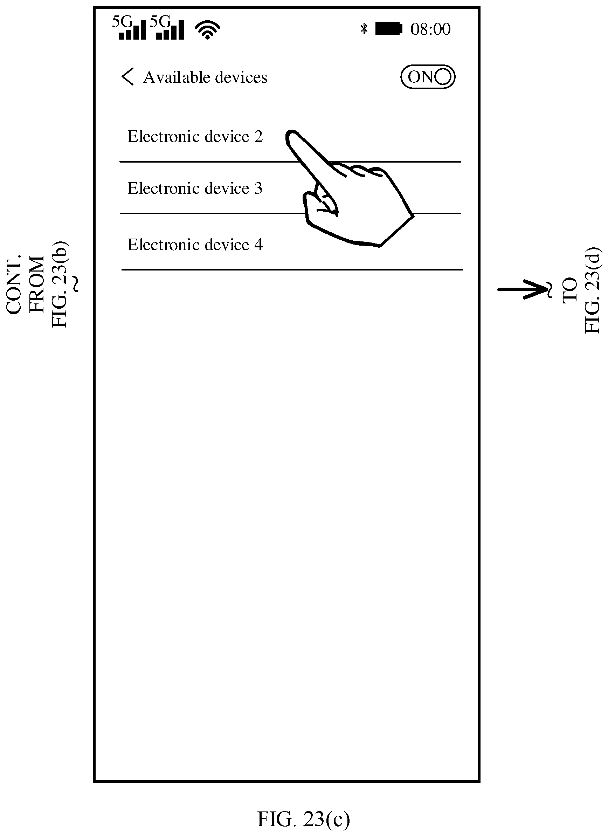

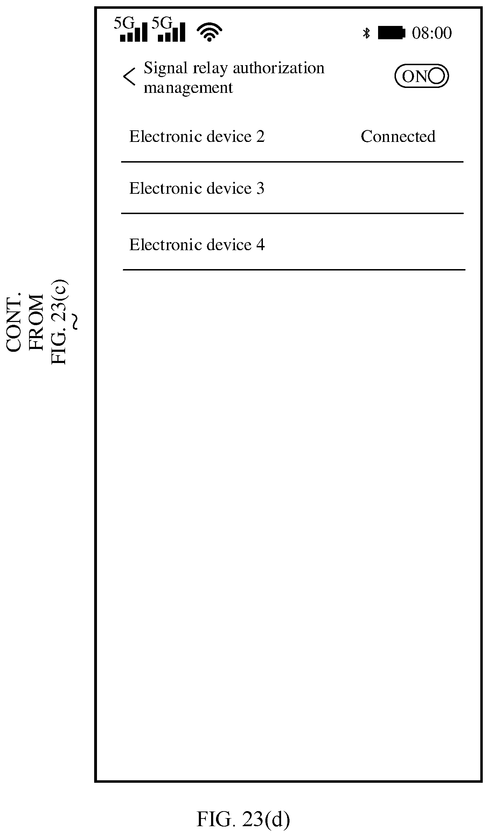

FIG. 23(a) to FIG. 23(d) are a schematic diagram of a process of selecting user equipment on a relay device according to an embodiment of this application, and relates to a process in which the relay device searches for and determines the user equipment based on a user instruction. Refer to FIG. 23(a). For an electronic device, in a signal relay interface, in response to an operation of the user to turn on a "Become a relay device" on/off item, the electronic device becomes the relay device. After becoming the relay device, the electronic device may start to broadcast the first notification message described above, so that another electronic device finds the relay device. In addition, refer to FIG. 23(b). The relay device may also display a "Search for user equipment" option below the "Become a relay device" on/off item, to actively search for available user equipment (available device for short) according to the user instruction. In response to an operation of the user on the "Search for user equipment" option, the user equipment displays an available device interface shown in FIG. 23(c). The interface includes available devices for the relay device, for example, an electronic device 2, an electronic device 3, and an electronic device 4. In response to an operation of selecting user equipment (for example, the electronic device 2) by the user, Refer to FIG. 23(d). The relay device establishes a connection to the electronic device 2, and replaces the electronic device 2 to process a cellular communication service. In the scenario provided in this embodiment, the relay device and the user equipment may be connected by using a cloud server based on Wi-Fi or a cellular data service, or may be connected through P2P based on Wi-Fi or a cellular data service.

In the foregoing process, optionally, the relay device may search for a proxied device (namely, the user equipment) by using the cloud server. Specifically, some users may have a plurality of electronic devices at the same time, for example, a mobile phone, a smartwatch, and a tablet computer. Each electronic device establishes a connection to the corresponding cloud server by logging in to a device account. If these electronic devices log in to a same device account, the cloud server considers that these electronic devices belong to a same user. For the electronic devices of the same user, the cloud server may share data among the electronic devices. Based on this, when detecting that the user operates the "Search for user equipment" option, the relay device may query, by using the cloud server, another electronic device that belongs to the same user as the relay device, for example, the electronic device 2, the electronic device 3, and the electronic device 4.

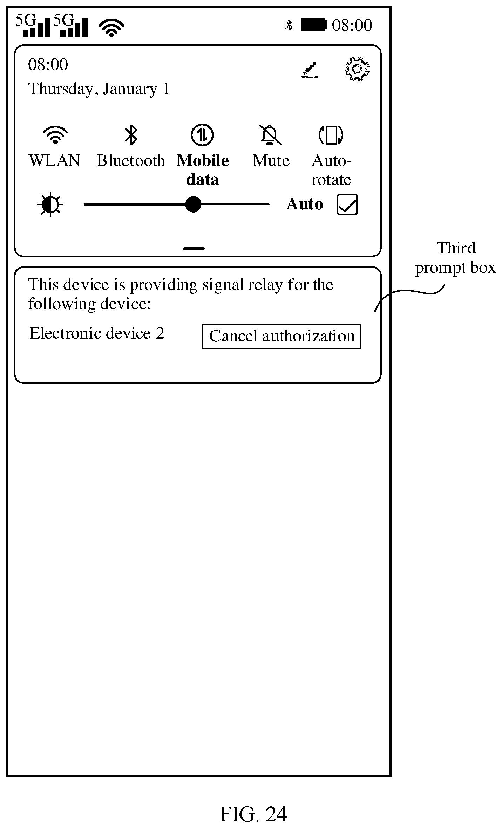

After establishing a connection to the user equipment, the relay device may access the SIM card information of the user equipment, access the network side device based on the SIM card information, and serves as a proxy device of the user equipment to process the cellular communication service. In this case, the relay device may display a third prompt box, to prompt the user that the relay device is currently providing a signal relay service for another electronic device. For example, refer to FIG. 24. The third prompt box includes prompt information and a cancel control. For example, the prompt information may be "This device is providing a signal relay service for the following device: Electronic device 2". The cancel control may be a "Cancel authorization" icon, and is used to cancel the signal relay service currently provided by the relay device.

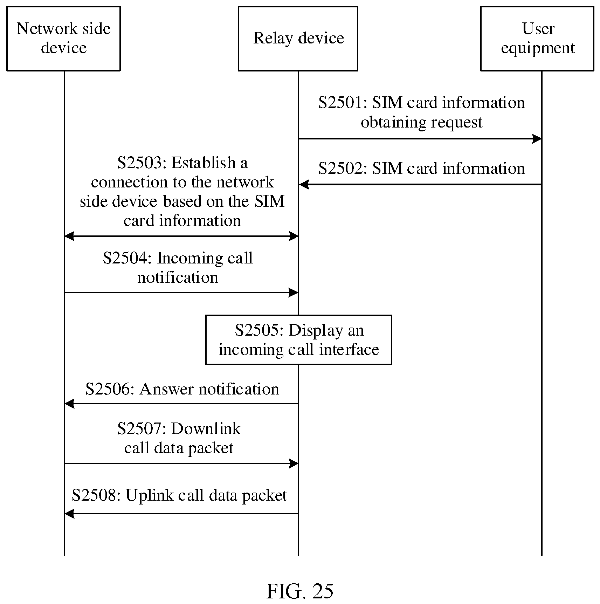

FIG. 25 is a flowchart of a communication method based on a relay device according to an embodiment of this application. In this embodiment, a service processing mode of signal relay is set to "Relay device only", which relates to a process in which the relay device uses SIM card information of user equipment to access a network side device and process a cellular communication service of the user equipment.

S2501: The relay device sends a SIM card information obtaining request to the user equipment. In this embodiment, the relay device may send the SIM card information obtaining request to the user equipment by using a cloud server, or may send the SIM card information obtaining request to the user equipment through a Wi-Fi/cellular service data P2P link between the relay device and the user equipment.

S2502: The user equipment receives SIM card information sent by the relay device. In this embodiment, the user equipment may send the SIM card information to the relay device by using the cloud server, or may send the SIM card information to the user equipment through the Wi-Fi/cellular service data P2P link between the relay device and the user equipment.

S2503: The relay device establishes a connection to the network side device based on the SIM card information.

S2504: The network side device sends an incoming call notification to the relay device.

S2505: The relay device locally displays an incoming call interface based on the incoming call notification.

S2506: The relay device sends an answer notification to the network side device in response to an answer operation of a user.

S2507: The network side device sends a downlink call data packet to the relay device, and plays a downlink call voice/video based on the downlink call data packet.

S2508: The relay device collects an uplink voice/video, forms an uplink call data packet based on the uplink voice/video, and sends the uplink call data packet to the network side device.

It should be noted that for a call such as a VoLTE call or a VoNR call, the relay device needs to have an IMS protocol stack and a voice codec capability. Based on this, only after receiving a downlink call data packet in an RTP form, the relay device can parse the downlink call data packet into a PCM code stream and play the PCM code stream locally. In addition, a PCM code stream of uplink voice data is collected, and is directly converted into an uplink call data packet in the RTP form; or a PCM code stream is encoded, and then is converted into an uplink call data packet in the RTP form. In addition, for calls such as a CS call and a CS fallback call, the relay device needs to have a CS protocol stack and the voice codec capability. For example, the relay device may be a mobile phone, a tablet computer, a smartwatch, or the like.

In addition, in some other embodiments, the user may further use the SIM card information of the user equipment to make a call, receive and send an SMS message, access the internet, and the like on the relay device.

According to the communication method provided in this embodiment of this application, when the user does not carry the user equipment after going out, the user may use another electronic device to obtain the SIM card information of the user equipment, and use the another electronic device as a proxy device of the user equipment to access the cellular network and process cellular communication services such as a call, an SMS message, and internet access, to avoid missing of a call and provide better user experience.

Scenario 7: No call from a mobile phone is missed when a user wears a smartwatch and runs outdoors.

Because the mobile phone is relatively large in size and is inconvenient to carry, the user usually does not carry the mobile phone in a movement process (for example, when running outdoors), but chooses to wear the smartwatch. To avoid missing of the call from the mobile phone in the movement process, the user may transfer the call from the mobile phone to the smartwatch in advance in a call transfer manner. However, there are problems during call transfer that a delay (generally about 30s) is relatively long, the user cannot use a number of the mobile phone to make a call on the smartwatch, a carrier needs to charge a transfer fee from a transfer party (namely, the user of the mobile phone) of the call transfer, and the like, and therefore, user experience is poor.

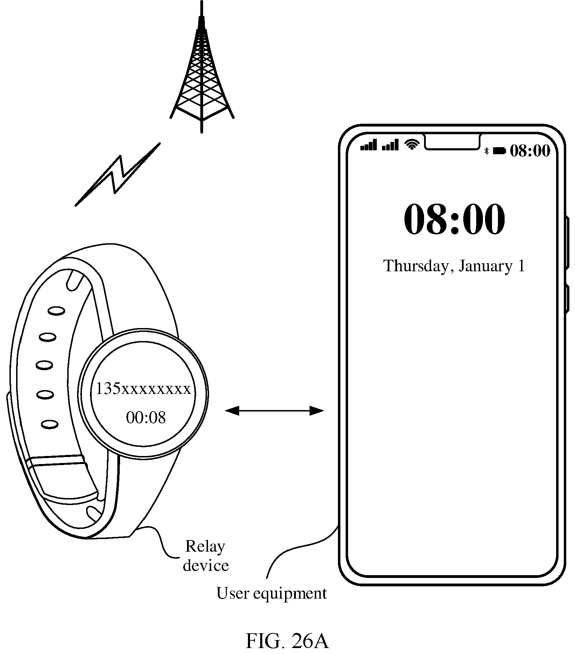

Therefore, refer to FIG. 26A. A user may use a mobile phone as user equipment, and use a smartwatch as a relay device, so that the smartwatch replaces the mobile phone to access a cellular network and process a cellular communication service. In this embodiment, when a SIM card is installed on the smartwatch, the smartwatch may establish a connection to the mobile phone by using a cellular data service. Alternatively, the smartwatch may be connected to the mobile phone in a manner such as a Wi-Fi connection or Bluetooth. Alternatively, the smartwatch may be connected to the electronic device 1 through Bluetooth, and then connected to the mobile phone through Wi-Fi of the electronic device 1.

In addition, many mobile phones support two SIM cards, such as a SIM card 1 and a SIM card 2. For the foregoing scenario in which the user forgets or is inconvenient to carry the user equipment such as the mobile phone, when the smartwatch has replaced the mobile phone to access the cellular network by using the SIM card 1, if the SIM card 2 of the mobile phone receives an incoming call, the user still misses answering the call.

Therefore, in some embodiments, when the smartwatch has two idle Modems, the relay device may obtain information about the SIM card 1 and information about the SIM card 2, to replace the user equipment to access the cellular network by using the SIM card 1 and the SIM card 2, and process the cellular communication service on the relay device. Based on this, regardless of whether an incoming call is from the SIM card 1 or the SIM card 2 of the user equipment, the user may answer the call on the relay device. In addition, the user may also use the SIM card 1 and the SIM card 2 on the relay device to process other cellular communication services, for example, to make a call, send an SMS message, and access the internet.

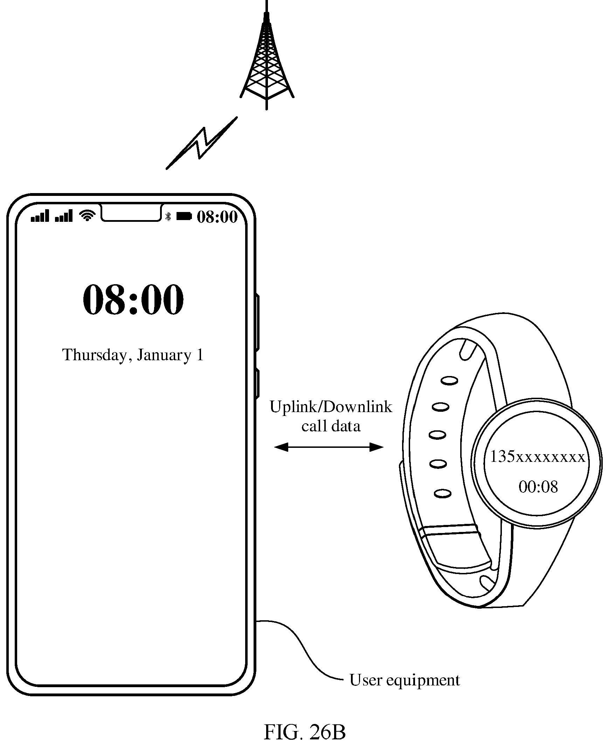

In some other embodiments, refer to FIG. 26B. After there is an incoming call from the SIM card 2 of the mobile phone, the user equipment may notify the smartwatch of the incoming call based on a current communication link between the mobile phone and the smartwatch, and the smartwatch displays an incoming call interface. After the user answers the incoming call on the smartwatch, the network side device sends downlink call data to the mobile phone, and then the mobile phone sends the downlink call data to the smartwatch for playing. In addition, the smartwatch locally collects uplink call data, and sends the uplink call data to the user equipment, and then the user equipment sends the uplink call data to the network side device.

Scenario 8: A mobile phone "replaces" CPE to perform optimal location recommendation.

Generally, a SIM card is installed on the CPE, and a user needs to select an indoor location with a relatively good cellular signal to place the CPE, to ensure cellular communication quality of the CPE. Currently, a manner in which the user selects a CPE placement location is: selecting a plurality of locations indoors to perform cellular signal strength detection, viewing a value of a cellular signal strength in a CPE management application (for example, smart life) corresponding to a mobile phone, and manually determining a location with a relatively large cellular signal strength to place the CPE. However, the CPE usually needs to be connected to a power supply to work. Due to factors such as a limitation of a length of a power cable and relatively heavy CPE, the CPE is inconvenient to move, which affects selection of the CPE placement location.

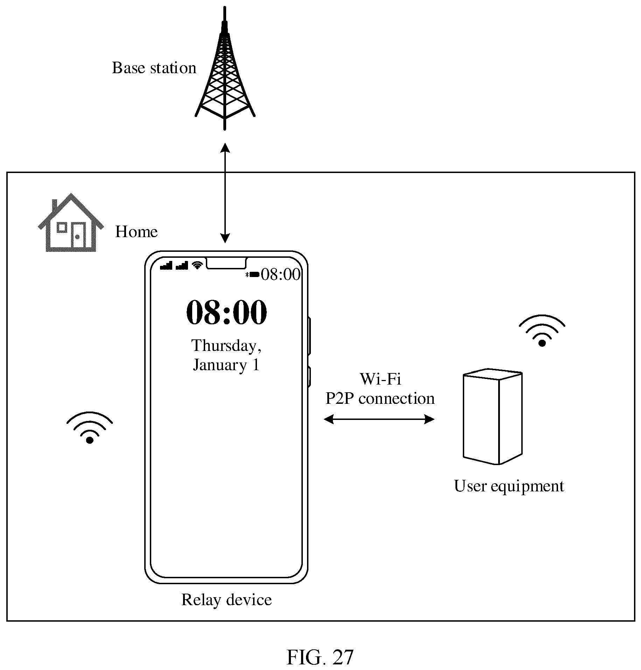

Therefore, refer to FIG. 27. The user may set portable user equipment (for example, a mobile phone) as a relay device, determine the CPE as user equipment, and connect to the CPE by using a near field communication technology. Then, the mobile phone may access SIM card information in the CPE by using a Remote SIM technology, and access a cellular network based on the SIM card information. In this embodiment, the user needs to set a network camping mode of the relay device to a user equipment mode, so that the mobile phone camps on a network in a network camping mode of the CPE, and moves freely indoors in place of the CPE to determine a placement location of the CPE. In this embodiment, the mobile phone may still display the value of the cellular signal strength of the CPE by using the CPE management application (for example, smart life), for reference by the user. Alternatively, the user may directly determine the placement location of the CPE based on a current signal strength of the mobile phone.

According to the method provided in this embodiment, the user does not need to move the CPE, but moves the mobile phone to determine the placement location of the CPE, which is convenient to operate.

In addition, compared with a case in which a mobile phone is directly installed with a SIM card of CPE, and moves indoors to detect a cellular signal strength of each location, the method provided in this embodiment has a more accurate detection result. This is because communication rules such as frequency bands and carrier aggregation (Carrier Aggregation, CA) of the mobile phone and the CPE are different. Therefore, the cellular signal strength of the mobile phone cannot accurately represent the cellular signal strength of the CPE.

### Scenario 9: Plan share

A SIM card in CPE is usually subscribed with a mobile broadband (mobile Broadband, MBB) traffic plan. The plan fee is much lower than that of a SIM card of a mobile phone. Therefore, in this embodiment, refer to FIG. 27. The CPE serves as user equipment, and the mobile phone serves as a relay device to access SIM card information of the CPE by using a Remote SIM technology, access a cellular network by using the SIM card of the CPE, and perform a cellular communication service such as internet access. It should be understood that, in a process in which the mobile phone uses the SIM card of the CPE to access the internet, traffic of the SIM card of the CPE is consumed, which can save traffic of the SIM card of the mobile phone.

It should be noted that in this embodiment, all user equipments of a plurality of family members may use the CPE to access the internet by using the traffic of the SIM card of the CPE, which saves internet access fees of the entire family.

### Scenario 10: Improve a cellular communication capability

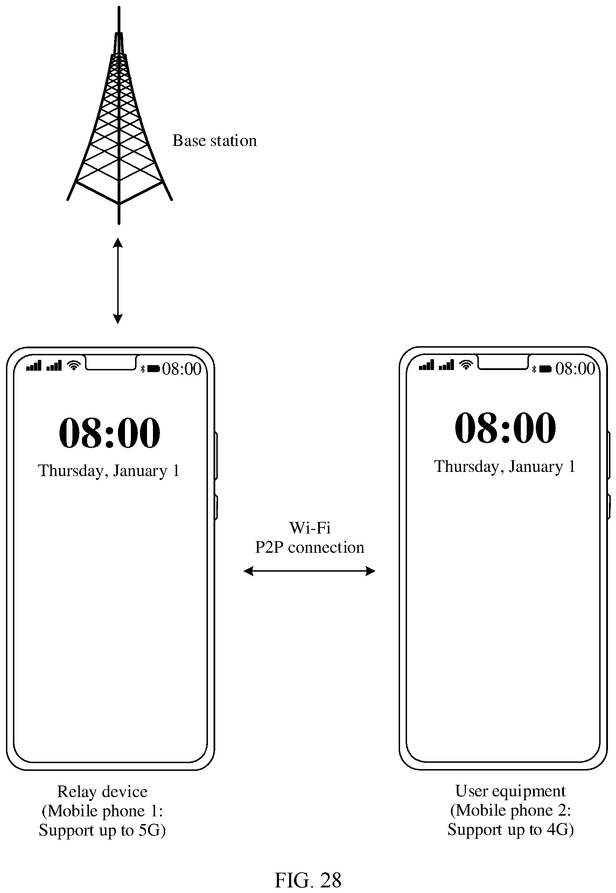

Different user equipments (such as mobile phones) may have different cellular communication capabilities. For example, a mobile phone 1 supports up to a 5th generation mobile communication technology (5th generation mobile networks, 5G), and a mobile phone 2 supports up to a 4th generation mobile communication technology (4th generation mobile networks, 4G). To improve a cellular communication capability of the mobile phone 2, refer to FIG. 28. A user may use the mobile phone 1 as a relay device of the mobile phone 2 in a signal relay manner, so that the mobile phone 2 uses a 5G communication capability of the mobile phone 1 to perform a cellular communication service.

It should be noted that, in this embodiment, the user equipment needs to set a signal relay network camping mode to a full mode. Then, after accessing SIM card information of the mobile phone 2 by using a Remote SIM technology, the mobile phone 1 may access a cellular network by using the SIM card information of the mobile phone 2 by using the communication capability of the mobile phone 1. Specifically, the mobile phone 2 sends uplink cellular communication data to the mobile phone 1 through a communication link between the mobile phone 1 and the mobile phone 2, and then the mobile phone 1 sends the uplink cellular communication data to a network side device by using the 5G technology. In addition, after receiving downlink cellular communication data by using the 5G technology, the mobile phone 1 sends the downlink cellular communication data to the mobile phone 2 through the communication link between the mobile phone 1 and the mobile phone 2, and the mobile phone 2 processes the downlink cellular communication data.

It should be noted that the mobile phone 1 and the mobile phone 2 may be connected by using a communication link such as a Wi-Fi local area network link, a Wi-Fi P2P link, or a Bluetooth link. This is not limited in this embodiment.

In addition, in some embodiments, the relay device may alternatively be a leather case having a communication function. An appearance of the leather case is similar to that of a protective housing of the mobile phone, and a SIM card slot, a communication module, and another communication-related accessory are disposed on an inner surface of the housing. After the leather case is installed on the mobile phone, the mobile phone can use a SIM card in the leather case to make a call and receive and send an SMS message. Based on this, in this embodiment, when a cellular communication capability of the leather case is stronger than that of the mobile phone, the user may also connect the leather case to the mobile phone, use the leather case as the relay device, and use the mobile phone as the user equipment, so that the mobile phone can access the cellular network by using the capability of the leather case. This improves a cellular communication capability of the mobile phone.

It should be noted that, in a signal relay scenario provided in this embodiment of this application, the leather case may not be provided with the SIM card slot. This is not limited in this embodiment.

In this embodiment, the leather case and the mobile phone may be connected through a peripheral component interconnect express (peripheral component interconnect express, PCIe) interface, a USB interface, an inter-integrated circuit sound (inter-integrated circuit sound, I2S) interface, a SLIMBUS interface, a universal asynchronous receiver/transmitter (universal asynchronous receiver/transmitter, UART) interface, a secure digital input and output (secure digital input and output, SDIO) interface, a serial peripheral interface (serial peripheral interface, SPI), a general-purpose input/output (general-purpose input/output, GPIO) interface, a controller area network (controller area network, CAN) interface, or the like, which is not limited in this embodiment.

In conclusion, according to the method provided in this embodiment, the cellular communication capability of the user equipment can be improved without changing a hardware facility of the user equipment.

### Scenario 11: Server as a relay device

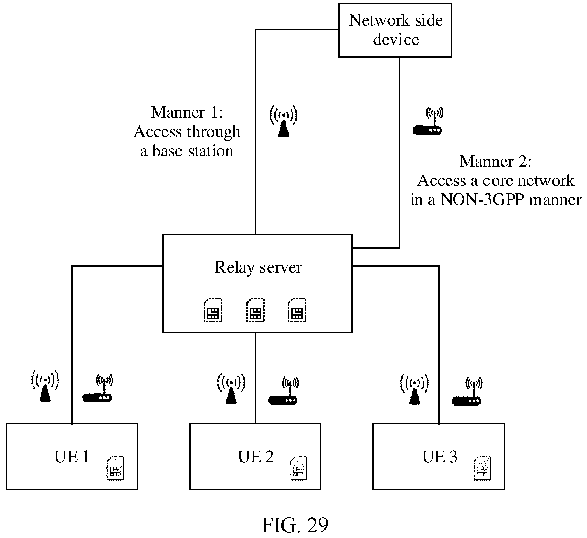

When a user does not have an electronic device such as CPE, a mobile phone, or a smartwatch as a relay device, the user may also use a server as the relay device. For details, refer to FIG. 29.

FIG. 29 is a schematic diagram 3 of a structure of a communication system to which a communication method is applicable according to an embodiment of this application, and relates to a specific manner in which user equipment uses a server as a relay device to access a network side device. Refer to FIG. 29. In this embodiment, the server serving as the relay device is referred to as a relay server. One relay server may serve as relay devices of a plurality of user equipments at the same time, access SIM card information of the user equipments, and access the network side device based on the SIM card information. The user equipment and the relay server may be connected by using a cellular data service, or may be connected through Wi-Fi.

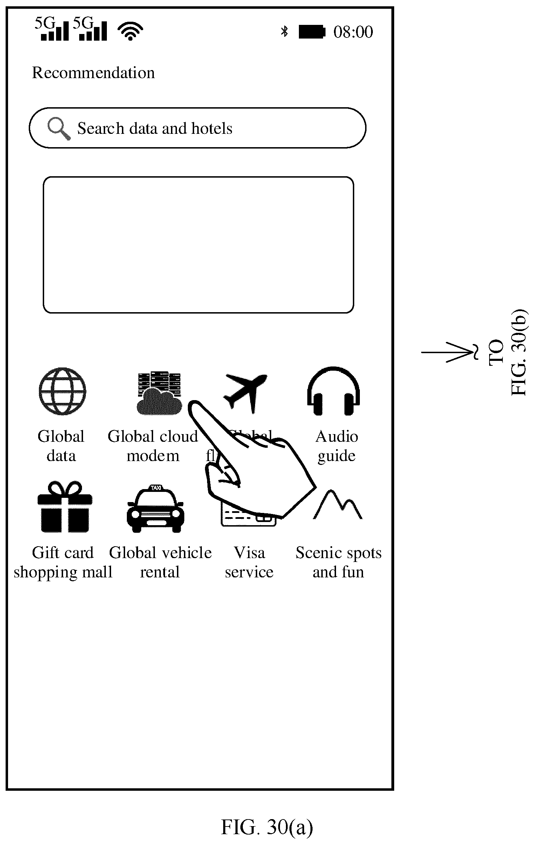

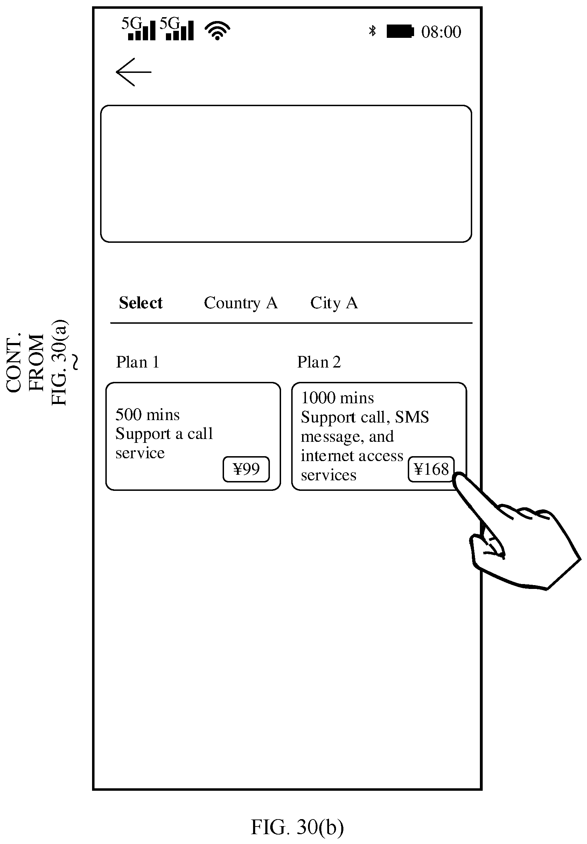

In this embodiment, the user may establish a connection to the relay server by purchasing a service plan provided by the relay server, and control a type of a signal relay service provided by the relay server for the user equipment. For example, the user may tap a "Global Cloud Modem" option on a SkyTone application interface shown in FIG. 30(a), to enter a plan purchase interface shown in FIG. 30(b). On the plan purchase interface, different plans correspond to different services. For example, a plan 1 provides a 500-minute signal relay service, and the service is limited to a call service. For another example, a plan 2 provides a 1000-minute signal relay service, and the service supports call, SMS message, and internet access services. The user can select a plan as required, to control the service provided by the relay server.

In addition, different relay servers are disposed in different areas. To improve communication quality of the user equipment in the relay mode, the user may also select, on the plan purchase interface, an area in which the user equipment is located, for example, select a city A in a country A, so that the user equipment is connected to a relay server that is close to the user equipment.

After being connected to the user equipment, the relay device may obtain the SIM card information of the user equipment. After obtaining the SIM card information of the user equipment, the relay server may access the network side device in Manner 1 or Manner 2. Manner 1: When the relay server is equipped with a cellular communication unit, the relay device may access the network side device based on the SIM card information of the user equipment by using the cellular communication module. Manner 2: The relay server may access the network side device based on the SIM card information of the user equipment through Wi-Fi. For a specific communication manner between the relay server and the network side device, refer to related content in which an electronic device accesses a network side device by using a NON-3GPP network (namely, a non-3GPP network). Details are not described in this embodiment.

### Scenario 12: Dual-SIM incoming call

Currently, although most mobile phones in the market support simultaneous installation of two SIM cards (for example, a SIM card 1 and a SIM card 2), when one SIM card (for example, the SIM card 1) is in a call state, the other SIM card (for example, the SIM card 2) usually cannot receive an incoming call. Therefore, a user may miss the incoming call of the SIM card 2. Therefore, in this embodiment, when one SIM card (for example, the SIM card 1) of the user equipment enters a call state, the user equipment may automatically control the other SIM card (for example, the SIM card 2) to enter a relay mode, and camp on a network by using information of the SIM card 2 by using the relay device. In this process, if there is an incoming call of the SIM card 2, the relay device may locally perform an incoming call notification, or may control the user equipment to perform an incoming call notification. Details are as follows:

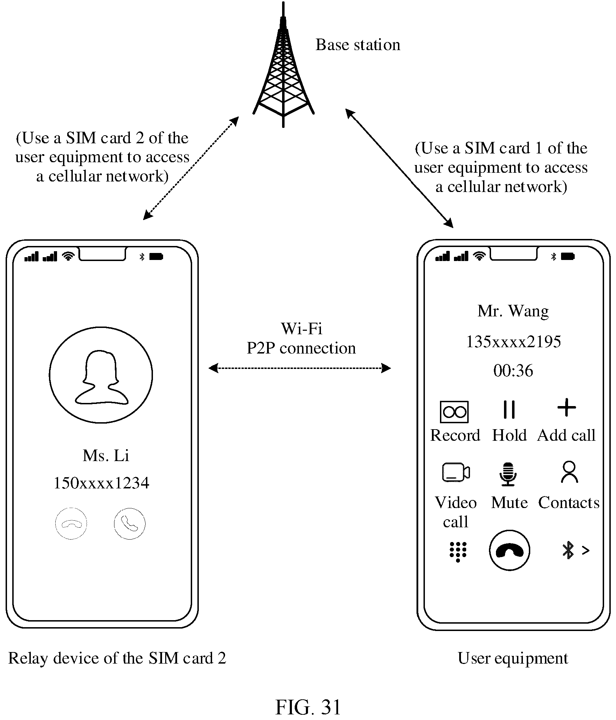

In some embodiments, refer to FIG. 31. When user equipment is answering a call of a SIM card 1 (namely, a call from Mr. Wang 135xxxx2195), if a relay device receives a call of a SIM card 2 (namely, a call from Ms. Li), an incoming call notification interface may be displayed on the relay device, so that a user can answer the call.

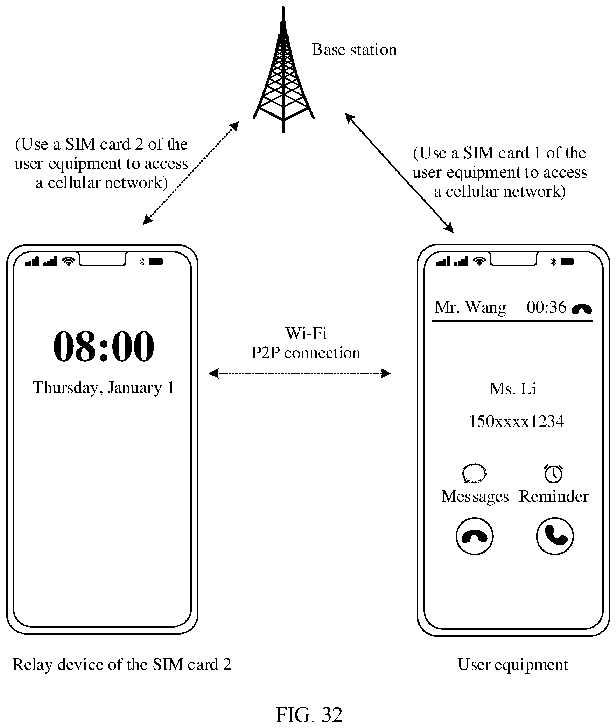

In some other embodiments, refer to FIG. 32. When user equipment is answering a call of a SIM card 1 (namely, a call from Mr. Wang 135xxxx2195), if a relay device receives a call of a SIM card 2 (namely, a call from Ms. Li), the relay device may send an incoming call notification to the user equipment, and the user equipment displays an incoming call notification interface. Based on this, the user may choose, on the user equipment, to hang up the call from Mr. Wang and answer the call from Ms. Li, or may hold (Hold) the call from Mr. Wang to answer the call from Ms. Li.

In a scenario in which the user equipment serves as a service processing device to process a cellular communication service (namely, a scenario in which a service processing mode of signal relay is "User equipment only"), the relay device needs to relay and transmit a call data packet between the network side device and the user equipment.

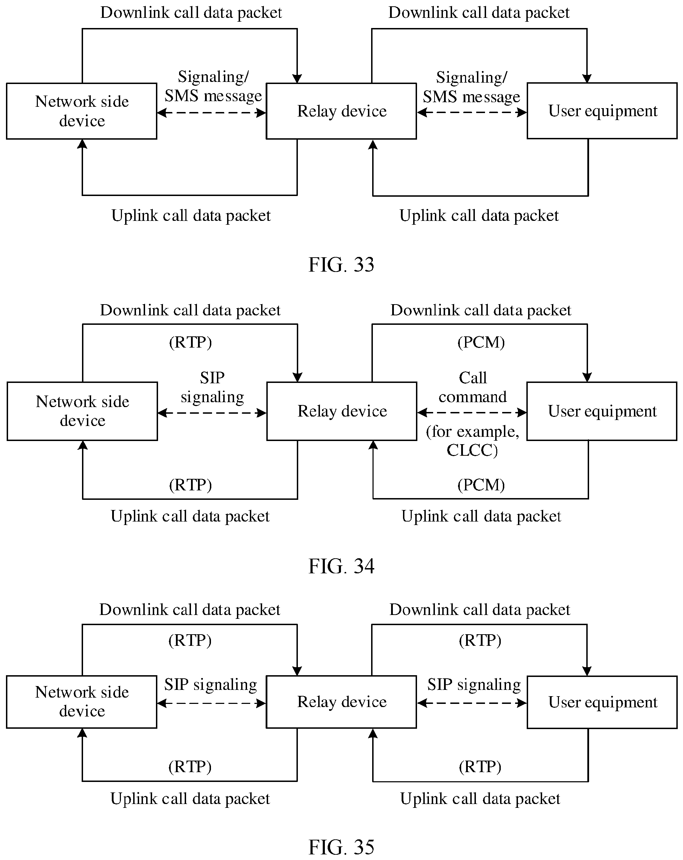

FIG. 33 is a schematic diagram of data transmission in a signal relay communication process according to an embodiment of this application. Refer to FIG. 33. In the signal relay communication process, a relay device relays and transmits various cellular communication data between a network side device and user equipment, where the cellular communication data includes control signaling, an SMS message, uplink and downlink call data packets, and the like.

In a cellular call process, a call data packet is transmitted between the network side device and the user equipment based on a real-time transport protocol (real-time transport protocol, RTP). Therefore, the downlink call data packet sent by the network side device to the relay device is usually an RTP data packet. The RTP data packet stores voice data in an encoding format such as adaptive multi-rate narrowband (adaptive multi-rate narrowband, AMR-NB), adaptive multi-rate broadband (adaptive multi-rate narrowband, AMR-WB), enhanced voice services (enhance voice services, EVS), Opus, or EVS Codec Extension for Immersive Voice and Audio Services (EVS Codec Extension for Immersive Voice and Audio Services, IVAS). However, the user equipment usually plays audio information based on a PCM code stream, and needs to convert voice data in a format such as AMR-NB, AMR-WB, EVS, Opus, or IVAS in an RTP data packet into a PCM code stream before playing. Similarly, the user equipment needs to convert an uplink PCM code stream into voice data in the format such as AMR-NB, AMR-WB, EVS, Opus, or IVAS, encapsulate the voice data into an RTP packet, and then send the RTP data packet to the network side device.

In addition, in a call process, signaling is transmitted between the network side device and the user equipment based on a session initiation protocol (session initiation protocol, SIP). SIP signaling sent by the network side device needs to be converted into a corresponding call control command, and then the user equipment can perform a corresponding action according to the control signaling. In addition, the call control command generated by the user equipment needs to be converted into SIP signaling, and then the SIP signal can be sent to the network side device. In this embodiment, the call control command may be IRING, CLCC, CALLSTATE, CHLD, APDS, or the like. The IRING is a ringing state reporting command, the CLCC is a call state query command, the CALLSTATE is a call state reporting command, the CHLD is a HOLD operation command, and the APDS is a dialing command.

Currently, a VoLTE call, a VoNR call, or the like is used as an example. In a scenario in which user equipment processes a service, when a relay device has an IMS protocol stack and a voice codec capability, conversion between an RTP data packet and a PCM code stream and conversion between SIP signaling and a call command can be performed. When the relay device does not have the capability, the user equipment needs to perform the foregoing operations. Therefore, for different capabilities of the relay device, cellular communication data may be forwarded in different modes. The details are as follows:
Mode 1: The relay device has the IMS protocol stack and the voice codec capability.

In an example, refer to FIG. 34. In a call process, the network side device and the relay device transmit signaling by using SIP signaling. When the relay device has the IMS protocol stack, the relay device may convert downlink SIP signaling into a specific call control command, and then send the call control command to the user equipment. The user equipment may also send a locally generated uplink call control command to the relay device, and then a processing device converts the uplink call control command into SIP signaling and sends the SIP signaling to the network side device.

When the relay device has the voice codec capability, for a downlink RTP data packet, the relay device may first convert voice data in the RTP data packet into a pulse code modulation (pulse code modulation, PCM) code stream, and then send the PCM code stream to the user equipment for playing. In addition, the user equipment may collect a PCM code stream corresponding to uplink cellular communication data, and send the PCM code stream to the relay device. The relay device converts the PCM code stream into an RTP data packet, and sends the RTP data packet to the network side device.

In another example, when the relay device has the IMS protocol stack and the voice codec capability, and the user equipment also has the IMS protocol stack and the voice codec capability, the relay device may also transparently transmit cellular communication data such as signaling, an SMS message, and uplink and downlink call data packets only between the network side device and the user equipment. The user equipment performs mutual conversion between an RTP data packet and a PCM code stream, and conversion between SIP signaling and a call control command.

Mode 2: The relay device does not have the IMS protocol stack and the voice codec capability, and the user equipment has the IMS protocol stack and the voice codec capability.

Refer to FIG. 35. When the relay device does not have the IMS protocol stack and the voice codec capability, but the user equipment has the IMS protocol stack and the voice codec capability, the relay device transparently transmits cellular communication data such as signaling, an SMS message, and uplink and downlink call data packets only between the network side device and the user equipment. The user equipment performs mutual conversion between an RTP data packet and a PCM code stream, and conversion between SIP signaling and a call control command.

Mode 3: The relay device has the IMS protocol stack but does not have the voice codec capability, and the user device has the voice codec capability.

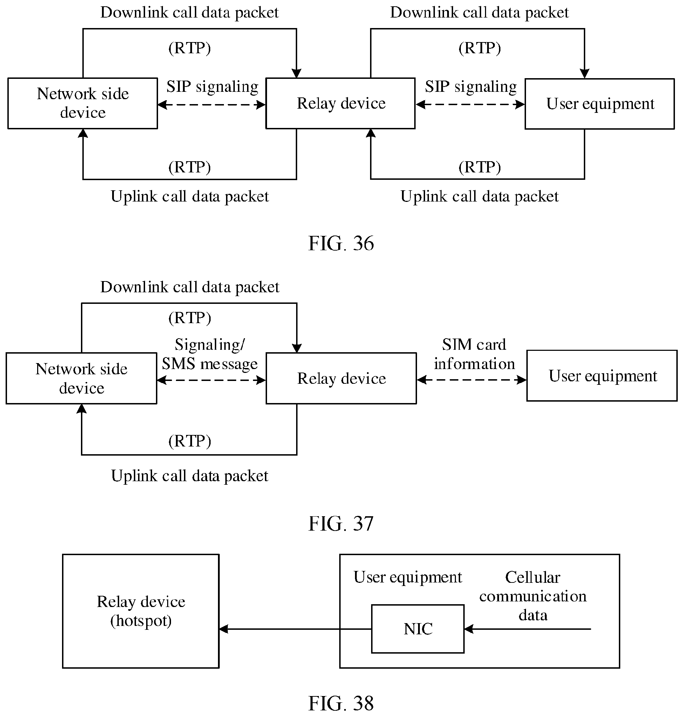

Refer to FIG. 36. When the relay device has the IMS protocol stack, the relay device may convert downlink SIP signaling into a specific call control command, and then send the call control command to the user equipment. The user equipment may send the uplink call control command to the relay device, and the relay device converts the uplink call control command into SIP signaling, and sends the SIP signaling to the network side device. When the relay device does not have the voice codec capability, but the user equipment has the capability, the relay device transparently transmits an uplink/downlink call data packet in an RTP form only between the network side device and the user equipment, and the user equipment performs mutual conversion between the RTP data packet and the PCM code stream.

In a scenario in which a relay device serves as a service processing device (namely, a scenario in which a service processing mode of signal relay is "Relay device only"), a VoLTE call, a VoNR call, or the like is used as an example. Refer to FIG. 37. The relay device needs to have the IMS protocol stack and the voice codec capability, and can perform mutual conversion between an RTP data packet and a PCM code stream and conversion between SIP signaling and a call command.

It should be noted that, for calls such as CS and CS fallback, the relay device and the user equipment may also forward cellular communication data by drawing on the foregoing manners according to whether the relay device has a CS protocol stack and the voice codec capability. Details are not described in this embodiment.

When the user equipment communicates with the relay device by using a data service, the relay device may serve as a hotspot device, and convert, into a Wi-Fi signal for transmission, a cellular signal (including a general packet radio service (general packet radio service, GPRS) technology, a 3G/4G/5G signal, or the like) received by the relay device by using local SIM card information. Alternatively, the relay device may transmit a Wi-Fi signal when no SIM card is locally installed. The user equipment may establish a connection to the relay device by using a Wi-Fi signal transmitted by the relay device, that is, connect to a hotspot of the relay device.

For example, refer to FIG. 38. After connecting to the hotspot of the relay device, the user equipment may send, to the relay device by using a network interface controller of the user equipment, uplink cellular communication data to be sent to the relay device in an IP forwarding (IP FORWORD) manner, and then the relay device sends the uplink cellular communication data to the network side device through an air interface. Similarly, the relay device may also send downlink cellular communication data to the user equipment by using the hotspot of the relay device.

Specifically, in the user equipment, an internet network interface controller (namely, an internet NIC) and a multimedia messaging service (multimedia messaging service, MMS) network interface controller are generally configured for each SIM card. Generally, when the user equipment communicates with the network side device independently, the user equipment sends a multimedia short message (namely, an MMS message) to the network side device through the MMS network interface controller, and sends some specific cellular communication data (for example, data related to one-tap login) to the network side device through the internet network interface controller. In addition, a Wi-Fi network interface controller is also disposed in the user equipment. The Wi-Fi network interface controller is configured to send application (application, App) data on the user equipment, for example, related audio and video data in a running process of an App.

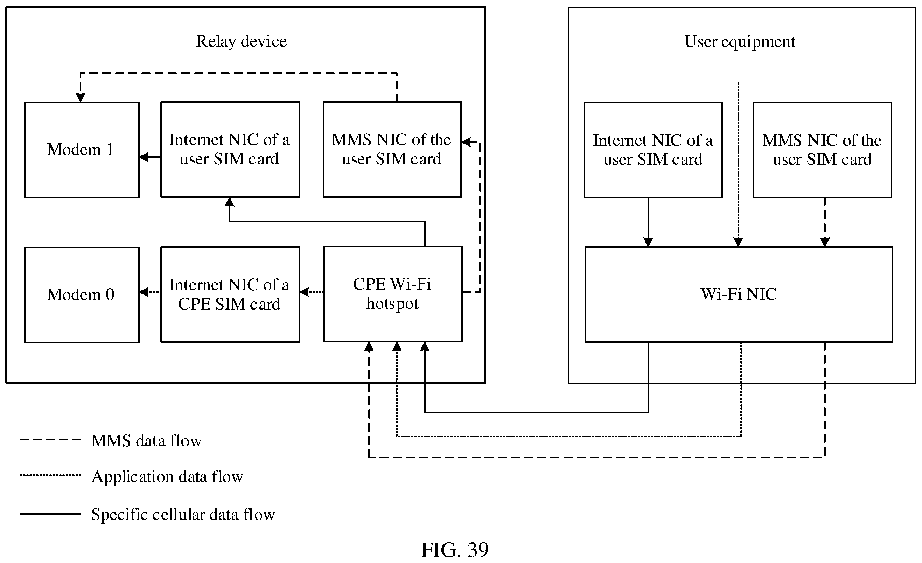

To implement relay transmission of cellular communication data between the user equipment and the network side device, a series of network interface controllers are also disposed on the relay device. For example, refer to FIG. 39. In a scenario in which a relay device (for example, CPE) is provided with a Modem 0 and a Modem 1, when a local SIM card is installed, an internet network interface controller is configured for the local SIM card on the CPE. In addition, when user equipment is connected to the relay device through a CPE Wi-Fi hotspot, an internet network interface controller and an MMS network interface controller are also configured for a user SIM card on the CPE independently.

When the user equipment is connected to a network side device by using the relay device, the user equipment first sends a cellular data service request to the relay device by using a local Wi-Fi network interface controller, and then the relay device sends the cellular data service request to the network side device. For example, for an MMS message, because the MMS message is sent to the network side device through an air interface based on a fixed access point name (access point name, APN), an MMS message data flow is sent by the user equipment to the local Wi-Fi network interface controller through an MMS network interface controller of the user equipment, is sent to the CPE Wi-Fi hotspot of the relay device through the Wi-Fi network interface controller, and then is sent to the network side device through the MMS network interface controller of the relay device by using the Modem 1. For application data such as news and video, the application data is sent by the user equipment to the CPE Wi-Fi hotspot of the relay device through the Wi-Fi network interface controller, and then is sent to the network side device through the internet network interface controller of the SIM card of the relay device by using the Modem 0. For specific cellular communication data, the specific cellular communication data is sent by the user equipment to the local Wi-Fi network interface controller through the internet network interface controller of the user equipment, is sent to the CPE Wi-Fi hotspot of the relay device through the Wi-Fi network interface controller, and then is sent to the network side device through the internet network interface controller of the user SIM card of the relay device by using the Modem 1.

It should be noted that, when the user equipment or the relay device is not a hotspot device, the user equipment may send the cellular communication data to the relay device by using a router, and then the relay device sends the cellular communication data to the network side device. Details are not described in this embodiment.

In this embodiment, the relay device can serve as relay devices of N user equipments at the same time, and access a cellular network by using SIM card information of the N user equipments.

In some embodiments, when one Modem generally can run only one set of cellular communication protocols (for example, IMS protocols or CS protocols), a value of N is determined based on a quantity of idle Modems of the relay device. For example, when the relay device is a mobile phone supporting dual cards, the relay device usually has two Modems. If no SIM card is installed locally on the relay device, there are two idle Modems. In this case, the mobile phone may serve as relay devices of two user equipments at the same time.

Optionally, when all Modems in the relay device are occupied by local SIM cards, and there is no idle Modem, the relay device may control, automatically or according to a user instruction, one local SIM card to be powered off, to provide one idle Modem for a SIM card of the user equipment for use.

In some other embodiments, when one Modem may run a plurality of sets of cellular communication protocols, the value of N may alternatively be determined based on a quantity of idle cellular communication protocols in the Modem. For example, when the mobile phone has only one Modem, but the Modem can run three sets of IMS protocols, if a SIM card is locally installed on the mobile phone, when the mobile phone accesses the network side device by using the SIM card, one set of IMS protocols is occupied, and two sets of idle IMS protocols remain. Therefore, the mobile phone may serve as relay devices of two user equipments at the same time.

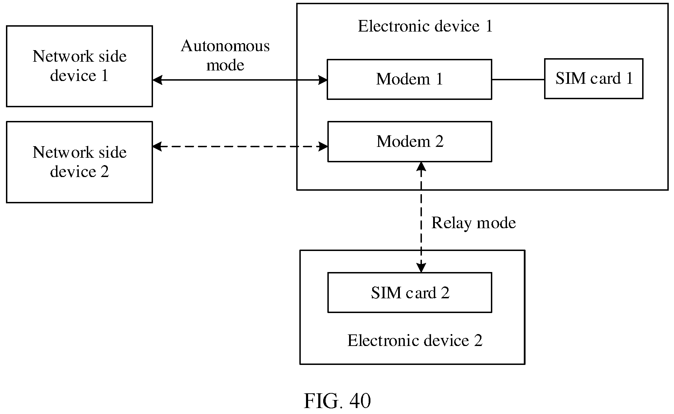

In this embodiment, an electronic device may serve as user equipment and a relay device. To be specific, the electronic device may serve as the user equipment to access a cellular network autonomously, and may serve as the relay device to access the cellular network in place of another electronic device. For example, refer to FIG. 40. An electronic device 1 is used as an example. A Modem 1 and a Modem 2 are disposed in the electronic device 1. When a SIM card 1 is locally installed on the electronic device 1, the electronic device 1 may access a network side device 1 by using the SIM card 1 and the Modem 1. In addition, the electronic device 1 may further serve as a relay device of an electronic device 2 to access information about a SIM card 2 of the electronic device 2, and access a network side device 2 by using a Modem 2 based on the information about the SIM card 2.

It should be noted that the network side device 1 and the network side device 2 may be the same or different. When the SIM card 1 and the SIM card 2 belong to a same carrier, the network side device 1 and the network side device 2 are usually the same. When the SIM card 1 and the SIM card 2 belong to different carriers, the network side device 1 and the network side device 2 are usually different.

In a relay mode, when the network side device calls the user equipment, the user equipment may independently perform an incoming call notification, or may perform an incoming call notification together with the relay device, or may perform an incoming call notification in a specific sequence, which is not limited in this embodiment. For performing the incoming call notification in the specific sequence, in a possible implementation, when the network side device calls the user equipment, the user equipment may first ring for a preset time period (for example, 20s), and if the user equipment is still in a call state within the preset time period, the user equipment also performs the incoming call notification on the relay device, to remind a user to answer the incoming call.

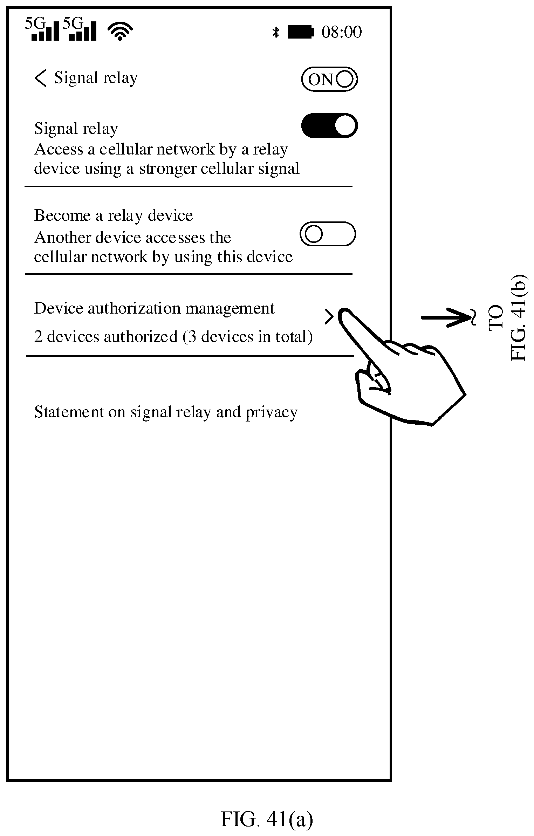

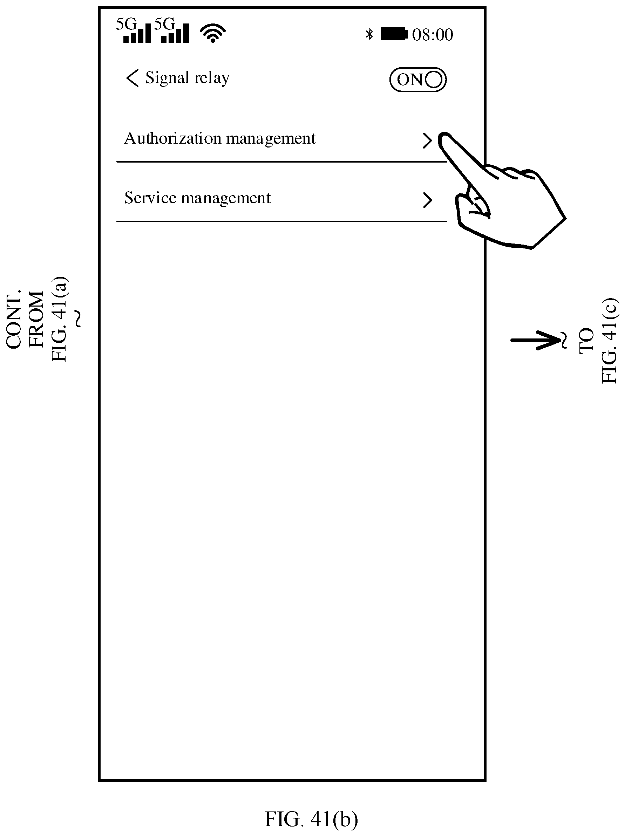

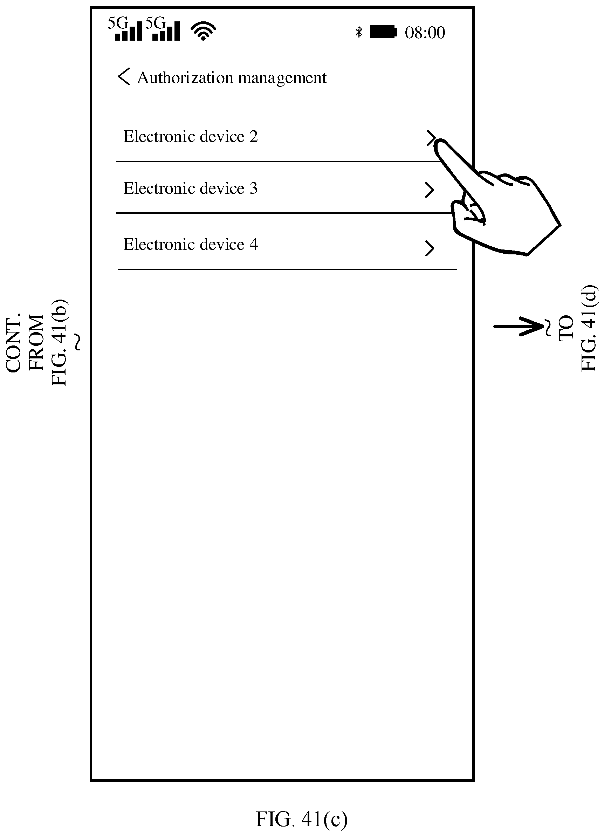

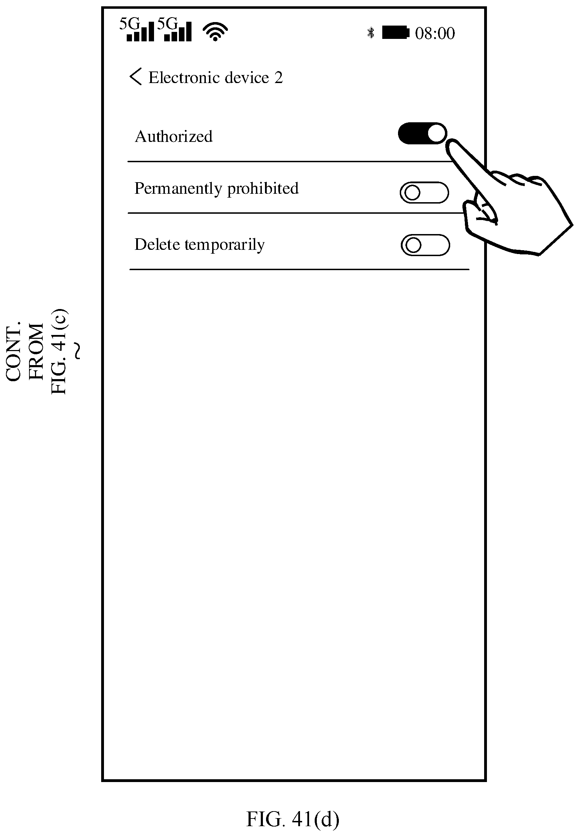

In this embodiment, the user equipment may perform permission management on a relay device that has been historically connected to the user equipment. For example, refer to FIG. 41(a). In response to an operation performed by a user on a "Signal relay" on/off item, the user equipment displays a signal relay interface shown in FIG. 41(b). The interface includes an "Authorization management" option and a "Service management" option. In response to an operation performed by the user on the "Authorization management" option, the user equipment displays an authorization management interface. The interface includes electronic devices that have been connected to the user equipment, for example, an electronic device 2, an electronic device 3, and an electronic device 4. Refer to FIG. 41(c). For example, the user chooses to set permission of the electronic device 2. In response to an operation performed by the user on an "Electronic device 2" option, the user equipment displays a setting interface shown in FIG. 41(d). The setting interface includes "Authorized", "Permanently prohibited", and "Delete temporarily" on/off items. The "Authorized" option is used to allow a corresponding electronic device to access the user equipment. The "Permanently prohibited" option is used to prohibit a corresponding electronic device from accessing the user equipment. The "Delete temporarily" option is used to temporarily restrict a corresponding electronic device from accessing the user equipment, for example, restrict the electronic device 2 from accessing the user equipment within 5 minutes. The user may set permission of a corresponding electronic device on the interface shown in FIG. 41(d).

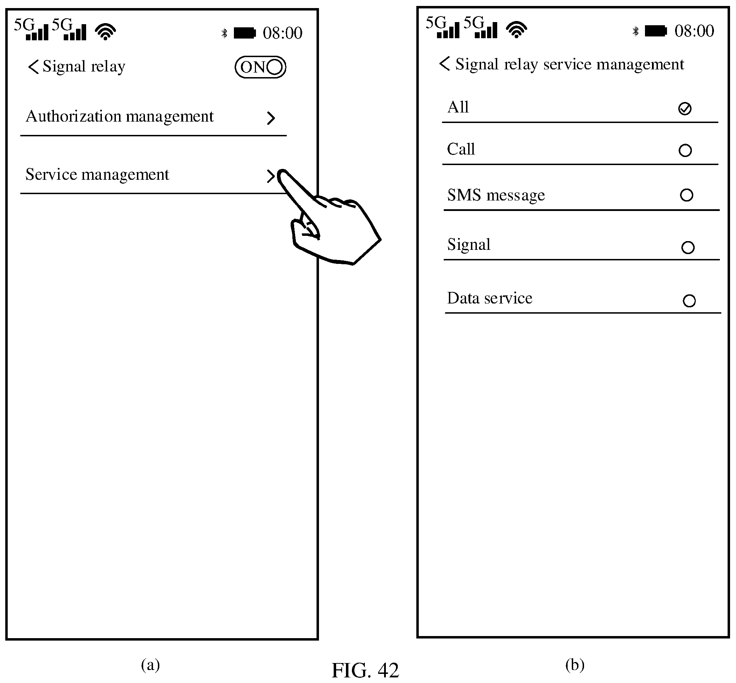

In addition, on the user equipment, each relay device may be set to replace the user equipment to perform a cellular communication service such as a call service or an SMS message service. For example, refer to (a) in FIG. 42. In response to an operation performed by the user on the "Service management" option, the user equipment displays, for example, an interface shown in (b) in FIG. 42. The interface includes configurable service options such as an "All" option, a "Call" option, an "SMS message" option, a "Signal" option, and a "Data service" option. The user may set, on the interface, a cellular communication service performed by a corresponding relay device.

It should be noted that in this embodiment of this application, for an electronic device such as a smartwatch or CPE that has no screen or a relatively small screen, related signal relay setting may be performed by using a smart life application in a mobile phone. For a related setting interface, refer to FIG. 4(e), FIG. 4(f), FIG. 23(a) to FIG. 23(d), FIG. 41(a) to FIG. 41(d), and FIG. 42. Details are not described again in this embodiment.

In a process of using the user equipment, the user equipment may continuously move with a location of the user. When the user equipment is relatively far away from the relay device, a communication link between the user equipment and the relay device may be abnormal, resulting in poor call quality or even call interruption. In this case, user experience is poor. For example, in a house provided with a living room, a bedroom A, and a bedroom B, the living room is relatively far away from the bedroom B. If the relay device is in the living room, when the user equipment moves from the living room to the bedroom B as the user moves from the living room to the bedroom B, a communication link between the user equipment and the relay device may gradually deteriorate due to signal blocking or the like. Consequently, call quality deteriorates or even a call is interrupted. In this case, user experience is poor. Therefore, in this embodiment of this application, whether to use the relay device to access the cellular network may be further determined based on whether the user equipment meets a preset switching condition.

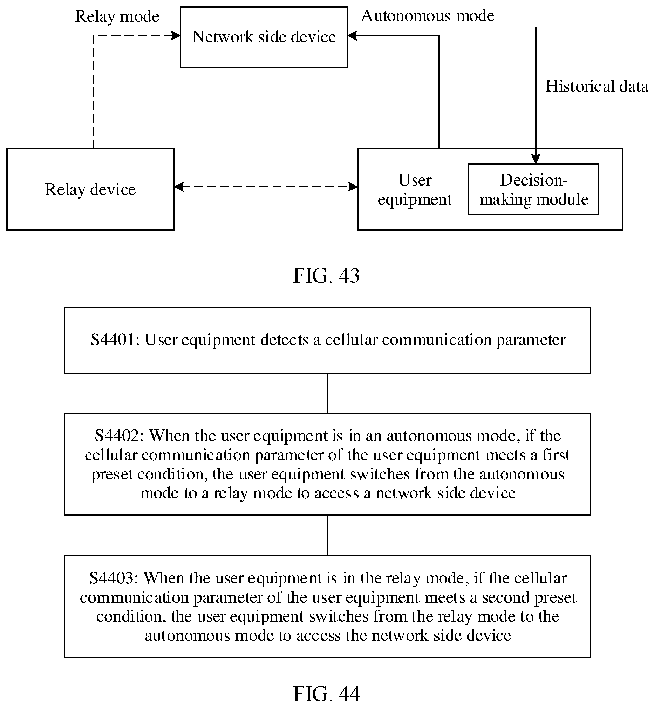

FIG. 43 is a schematic diagram of a mode switching principle according to an embodiment of this application. As shown in FIG. 43, user equipment may determine, according to historical data of accessing a cellular network by the user equipment, to access a network side device in a relay mode or access a network side device in an autonomous mode. The autonomous mode means that the user equipment autonomously accesses the cellular network based on a received cellular signal.

FIG. 44 is a flowchart of a communication method according to another embodiment of this application, and relates to a process in which user equipment switches an access mode of a network side device. The method specifically includes the following steps.

S4401: The user equipment detects a cellular communication parameter.

In this embodiment, the cellular communication parameter of the user equipment includes: cellular signal quality of the user equipment, quality of a call between the user equipment and a relay device, a quantity of power of the user equipment, historical call quality of a cell in which the user equipment is located, a geographical location of the user equipment, whether the user equipment is connected to a vehicle-mounted Bluetooth device, or the like.

The call quality includes at least one of data transmission quality, link quality, and QoE. The data transmission quality may be determined based on parameters such as a packet loss rate, a delay, and a jitter of a call data packet of a communication link. The link quality may be determined based on at least one of reference signal received power (reference signal received power, RSRP), reference signal received quality (reference signal received quality, RSRQ), or a signal to interference plus noise ratio (signal to interference plus noise ratio, SINR).

S4402: When the user equipment is in an autonomous mode, if the cellular communication parameter of the user equipment meets a first preset condition, the user equipment switches from the autonomous mode to a relay mode to access the network side device.

The first preset condition may be that a cellular signal of the user equipment is lower than a preset value. For example, the preset value may be -95 dBm, -100 dBm, -110 dBm, -115 dBm, or the like. When a cellular signal strength of the user equipment is less than the preset value, it indicates that the cellular signal strength is relatively low, stable communication between the user equipment and the network side device may not be maintained, and in a communication process, a case such as network freezing or a call exception occurs. Therefore, when the cellular signal strength of the user equipment is less than the preset value, the user equipment accesses the network side device in the relay mode, to improve quality of communication with the network side device.

Alternatively, the first preset condition may be that a power level of the user equipment is less than a preset power level. For example, the preset power level may be 20%, 10%, or the like of a maximum storage capacity of a battery. In a process in which the user equipment autonomously accesses the cellular network, the user equipment needs to continuously listen to a broadcast message delivered by the network side device and report TAU information, to establish a connection to the network side device. Consequently, power consumption is relatively high. When the power level of the user equipment is less than the preset power level, to reduce power consumption of the user equipment, the user equipment may switch to the relay mode, and access the network side device by using the relay device.

Optionally, when the power level of the user equipment is less than the preset power level, if the network side device calls the user equipment, an incoming call notification may be performed only on the relay device, so that a user answers the call on the relay device. This further reduces power consumption of the user equipment.

In an example, when a user is outdoors and is inconvenient to perform charging, if a power level of a mobile phone is less than a preset power level, and a power level of a tablet computer is sufficient, the user may control the mobile phone to connect to a network side device by using the tablet computer as a relay device, which saves the power level of the mobile phone.

Alternatively, the first preset condition may be that the user equipment is located in an abnormal cell. For example, in a daily communication process, the user equipment may detect quality of communication between the user equipment and the network side device, determine a cell in which a communication exception frequently occurs, and mark the cell as the abnormal cell. After the user equipment is handed over to the abnormal cell, to improve the quality of communication between the user equipment and the network side device, the user equipment may use the relay device to access the network side device.

Alternatively, the first preset condition may be that the user equipment is located at an abnormal location. For example, in a daily communication process, the user equipment may detect quality of communication between the user equipment and the network side device, determine a location at which a communication exception frequently occurs, and store corresponding location information. In this embodiment, the abnormal location may be a geographical location, or may be a Wi-Fi coverage area, a Bluetooth coverage area, or the like. Therefore, abnormal location information corresponding to the abnormal location may be a longitude and latitude range, or may be a Wi-Fi name, a service set identifier (service set identifier, SSID), a Bluetooth name, or the like. When detecting that current location information of an electronic device is the same as the abnormal location information, the electronic device is located at the abnormal location. When the user equipment is located at the abnormal location, to improve the quality of communication between the user equipment and the network side device, the user equipment may use the relay device to access the network side device.

Alternatively, the first preset condition may be that the user equipment is connected to a vehicle-mounted Bluetooth device. Due to reasons such as vehicle blocking, cellular signals inside a vehicle are usually weaker than those outside the vehicle. Therefore, when the user equipment enters a private car and is connected to the vehicle-mounted Bluetooth device, the private car may serve as the relay device, and a Modem provided by the private car is used to access the network side device, which improves the quality of communication between the user equipment and the network side device.

Alternatively, the user equipment may make a comprehensive decision based on the at least two first preset conditions to form fingerprint data, and determine, based on the fingerprint data, whether to switch from the autonomous mode to the relay mode to access the network side device.

S4403: When the user equipment is in the relay mode, if the cellular communication parameter of the user equipment meets a second preset condition, the user equipment switches from the relay mode to the autonomous mode to access the network side device.

The second preset condition may be that quality of communication between the user equipment and the relay device is lower than preset quality, and a cellular signal strength of the user equipment is greater than a preset strength. For example, that quality of communication between the user equipment and the relay device is lower than preset quality includes: A packet loss rate of a communication link between the user equipment and the relay device is greater than a preset value (for example, 10%); or a delay of a call data packet is higher than a preset value (for example, 120 ms); or a signal to interference plus noise ratio of a first side-side link is lower than a preset value (for example, 10 dB).

It may be understood that when the quality of communication between the user equipment and the relay device is lower than the preset quality, even if quality of communication between the relay device and the network side device is relatively good, quality of a call between the user equipment and the network side device cannot be ensured. Therefore, when the cellular signal strength of the user equipment is greater than the preset strength, the user equipment switches from the relay mode to the autonomous mode to access the network side device. When the user equipment directly accesses the network side device, call quality can be improved.

In this embodiment, the user equipment further needs to perform ping-pong suppression, to avoid a waste of electronic device resources and impact on user experience caused by frequent switching between the autonomous mode and the relay mode.

Alternatively, the second preset condition may be that a power level of the user equipment is equal to greater than a preset power level. For example, the preset power level may be 20%, 10%, or the like of a maximum storage capacity of a battery. When the power level of the user equipment is greater than or equal to the preset power level, the user equipment may switch from the relay mode to the autonomous mode, to connect to the network side device by the user equipment.

Alternatively, the second preset condition may be that the user equipment is handed over from an abnormal cell to a normal cell, or moves from an abnormal location to a non-abnormal location. When the user equipment is located in an abnormal cell or at an abnormal location, quality of communication between the user equipment and the network side device is usually poor, and the user equipment needs to access the network side device by using the relay device. However, when the user equipment is handed over from the abnormal cell to the normal cell, or moves from the abnormal location to the non-abnormal location, the quality of communication between the user equipment and the network side device is usually ensured. Therefore, the user equipment is switched from the relay mode to the autonomous mode, and directly accesses the network side device.

Alternatively, the second preset condition may be that the user equipment disconnects from a vehicle-mounted Bluetooth device. When the user equipment disconnects from the vehicle-mounted Bluetooth device, it may be that the user does not want to use the vehicle-mounted Bluetooth device, or the vehicle is out of fire, or the user is away from the vehicle. In this case, to ensure a normal connection between the user equipment and the network side device, the user equipment switches from the relay mode to the autonomous mode, and directly accesses the network side device.

Alternatively, the user equipment may make a comprehensive decision based on the at least two second preset conditions to form the fingerprint data, and determine, based on the fingerprint data, whether to switch from the relay mode to the autonomous mode to access the network side device.

According to the method provided in this embodiment, in a process of processing a cellular communication service, a second electronic device may automatically switch between a relay mode and an autonomous mode based on a preset condition, to ensure cellular communication quality.

It should be noted that, in this embodiment of this application, mutual switching between the autonomous mode and the relay mode may be performed in an idle state, or may be performed in a service state. The idle state indicates that the user equipment does not perform a cellular communication service, and the service state indicates that the user equipment performs the cellular communication service. For example, the service state may be a process in which the user equipment makes a call and accesses the internet.

When the user equipment switches between the autonomous mode and the relay mode in the idle state, the switching may be performed by enabling or disabling a Modem and an IMS protocol stack of the user equipment, that is, hard handover is performed. For example, the user equipment switches from the autonomous mode to the relay mode. The user equipment disables a local Modem or a Modem protocol stack and controls the local Modem or the Modem protocol stack to be powered off, and disables a local IMS protocol stack. For example, the user equipment switches from the relay mode to the autonomous mode. The user equipment may control a local Modem and a local Modem protocol stack to be powered on, restart a local IMS protocol stack, and reload the protocol stacks to connect to the network side device. To shorten a time period for the user equipment to restart the IMS protocol stack, the Modem, or the Modem protocol stack, the user equipment may temporarily not read information such as a local SMS message on a SIM card and information about contacts on the SIM card, to implement quick restart. SIM card information that is not read is not cleared within an aging period corresponding to the information, and only needs to be cached in a host.

When the user equipment switches between the autonomous mode and the relay mode in the service state, soft handover may be performed. To be specific, an IMS protocol stack of the user equipment is synchronized with an IMS protocol stack of the relay device, and service information of one electronic device is synchronized to another electronic device, so that the another electronic device performs location area update (Location Area Update, LAU) or TAU, to access the network side device.

The following describes a process in which user equipment switches from an autonomous mode to a relay mode by using an example in which a cellular communication service currently performed by the user equipment is a call service.

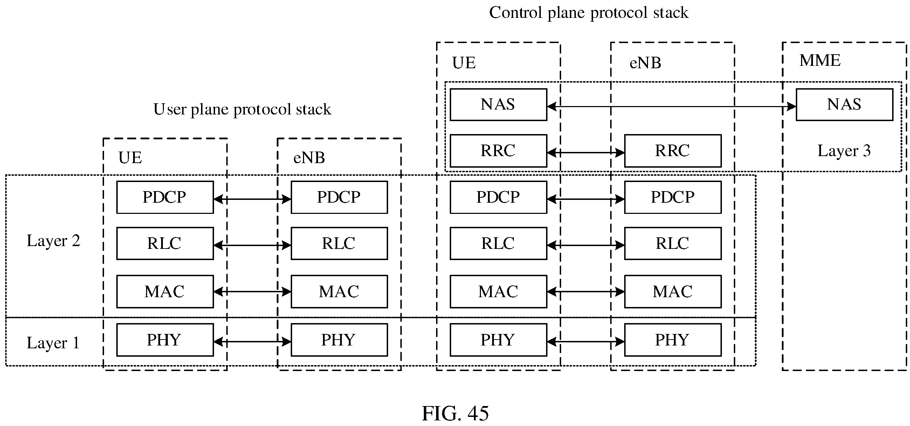

FIG. 45 is a schematic diagram of an architecture of a user plane protocol stack and a control plane protocol stack of user equipment according to an embodiment of this application. Refer to FIG. 45. The user plane protocol stack of the user equipment and a user plane protocol stack of a network side device each include a packet data convergence protocol (packet data convergence protocol, PDCP) layer, a radio link control (radio link control, RLC) layer, a media access control (media access control, MAC) layer, and a physical layer (physical layer, PHY). The control plane protocol stack of the user equipment includes a non-access stratum (non-access stratum, NAS) layer, a radio resource control (radio resource control, RRC) layer, a PDCP layer, an RLC layer, a MAC layer, and a PHY layer. A base station of the network side device includes an RRC layer, a PDCP layer, an RLC layer, a MAC layer, and a PHY layer, and a mobility management entity (mobility management entity, MME) of the network side device includes a NAS.

The PHY layer is located at a lowest layer, and may also be referred to as a layer 1 (Layer 1). The MAC layer, the RLC layer, and the PDCP layer belong to an intermediate layer, and may also be referred to as a layer 2 (Layer 2). The RRC layer and the NAS belong to a higher layer, and may also be referred to as a layer 3 (Layer 3). A main function of the layer 1 is to provide reliable transmission of bit streams between two physical entities and adapt a transmission medium. Main functions of the layer 2 are channel multiplexing and demultiplexing, data format encapsulation, data packet scheduling, and the like. Main functions of the layer 3 are addressing, route selection, connection establishment and control, resource configuration policies, and the like.

In a process in which the user equipment switches from the autonomous mode to the relay mode, the user equipment needs to synchronize, to the relay device, all status information related to a current call in the user plane protocol stack and the control plane protocol stack of the user equipment, and the relay device initiates location area update or TAU refresh to access the network side device. In this method, a delay of a call data packet caused by device switching is relatively short, and a synchronized data volume (especially a quantity of status information) in a device switching process is relatively large. Alternatively, the user equipment may synchronize, to the relay device, all information related to a local call in the local control plane protocol stack, for example, data of the layer 3 in the control plane protocol stack, and the relay device initiates LAU or TAU to access the network side device.

According to the switching method provided in this embodiment of this application, in a process of switching a communication mode, the user equipment can hold the current call without a call drop, and user unawareness is implemented.

It should be noted that, when the user equipment does not support the soft handover, the user equipment should reduce mode switching in a call state. For example, the user equipment may continuously detect call quality. When the call quality continuously decreases within a preset time period, the user equipment may play a prompt voice to indicate that the current call quality gradually decreases, to remind the user to approach the relay device. For example, the prompt voice may be an urgent "beep" sound, or voice information "Weak signal. Please approach the relay device", or the like. In addition, for a video call scenario, prompt information may be further displayed on a call interface of the user equipment. For example, the prompt information may be text information "Weak signal. Please approach a relay device".

In addition, when quality of communication between the relay device and the user equipment is lower than preset quality, the relay device and the user equipment may also perform negotiation based on a current communication link, and then establish one or a plurality of communication links, to jointly transmit call data through the plurality of links. For example, when the user equipment and the relay device are connected currently through a Wi-Fi link, another data service link may be established between the user equipment and the relay device, to transmit call data.

In a process in which the relay device and the user equipment jointly transmit the call data through the plurality of links, a part of call data packets may be transmitted through a first communication link, and the other part of the call data packets may be transmitted through a second communication link, to reduce data transmission pressure of each link and improve transmission quality of the call data packets. Alternatively, all call data packets may be copied, and then all call data packets are transmitted on each communication link, to reduce a quantity of call data packets missing at a receive end, and improve the call quality.

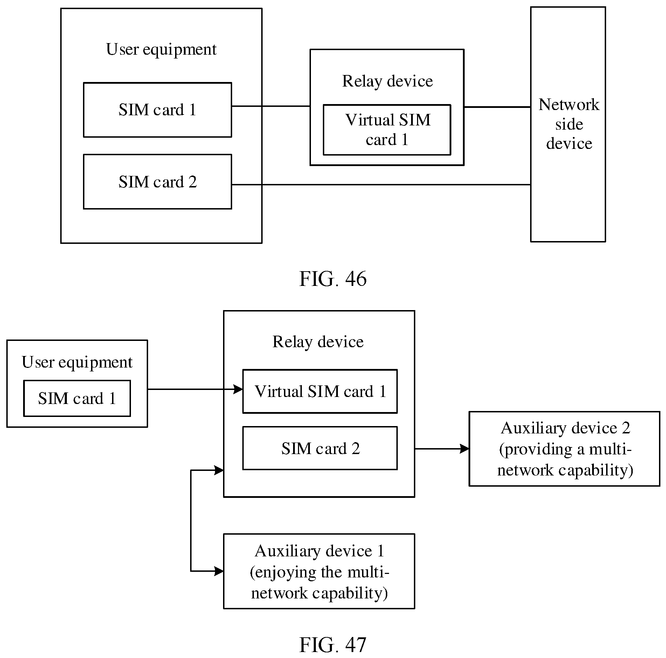

FIG. 46 is a schematic diagram of a multi-network synergy scenario according to an embodiment of this application. Refer to FIG. 46. When a SIM card 1 and a SIM card 2 are installed on user equipment, and the SIM card 1 is associated with a relay device, the user equipment may access a network side device through a plurality of networks. One network is used by the relay device to access the network side device based on information about the SIM card 1, and another network is used by the user equipment to access the network side device based on information about the SIM card 2.

FIG. 47 is a schematic diagram of a network convergence scenario according to another embodiment of this application. Refer to FIG. 47. When a relay device obtains information about a SIM card 1 from user equipment, and a SIM card 2 is locally installed, the relay device may access a network side device through a plurality of networks. One network is used to access the network side device based on information about the SIM card 1, and another network is used to access the network side device based on information about the SIM card 2. When the relay device as a hotspot device is connected to another electronic device (for example, an auxiliary device 1), the auxiliary device 1 may enjoy a multi-network synergy capability of the relay device. To be specific, the auxiliary device 1 may use the information about the SIM card 1 to access the network side device, and may also use the information about the SIM card 2 to access the network side device. In addition, the relay device may also access another electronic device (for example, an auxiliary device 2), and then access the network side device by using the auxiliary device 2. It should be understood that when the relay device can access the network side device by using the auxiliary device 2, the user equipment corresponding to the relay device may also access the network side device by using the auxiliary device 2.

It should be understood that sequence numbers of the steps do not mean an execution sequence in embodiments. The execution sequence of the processes needs to be determined based on functions and internal logic of the processes, and should not constitute any limitation on the implementation processes of embodiments of this application.

An embodiment of this application further provides a first electronic device. The first electronic device is configured to perform communication methods performed by a relay device in the foregoing embodiments.

An embodiment of this application further provides a second electronic device. The second electronic device is configured to perform communication methods performed by user equipment in the foregoing embodiments.

An embodiment of this application further provides a communication method. The method is applied to a first electronic device. The method includes methods performed by a relay device in the foregoing embodiments.

An embodiment of this application further provides a communication method. The method is applied to a second electronic device. The method includes methods performed by user equipment in the foregoing embodiments.

An embodiment of this application further provides a computer-readable storage medium. The computer-readable storage medium stores a computer program. When the computer program is executed by a processor, methods performed by a relay device in the foregoing embodiments are implemented.

An embodiment of this application further provides a computer-readable storage medium. The computer-readable storage medium stores a computer program. When the computer program is executed by a processor, methods performed by user equipment in the foregoing embodiments are implemented.

An embodiment of this application further provides a computer program product. The program product includes a program. When the program is run by a device, a first electronic device is enabled to implement methods performed by a relay device in the foregoing embodiments.

An embodiment of this application further provides a computer program product. The program product includes a program. When the program is run by a device, a second electronic device is enabled to implement methods performed by user equipment in the foregoing embodiments.

An embodiment of this application further provides a chip, applied to a first electronic device. The chip includes a memory and a processor. The processor executes a computer program stored in the memory, to implement methods performed by a relay device in the foregoing embodiments.

An embodiment of this application further provides a chip, applied to a second electronic device. The chip includes a memory and a processor. The processor executes a computer program stored in the memory, to implement methods performed by user equipment in the foregoing embodiments.

It should be understood that, the processor in this embodiment of this application may be a central processing unit (central processing unit, CPU), or may further be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor, or the like.

It should be further understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It may be clearly understood by persons skilled in the art that, for the purpose of convenient and brief description, for a specific working process of the foregoing system, apparatus, and unit, refer to a corresponding process in the foregoing method embodiments. Details are not described herein again.

In the descriptions of embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more than two.

## Claims

1. A first electronic device, wherein the first electronic device is configured to:
broadcast a first notification message when a cellular signal strength of the first electronic device is greater than or equal to a strength threshold, wherein the first notification message is used to notify that the first electronic device has a signal relay function, so that a second electronic device establishes a connection to the first electronic device based on the first notification message;
establish a connection to the second electronic device based on the first notification message, wherein a first SIM card is installed on the second electronic device, and the first SIM card stores first SIM card information;
obtain the first SIM card information; and
establish a connection to a network side device based on the first SIM card information, so that the second electronic device enters a relay mode, wherein
in the relay mode, the first electronic device assists the second electronic device in performing a cellular communication service related to the first SIM card.

2. The first electronic device according to claim 1, wherein in the relay mode, the first electronic device is further configured to forward cellular communication data related to the first SIM card between the network side device and the second electronic device, and the second electronic device processes the corresponding cellular communication service based on the cellular communication data.

3. The first electronic device according to claim 1, wherein in the relay mode, the first electronic device is further configured to:
exchange cellular communication data related to the first SIM card with the network side device, and locally process the corresponding cellular communication service based on the cellular communication data.

4. The first electronic device according to any one of claims 1 to 3, wherein the first electronic device establishes a connection to the second electronic device by using a near field communication technology, a far field communication technology, or a physical entity.

5. The first electronic device according to any one of claims 1 to 4, wherein the first electronic device is further configured to:
obtain authentication data in the first SIM card information in real time, wherein the authentication data is used to perform authentication when the first electronic device establishes a connection to the network side; and
pre-cache other data other than the authentication data in the first SIM card information, and update corresponding data based on aging periods of different data, so that the first electronic device directly reads the other data locally when processing the cellular communication service.

6. The first electronic device according to any one of claims 1 to 5, wherein the first electronic device is further configured to:
display a third prompt box after establishing a connection to the network side device based on the first SIM card information, wherein the third prompt box is used to prompt that the first electronic device is providing a signal relay service for the second electronic device.

7. The first electronic device according to any one of claims 1 to 6, wherein the first electronic device is further configured to:
transmit a hotspot signal by using cellular data traffic of the first SIM card, wherein
after a third electronic device establishes a connection to the hotspot signal, the third electronic device uses the cellular data traffic of the first SIM card to access the internet by using the first electronic device.

8. The first electronic device according to any one of claims 1 to 7, wherein a third SIM card is further installed on the first electronic device, and the third SIM card stores third SIM card information; and
the first electronic device is further configured to:
establish a connection to the network side device based on the third SIM card information, and locally process a cellular communication service related to the third SIM card.

9. A second electronic device, wherein a first SIM card is installed on the second electronic device, the first SIM card stores first SIM card information, and the second electronic device is configured to:
receive a first notification message from a first electronic device when a cellular signal strength of the first electronic device is greater than or equal to a strength threshold, wherein the first notification message is used to notify that the first electronic device has a signal relay function, so that a second electronic device establishes a connection to the first electronic device based on the first notification message;
establish a connection to the first electronic device based on the first notification message; and
send the first SIM card information to the first electronic device, wherein the first SIM card information is used by the first electronic device to establish a connection to a network side device, so that the second electronic device enters a relay mode, wherein
in the relay mode, the first electronic device assists the second electronic device in performing a cellular communication service related to the first SIM card.

10. The second electronic device according to claim 9, wherein in the relay mode, the first electronic device forwards cellular communication data related to the first SIM card between the network side device and the second electronic device, and the second electronic device processes the corresponding cellular communication service based on the cellular communication data.

11. The second electronic device according to claim 9, wherein in the relay mode, the first electronic device exchanges cellular communication data related to the first SIM card with the network side device, and locally processes the corresponding cellular communication service based on the cellular communication data.

12. The second electronic device according to claim 10, wherein the second electronic device is further configured to:
when the second electronic device is in an autonomous mode, if the second electronic device meets a first preset condition, switch from the autonomous mode to the relay mode to access the network side device; and/or
when the second electronic device is in the relay mode, if the second electronic device meets a second preset condition, switch from the relay mode to the autonomous mode to access the network side device, wherein
in the autonomous mode, the second electronic device establishes a connection to the network side device based on the first SIM card information, directly exchanges the cellular communication data related to the first SIM card with the network side device, and locally processes the corresponding cellular communication service based on the cellular communication data.

13. The second electronic device according to claim 12, wherein the first preset condition is as follows:
a cellular signal strength of the second electronic device is less than a strength threshold; and/or
a power level of the second electronic device is less than a power level threshold; and/or
the second electronic device is located in an abnormal cell; and/or
the second electronic device is located at an abnormal location; and/or
the second electronic device is connected to a vehicle-mounted Bluetooth device.

## Patentansprüche

1. Erste elektronische Vorrichtung, wobei die erste elektronische Vorrichtung zu Folgendem konfiguriert ist:
Senden einer ersten Benachrichtigungsnachricht per Rundruf, wenn eine zellulare Signalstärke der ersten elektronischen Vorrichtung größer als oder gleich einem Stärkenschwellenwert ist, wobei die erste Benachrichtigungsnachricht dazu verwendet wird, darüber zu benachrichtigen, dass die erste elektronische Vorrichtung eine Signalrelaisfunktion aufweist, so dass eine zweite elektronische Vorrichtung eine Verbindung zu der ersten elektronischen Vorrichtung auf der Grundlage der ersten Benachrichtigungsnachricht herstellt;
Herstellen einer Verbindung zu der zweiten elektronischen Vorrichtung auf der Grundlage der ersten Benachrichtigungsnachricht, wobei eine erste SIM-Karte in der zweiten elektronischen Vorrichtung installiert ist und die erste SIM-Karte erste SIM-Karten-Informationen speichert;
Erlangen der ersten SIM-Karten-Informationen; und
Herstellen einer Verbindung zu einer netzseitigen Vorrichtung auf der Grundlage der ersten SIM-Karten-Informationen, so dass die zweite elektronische Vorrichtung in einen Relaismodus eintritt, wobei
die erste elektronische Vorrichtung in dem Relaismodus die zweite elektronische Vorrichtung beim Durchführen eines zellularen Kommunikationsdienstes, der sich auf die erste SIM-Karte bezieht, unterstützt.

2. Erste elektronische Vorrichtung nach Anspruch 1, wobei die erste elektronische Vorrichtung in dem Relaismodus ferner dazu konfiguriert ist, zellulare Kommunikationsdaten, die sich auf die erste SIM-Karte beziehen, zwischen der netzseitigen Vorrichtung und der zweiten elektronischen Vorrichtung weiterzuleiten, und die zweite elektronische Vorrichtung den entsprechenden zellularen Kommunikationsdienst auf der Grundlage der zellularen Kommunikationsdaten verarbeitet.

3. Erste elektronische Vorrichtung nach Anspruch 1, wobei die erste elektronische Vorrichtung in dem Relaismodus ferner zu Folgendem konfiguriert ist:
Austauschen von zellularen Kommunikationsdaten, die sich auf die erste SIM-Karte beziehen, mit der netzseitigen Vorrichtung und lokales Verarbeiten des entsprechenden zellularen Kommunikationsdienstes auf der Grundlage der zellularen Kommunikationsdaten.

4. Erste elektronische Vorrichtung nach einem der Ansprüche 1 bis 3, wobei die erste elektronische Vorrichtung eine Verbindung zu der zweiten elektronischen Vorrichtung unter Verwendung einer Nahfeldkommunikationstechnologie, einer Fernfeldkommunikationstechnologie oder einer physischen Einheit herstellt.

5. Erste elektronische Vorrichtung nach einem der Ansprüche 1 bis 4, wobei die erste elektronische Vorrichtung ferner zu Folgendem konfiguriert ist:
Erlangen von Authentifizierungsdaten in den ersten SIM-Karten-Informationen in Echtzeit, wobei die Authentifizierungsdaten dazu verwendet werden, eine Authentifizierung durchzuführen, wenn die erste elektronische Vorrichtung eine Verbindung zu der Netzseite herstellt; und
Zwischenspeichern anderer Daten als der Authentifizierungsdaten in den ersten SIM-Karten-Informationen und Aktualisieren von entsprechenden Daten auf der Grundlage von Alterungsperioden von verschiedenen Daten, so dass die erste elektronische Vorrichtung die anderen Daten direkt lokal liest, wenn sie den zellularen Kommunikationsdienst verarbeitet.

6. Erste elektronische Vorrichtung nach einem der Ansprüche 1 bis 5, wobei die erste elektronische Vorrichtung ferner zu Folgendem konfiguriert ist:
Anzeigen eines dritten Eingabeaufforderungsfeldes, nachdem eine Verbindung zu der netzseitigen Vorrichtung auf der Grundlage der ersten SIM-Karten-Informationen hergestellt worden ist, wobei das dritte Eingabeaufforderungsfeld dazu verwendet wird, aufzufordern, dass die erste elektronische Vorrichtung einen Signalrelaisdienst für die zweite elektronische Vorrichtung bereitstellt.

7. Erste elektronische Vorrichtung nach einem der Ansprüche 1 bis 6, wobei die erste elektronische Vorrichtung ferner zu Folgendem konfiguriert ist:
Übertragen eines Hotspot-Signals unter Verwendung des zellularen Datenverkehrs der ersten SIM-Karte, wobei,
nachdem eine dritte elektronische Vorrichtung eine Verbindung zu dem Hotspot-Signal hergestellt hat, die dritte elektronische Vorrichtung den zellularen Datenverkehr der ersten SIM-Karte dazu verwendet, mit der ersten elektronischen Vorrichtung auf das Internet zuzugreifen.

8. Erste elektronische Vorrichtung nach einem der Ansprüche 1 bis 7, wobei ferner eine dritte SIM-Karte in der ersten elektronischen Vorrichtung installiert ist und die dritte SIM-Karte dritte SIM-Karten-Informationen speichert; und
die erste elektronische Vorrichtung ferner zu Folgendem konfiguriert ist:
Herstellen einer Verbindung zu der netzseitigen Vorrichtung auf der Grundlage der dritten SIM-Karten-Informationen und lokales Verarbeiten eines zellularen Kommunikationsdienstes, der sich auf die dritte SIM-Karte bezieht.

9. Zweite elektronische Vorrichtung, wobei eine erste SIM-Karte in der zweiten elektronischen Vorrichtung installiert ist, die erste SIM-Karte erste SIM-Karten-Informationen speichert und die zweite elektronische Vorrichtung zu Folgendem konfiguriert ist:
Empfangen einer ersten Benachrichtigungsnachricht von einer ersten elektronischen Vorrichtung, wenn eine zellulare Signalstärke der ersten elektronischen Vorrichtung größer als oder gleich einem Stärkenschwellenwert ist, wobei die erste Benachrichtigungsnachricht dazu verwendet wird, darüber zu benachrichtigen, dass die erste elektronische Vorrichtung eine Signalrelaisfunktion aufweist, so dass eine zweite elektronische Vorrichtung eine Verbindung zu der ersten elektronischen Vorrichtung auf der Grundlage der ersten Benachrichtigungsnachricht herstellt;
Herstellen einer Verbindung zu der ersten elektronischen Vorrichtung auf der Grundlage der ersten Benachrichtigungsnachricht; und
Senden der ersten SIM-Karten-Informationen an die erste elektronische Vorrichtung, wobei die ersten SIM-Karten-Informationen durch die erste elektronische Vorrichtung dazu verwendet werden, eine Verbindung zu einer netzseitigen Vorrichtung herzustellen, so dass die zweite elektronische Vorrichtung in einen Relaismodus eintritt, wobei
die erste elektronische Vorrichtung in dem Relaismodus die zweite elektronische Vorrichtung beim Durchführen eines zellularen Kommunikationsdienstes, der sich auf die erste SIM-Karte bezieht, unterstützt.

10. Zweite elektronische Vorrichtung nach Anspruch 9, wobei die erste elektronische Vorrichtung in dem Relaismodus zellulare Kommunikationsdaten, die sich auf die erste SIM-Karte beziehen, zwischen der netzseitigen Vorrichtung und der zweiten elektronischen Vorrichtung weiterleitet und die zweite elektronische Vorrichtung den entsprechenden zellularen Kommunikationsdienst auf der Grundlage der zellularen Kommunikationsdaten verarbeitet.

11. Zweite elektronische Vorrichtung nach Anspruch 9, wobei die erste elektronische Vorrichtung in dem Relaismodus zellulare Kommunikationsdaten, die sich auf die erste SIM-Karte beziehen, mit der netzseitigen Vorrichtung austauscht und den entsprechenden zellularen Kommunikationsdienst auf der Grundlage der zellularen Kommunikationsdaten lokal verarbeitet.

12. Zweite elektronische Vorrichtung nach Anspruch 10, wobei die zweite elektronische Vorrichtung ferner zu Folgendem konfiguriert ist:
wenn sich die zweite elektronische Vorrichtung in einem autonomen Modus befindet, wenn die zweite elektronische Vorrichtung eine erste voreingestellte Bedingung erfüllt, Umschalten von dem autonomen Modus in den Relaismodus, um auf die netzseitige Vorrichtung zuzugreifen; und/oder
wenn sich die zweite elektronische Vorrichtung in dem Relaismodus befindet, wenn die zweite elektronische Vorrichtung eine zweite voreingestellte Bedingung erfüllt, Umschalten von dem Relaismodus in den autonomen Modus, um auf die netzseitige Vorrichtung zuzugreifen, wobei
die zweite elektronische Vorrichtung in dem autonomen Modus eine Verbindung zu der netzseitigen Vorrichtung auf der Grundlage der ersten SIM-Karten-Informationen herstellt, die zellularen Kommunikationsdaten, die sich auf die erste SIM-Karte beziehen, direkt mit der netzseitigen Vorrichtung austauscht und den entsprechenden zellularen Kommunikationsdienst auf der Grundlage der zellularen Kommunikationsdaten lokal verarbeitet.

13. Zweite elektronische Vorrichtung nach Anspruch 12, wobei die erste voreingestellte Bedingung wie folgt lautet:
eine zellulare Signalstärke der zweiten elektronischen Vorrichtung ist kleiner als ein Stärkenschwellenwert; und/oder
ein Leistungspegel der zweiten elektronischen Vorrichtung ist kleiner als ein Leistungspegelschwellenwert; und/oder
die zweite elektronische Vorrichtung befindet sich in einer anormalen Zelle; und/oder
die zweite elektronische Vorrichtung befindet sich an einem anormalen Ort; und/oder
die zweite elektronische Vorrichtung ist mit einer im Fahrzeug montierten Bluetooth-Vorrichtung verbunden.

## Revendications

1. Premier dispositif électronique, dans lequel le premier dispositif électronique est configuré pour :
diffuser un premier message de notification lorsqu'une puissance de signal cellulaire du premier dispositif électronique est supérieure ou égale à un seuil de puissance, dans lequel le premier message de notification est utilisé pour notifier que le premier dispositif électronique dispose d'une fonction de relais de signal, de sorte qu'un deuxième dispositif électronique établit une connexion au premier dispositif électronique sur la base du premier message de notification ;
établir une connexion au deuxième dispositif électronique sur la base du premier message de notification, dans lequel une première carte SIM est installée sur le deuxième dispositif électronique, et la première carte SIM stocke des informations de la première carte SIM ;
obtenir les informations de la première carte SIM ; et
établir une connexion à un dispositif côté réseau sur la base des informations de la première carte SIM, de sorte que le deuxième dispositif électronique entre en mode relais, dans lequel en mode relais, le premier dispositif électronique assiste le deuxième dispositif électronique dans l'exécution d'un service de communication cellulaire lié à la première carte SIM.

2. Premier dispositif électronique selon la revendication 1, dans lequel, en mode relais, le premier dispositif électronique est également configuré pour transférer des données de communication cellulaire liées à la première carte SIM entre le dispositif côté réseau et le deuxième dispositif électronique, et le deuxième dispositif électronique traite le service de communication cellulaire correspondant sur la base des données de communication cellulaire.

3. Premier dispositif électronique selon la revendication 1, dans lequel, en mode relais, le premier dispositif électronique est également configuré pour :
échanger des données de communication cellulaire liées à la première carte SIM avec le dispositif côté réseau, et traiter localement le service de communication cellulaire correspondant sur la base des données de communication cellulaire.

4. Premier dispositif électronique selon l'une quelconque des revendications 1 à 3, dans lequel le premier dispositif électronique établit une connexion au deuxième dispositif électronique à l'aide d'une technologie de communication en champ proche, d'une technologie de communication en champ lointain, ou d'une entité physique.

5. Premier dispositif électronique selon l'une quelconque des revendications 1 à 4, dans lequel le premier dispositif électronique est également configuré pour :
obtenir des données d'authentification dans les informations de la première carte SIM en temps réel, dans lequel les données d'authentification sont utilisées pour effectuer une authentification lorsque le premier dispositif électronique établit une connexion côté réseau ; et
pré-mettre en cache d'autres données autres que les données d'authentification dans les informations de la première carte SIM, et mettre à jour des données correspondantes sur la base de périodes de vieillissement des différentes données, de sorte que le premier dispositif électronique lit directement les autres données localement lors du traitement du service de communication cellulaire.

6. Premier dispositif électronique selon l'une quelconque des revendications 1 à 5, dans lequel le premier dispositif électronique est également configuré pour :
afficher une troisième boîte de dialogue après avoir établi une connexion au dispositif côté réseau sur la base des informations de la première carte SIM, dans lequel la troisième boîte de dialogue est utilisée pour indiquer que le premier dispositif électronique fournit un service de relais de signal pour le deuxième dispositif électronique.

7. Premier dispositif électronique selon l'une quelconque des revendications 1 à 6, dans lequel le premier dispositif électronique est également configuré pour :
transmettre un signal de point d'accès à l'aide d'un trafic de données cellulaires de la première carte SIM, dans lequel
après qu'un troisième dispositif électronique établit une connexion au signal de point d'accès, le troisième dispositif électronique utilise le trafic de données cellulaires de la première carte SIM pour accéder à Internet à l'aide du premier dispositif électronique.

8. Premier dispositif électronique selon l'une quelconque des revendications 1 à 7, dans lequel une troisième carte SIM est également installée sur le premier dispositif électronique, et la troisième carte SIM stocke des informations de la troisième carte SIM ; et
le premier dispositif électronique est également configuré pour :
établir une connexion au dispositif côté réseau sur la base des informations de la troisième carte SIM, et traiter localement un service de communication cellulaire lié à la troisième carte SIM.

9. Deuxième dispositif électronique, dans lequel une première carte SIM est installée sur le deuxième dispositif électronique, la première carte SIM stocke des informations de la première carte SIM, et le deuxième dispositif électronique est configuré pour :
recevoir un premier message de notification provenant d'un premier dispositif électronique lorsqu'une puissance de signal cellulaire du premier dispositif électronique est supérieure ou égale à un seuil de puissance, dans lequel le premier message de notification est utilisé pour notifier que le premier dispositif électronique dispose d'une fonction de relais de signal, de sorte qu'un deuxième dispositif électronique établit une connexion au premier dispositif électronique sur la base du premier message de notification ;
établir une connexion au premier dispositif électronique sur la base du premier message de notification ; et
envoyer les informations de la première carte SIM au premier dispositif électronique, dans lequel les informations de la première carte SIM sont utilisées par le premier dispositif électronique pour établir une connexion à un dispositif côté réseau, de sorte que le deuxième dispositif électronique entre en mode relais, dans lequel
en mode relais, le premier dispositif électronique assiste le deuxième dispositif électronique dans l'exécution d'un service de communication cellulaire lié à la première carte SIM.

10. Deuxième dispositif électronique selon la revendication 9, dans lequel, en mode relais, le premier dispositif électronique transfère des données de communication cellulaire liées à la première carte SIM entre le dispositif côté réseau et le deuxième dispositif électronique, et le deuxième dispositif électronique traite le service de communication cellulaire correspondant sur la base des données de communication cellulaire.

11. Deuxième dispositif électronique selon la revendication 9, dans lequel, en mode relais, le premier dispositif électronique échange des données de communication cellulaire liées à la première carte SIM avec le dispositif côté réseau, et traite localement le service de communication cellulaire correspondant sur la base des données de communication cellulaire.

12. Deuxième dispositif électronique selon la revendication 10, dans lequel le deuxième dispositif est également configuré pour :
lorsque le deuxième dispositif électronique est en mode autonome, si le deuxième dispositif électronique remplit une première condition prédéfinie, passer du mode autonome au mode relais pour accéder au dispositif côté réseau ; et/ou
lorsque le deuxième dispositif électronique est en mode relais, si le deuxième dispositif électronique remplit une seconde condition prédéfinie, passer du mode relais au mode autonome pour accéder au dispositif côté réseau, dans lequel
en mode autonome, le deuxième dispositif électronique établit une connexion au dispositif côté réseau sur la base des informations de la première carte SIM, échange directement les données de communication cellulaire liées à la première carte SIM avec le dispositif côté réseau et traite localement le service de communication cellulaire correspondant sur la base des données de communication cellulaire.

13. Deuxième dispositif électronique selon la revendication 12, dans lequel la première condition prédéfinie est la suivante :
la puissance du signal cellulaire du deuxième dispositif électronique est inférieure à un seuil de puissance ; et/ou
un niveau de puissance du deuxième dispositif électronique est inférieur à un seuil de niveau de puissance ; et/ou
le deuxième dispositif électronique est situé dans une cellule anormale ; et/ou
le deuxième dispositif électronique est situé à un endroit anormal ; et/ou
le deuxième dispositif électronique est connecté à un dispositif Bluetooth monté sur le véhicule.
